# EUROPEAN PATENT SPECIFICATION

(11) **EP 4 244 281 B1**
(45) Date of publication and mention of the grant of the patent: **03.04.2024**
(21) Application number: 22711189.5
(22) Date of filing: 28.02.2022
(51) Int. Cl.: C08J 7/04, C08G 61/12, C08J 7/056, C08J 7/18, C08L 33/06, C09D 167/06, G03F 7/031, G03F 7/038

(54) **PHOTOINITIATOR RESINS WITH DIBENZOYLMETHANE SUBSTRUCTURE**
PHOTOINITIATORHARZE MIT DIBENZOYLMETHANUNTERSTRUKTUR
RÉSINES DE PHOTOINITIATEUR AYANT UNE SOUS-STRUCTURE DE DIBENZOYLMÉTHANE

(30) Priority: 26.02.2021 US 202163154089 P; 19.11.2021 US 202163281211 P
(43) Date of publication of application: 20.09.2023
(73) Proprietor: Sun Chemical B.V., 1382 LV Weesp (NL)
(72) Inventor: MAESING, Florian, 63791 Karlstein am Main (DE); DIEKER, Jürgen, 63791 Karlstein am Main (DE)
(74) Representative: Carpmaels & Ransford LLP
(86) International application number: PCT/EP2022/054975
(87) International publication number: WO 2022/180269

(56) References cited:
- EP-A2- 1 403 708
- WO-A1-2019/212879
- US-A1- 2013 296 485
- CHEN PENGHUI ET AL: "EVA film doped with [beta]-diketones macromolecular lanthanide complexes: Preparation, characterization and applica", EUROPEAN POLYMER JOURNAL, PERGAMON PRESS LTD OXFORD, GB, vol. 58, 16 July 2014 (2014-07-16), pages 191-200, XP029044861, ISSN: 0014-3057, DOI: 10.1016/J.EURPOLYMJ.2014.07.003
- Bunrit Anon: "Direct Catalytic Nucleophilic Substitution of Non-Derivatized Alcohols", Academic dissertation for the Degree of Doctor of Philosophy in Organic Chemistry at Stockholm University, 5 October 2017 (2017-10-05), pages 1-96, XP055930873, ISBN: 978-91-7-649917-7 Retrieved from the Internet: URL:https://www.diva-portal.org/smash/get/ diva2:1137254/FULLTEXT01.pdf

## Description

### CROSS REFERENCE TO RELATED APPLICATIONS

This application claims priority from US provisional application US63/154,089 and from US provisional application US63/281,211.

### FIELD OF THE INVENTION

The present invention is in the field of photoinitiator compositions for curing ethylenically unsaturated monomers. The invention also relates to Type II photoinitiators that are low migration and thus suitable for use in sensitive applications, such as food packaging. The invention also relates to polymerizable compositions made therefrom, including when the compositions of the invention are used as photoinitiators and also including self-curing compositions.

### BACKGROUND OF THE INVENTION

Photocurable compositions containing a resin having one or multiple (meth)acryloyl groups that can be cured by actinic light (UV, UV-C, EB, UV-VIS) are widely used in fields of coatings, printing inks, molded articles, and adhesives, because of advantageous features, including fast cure speed, energy saving, low volatile organic compounds (VOCs), and a high quality of the product obtained. For this curing system, in general, one or more photoinitiators (PIs) are used together with the acryloyl group-containing resin. The photoinitiator(s) generates free-radicals when irradiated, which initiate the free-radical polymerization of the (meth)acryloyl groups, leading to hardening of the resin.

To produce free radicals, a photoinitiator must first absorb energy from the light source. Most commercial photoinitiators absorb energy in the UV region between 200nm and 400nm and can absorb sufficient energy to form an excited species. One chromophore that does this efficiently is the aryl-ketone group (see "Industrial Photoinitiators - A Technical Guide, CRC Press, 2010, page 18ff). In the context of this application, a chromophore refers to a moiety that can absorb in the above-mentioned UV region.

Photoinitiators suitable for use in free radical curing in printing inks and coatings comprise two main groups:
i. Norrish Type I photoinitiators decompose upon irradiation via homolytic bond cleavage to afford radicals that directly initiate the radical chain reaction of vinyl-containing monomers, such as acrylates and methacrylates. Typical representatives of Type I photoinitiators include acetophenone derivatives, such as α-hydroxylacetophenones and α-aminoacetophenones. The chemical structure of these compounds comprises a tetrasubstituted carbon atom (i.e. one that does not comprise hydrogen substituents) adjacent to an Ar-C=O group. Efficient photochemical cleavage between the C=O-group and the α-carbon atom leads to the formation of radicals, which add to the double bond of the polymerizable component (monomer or polymer), initiating polymerization. Examples of Type I initiators are disclosed in US7407707B2, US7232540 and US7291658B2. The compounds described form by the Michael addition of acrylate monomers and oligomers with aliphatic beta-keto esters, beta-diketones (e.g. 2,4-pentanedione) and other beta-di-carbonyl compounds that can participate in Michael addition reactions. The disclosed products, which lack a benzoyl moiety on the Michael addition donor component and comprise two substituents on the moiety derived from the methylene carbon atom of Michael donor, undergo a photo-cleavage (i.e. splitting) type of mechanism via acetyl-radicals.

The above-mentioned radiation-hardening systems comprising Type I photoinitiators suffer from several problems. For example, unreacted photoinitiators as well as their cleavage products can remain in the cured coating, where they can migrate to the surface and contaminate adjacent materials. This is particularly problematic for the coatings for packaging of foodstuffs, as the unreacted photoinitiators and their cleavage products can migrate and contaminate the foodstuffs. Furthermore, photoinitiator residues, for example aromatic residues such as benzophenones and volatile cleavage products such as benzaldehydes, are formed during radical formation/initiation due to photo-induced homolytic cleavage of the photoinitiator. These cleavage products can have an odor that adversely affects the quality of the cured product and is thus undesirable for packaging of foodstuffs.

ii. Norrish Type II photoinitiators are essentially photosensitizers, for example comprising a benzophenone or thioxanthone moiety, which absorb UV light to excite an electron from the ground state to an excited triplet state. The triplet state by itself is not reactive enough to initiate radical polymerization of monomers, but instead requires the presence of a synergist, e.g. an amine such as a tertiary amine. In the presence of a synergist, electron transfer occurs from the synergist (e.g. the lone pair on the nitrogen) to the excited triplet state, followed by proton abstraction to form a radical species e.g. an α-aminoalkyl radical, which is reactive enough to initiate radical, chain-growth, polymerization of monomers. If no synergist is present, the excited triplet state decays back into the ground state, yielding the initial molecule and polymerization is not initiated.

An advantage of type II photoinitiators over type I photoinitiators is the absence of any photo-cleavage (i.e. splitting) products. Therefore, type II photoinitiators are preferred for use in sensitive packaging applications, where the absence of photo-cleavage products can reduce the amount of migratable components. However, even type II type photoinitiators can result in the presence migratable species, particularly those of low molecular weight. Furthermore, a number of Type II photoinitiators and photosensitizers with low molecular weight, such as benzophenone or its derivatives such as 4-phenyl benzophenone, as well as synergists such as ethyl-4-(dimethylamino)benzoate and 2-ethylhexyl-4-dimethyl-amino-benzoate, are suspected to cause serious health issues. Indeed, some of these species were re-classified as potentially carcinogenic, which combined with the fact that these small molecules are also highly mobile and show a high tendency to migrate, means these compounds are not suitable for use in packaging and printing applications, especially for sensitive packaging (e.g. foodstuffs).

One solution proposed to overcome the problem of migratable species is to make the photoinitiator(s) oligomeric or polymeric which, due to their high molecular weight, will reduce migration of the photolysis products (and additional species that would otherwise be of low molecular weight) and thus also reduce odor. Another solution proposed is to provide a photocurable acryloyl group-containing resin system. However, in order to make a small molecule PIs into polymeric species, additional synthetic steps are required, including purification steps, which add to the cost of production of such photoinitiators, making them unsuitable for certain applications. Furthermore, some of the chemical modifications required to make a PI polymeric or reactive can adversely affect the lithographic and/or adhesion properties of inks and coatings into which they are incorporated, as well as the absorption spectrum of these photoinitiators.

US7446230B2 relates to dibenzoylmethane (DBM)-based compounds used as photoactivatable sunscreens and cosmetic compositions containing same. WO2020249760 relates to the preparation of heteroaromatic inhibitors of astacin proteinases, involving the Michael addition reaction of DBM. CN103806120 relates to the preparation of electrospun nanofibers with fluorescent properties derived from an Erbium complex comprising an adduct of DBM with hexanediol-diacrylate (HDDA).

The synthesis and evaluation of a mono-adduct of the moiety derived from the methylene carbon of avobenzone (a DBM derivative), by reaction with methyl-iodide or 1-bromodecane with substitution of the acidic hydrogen, is described by Miranda et al (Photochemistry and Photobiology, 2009, 85, 178-184) and by F. Wetz and I. Rico-Lattes et al in J. Cosmet. Sci. 56, 2005, 135-148, respectively. Both articles relate to the UV-absorbance stability of the compounds. The use of said adducts as photoinitiators of ethylenically unsaturated compounds is not disclosed nor is the combination of said adducts with synergists, such as amines.

Acetylacetones (i.e. 1,3-diketones without phenyl groups) and their acrylate-adducts have been used as PIs. However, such compounds cannot be used in inks, because they do not comprise a chromophore-. Thus, such compounds undergo a different initiation mechanism (splitting Norrish-type I PI) triggered by UV-C light than the mechanism of the compounds of the present invention (Norrish type II PI). Moreover, due to their low (molar) extinction coefficients, the acetylacetone-based compounds work in clear coatings only and not in inks. This is because, when pigments and other species that absorb light in the UV-Vis region of the spectrum are present in the compositions, the amount of light incident on the initiator is reduced, resulting in a loss of activity for aliphatic species with low extinction coefficients, such as acetylacetone-based compounds. Furthermore, these compounds are strongly inhibited by oxygen and therefore do not provide complete surface cure under the standard UV conditions (i.e. UV dose = 100-150 mJ/cm²) typically available on a high-speed printing press. Furthermore, the acetylacetone Michael addition adducts with acrylates are often di-substituted, which results from acrylate substitution of both acidic hydrogens on the methylene carbon between the 1,3-diketone-functionality.

The Michael reaction of dipentaerythritol hexaacrylate (DPHA) with DBM is described in US9340644B2. However, there is no disclosure of an ink or coating formulation of claim 1, i.e. also comprising a synergist. Instead, US9340644B2 is primarily directed towards the Michael reaction products of **aliphatic** β-dicarbonyl compounds (donor) with the multifunctional acrylate DPHA (acceptor). In contrast to DBM, where only one of the acidic α-hydrogens reacts the acrylate acceptor, both acidic α-hydrogens in aliphatic β-dicarbonyl compounds react (meth)acrylate acceptors, such that the β-dicarbonyl compounds become disubstituted and can act as a crosslinking agent for multifunctional acrylates such as DPHA. Furthermore, as discussed above, the reaction products formed from the disubstitution of aliphatic β-dicarbonyl compounds are Type I (splitting) photoinitiators. US9340644B2 is thus not concerned with the use of Michael addition products as Type II photoinitiators and therefore does not disclose formulations comprising a (amine) synergist, which is required to initiate polymerizations with these Type of photoinitiators. Furthermore, the use of lower UV-doses is also not disclosed. EP1403708A2 is directed towards compounds generating a free-radical polymerization initiator upon exposure to actinic radiation.

There is thus a constant demand for new compounds suitable for initiating the polymerization of monomers or oligomers. Especially preferred are structures with low toxicity. Even more preferred are structures providing a photocurable acryloyl group-containing resin system being able to covalently link to the polymeric backbone of a curable composition, which further reduces migration of the photoinitiator. Furthermore, there is a need for new structures that do not generate photo-cleavable compounds when treated with actinic radiation. The photoinitiators should ideally be suitable for electron curable (EC) coatings, UV inks and adhesives and for use in UV-LED applications.

It is therefore an object of the present invention to provide a substitute for benzophenone-based photoinitiators and photosensitizers made from compounds of low toxicity, which provides a photocurable resin that has a reduced amount of migratable species upon curing, relative to compositions comprising benzophenone, such as oligomeric benzophenone. The compositions of the present invention may be suitable for UV-LED devices, which emit at wavelength at 365 to 395nm.

It is a further object of the invention to provide a photoinitiator that exhibits excellent photosensitivity and that is usable for radiation in initiated curable coatings and adhesives, without comprising a benzophenone moiety in the structure. The composition of the invention can be used in applications such as inks, coatings or adhesives curable by actinic irradiation for use in low-migration applications.

### SUMMARY OF THE INVENTION

The invention is defined by the appended claims. The present invention provides a photocurable chemical composition comprising a synergist compound, such as an aromatic and/or aliphatic amine compound, in combination with the addition product of a Michael donors with a Michael acceptor and optionally a resin comprising (meth)acrylate functionality.

The present invention provides a kit comprising a) a reaction product of i) one or more aromatic Michael addition donor materials comprising two or more active methylene hydrogens and at least two optionally substituted benzoyl-moieties; wherein the Michael addition donor material is dibenzoylmethane, a substituted dibenzoylmethane derivative, or a combination thereof; with ii) one or more Michael addition acceptor materials; wherein the Michael addition acceptor material is selected from the group consisting of mono, di-, tri- or multi-functional (meth)acrylates,
polyester (meth)acrylates, and halogenated organic acids or esters, wherein the reaction product is capable of initiating a free radical polymerization reaction when used in combination with a synergist; and b) a synergist selected from the group consisting of amines, ethers, esters, thiols, and combinations thereof; wherein the reaction product a) and the synergist b) are incorporated into a single composition; or wherein the reaction product a) and the synergist b) are in separate compositions; wherein each Michael addition donor material-derived moiety present in the reaction product is covalently attached to a single Michael addition acceptor-derived moiety.

The present invention further provides a kit comprising a) a compound of Formula 1 and b) a synergist selected from the group consisting of amines, ethers, esters, thiols, and combinations thereof, wherein the compound of Formula 1 a) and the synergist b) are incorporated into a single composition; or wherein the compound of Formula 1 a) and the synergist b) are in separate compositions. The compound of Formula 1 comprises keto and enol tautomeric forms of: 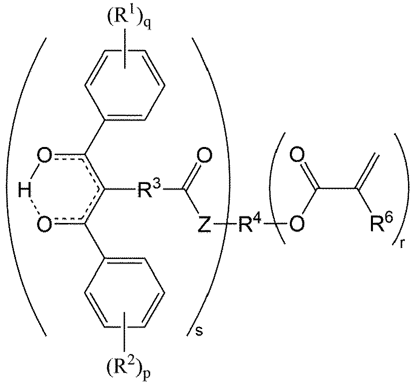 R¹ and R² are each independently selected from the group consisting of halogen, dialkylamino, diarylamino, an optionally substituted straight or branched C₁-C₁₂ alkyl, C₃-C₆-cycloalkyl, C₁-C₁₂-alkoxy group, and C₅ to C₁₀ aryl. p and q are independently an integer between 0 and 5. R³ is selected from the group consisting of straight or branched C₁-C₁₂ alkyl, C₁-C₁₂ alkoxy. Z is either O resulting in an ester functionality or NH resulting in amide functionality.

R⁴ is selected from the group consisting of
a) an optionally substituted straight or branched alkyl group containing from 1 to 200 carbon atoms, wherein optionally at least one CH₂ unit is replaced by a -O- resulting in at least one ether bond; b) a linear or branched alkenyl group containing from 1 to 20 carbon atoms wherein optionally a CH₂ unit is replaced by a -O- resulting in at least one ether bond, such as a vinyl-ether group; c) a C₃-C₁₂-cycloalkyl, wherein optionally a CH₂ unit is replaced by a -O- resulting in a heterocycle; d) an optionally substituted aryl group containing from 1 to 12 carbon atoms, wherein optionally a CH-unit is replaced by O; e) a C₁-C₁₂-alkoxy group; f) a hydroxyl group; g) a primary, secondary or tertiary amino group; h) an amido group; i) a carbonyl group of formula -CO-Y where Y represents a hydroxyl group, an -OR⁵ group or an SR⁵ group, where R⁵ represents a _{C1} to C₄ alkyl group; j) H. r relates to the number of terminal (meth)acrylate groups present and is an integer between 0 and 10. R⁶ is either H or methyl, s relates to the number of dibenzoylmethane-derived moieties present and is an integer between 1 and 10.

The invention also provides a radiation-curable ink, coating, varnish, or adhesive composition comprising the reaction product a) and a synergist. The invention also provides a radiation-curable ink, coating, varnish, or adhesive composition comprising the compound of Formula 1 a) and a synergist.

Other features of the invention are defined in more detail below.

### DETAILED DESCRIPTION

In the following description, the terms ethoxylated refers to chain-extended compounds through the use of ethyleneoxide, propoxylated refers to chain-extended compounds through the use of propylene oxide, and alkoxylated refers to chain-extended compounds using either or both ethyleneoxide and propylene oxide.

(Meth)acrylate refers to both acrylates and methacrylates. (Meth)acrylamide refers to both acrylamides and methacrylamides.

Unless otherwise stated, wt% refers to the mass of a particular component relative to the total mass of all components in the composition.

Unless otherwise stated, any range defined as "between X and Y", includes the end points X and Y in the range.

The term "substituted" means that the specified group or moiety bears one or more substituents. The term "unsubstituted" means that the specified group bears no substituents. The term "optionally substituted" means that the specified group is unsubstituted or substituted by one or more substituents. Where the term "substituted" is used to describe a structural system, the substitution is meant to occur at any valency-allowed position on the system. In cases where a specified moiety or group is not expressly noted as being optionally substituted or substituted with any specified substituent, it is understood that such a moiety or group is intended to be unsubstituted.

The term "alkyl" refers to a straight- or branched-chain alkyl group having from 1 to 12 carbon atoms in the chain. Examples of alkyl groups include methyl (Me, which also may be structurally depicted by the symbol, "/"), ethyl (Et), n-propyl, isopropyl, butyl, isobutyl, sec-butyl, tert-butyl (tBu), pentyl, isopentyl, tert-pentyl, hexyl, isohexyl, and groups that in light of the ordinary skill in the art and the teachings provided herein would be considered equivalent to any one of the foregoing examples.

The invention relates to a new class of photoinitiator and self-curable resins capable of initiating free-radical polymerizations. The disclosed chemical compounds, which can either be used as photoinitiators or self-curing resins, show absorption at wavelengths between 250 and 475nm and are suitable for a number of applications where actinic radiation, including mercury-UV, UV-LED, UV-VIS and VIS, is used to cure ethylenic unsaturated compounds. The invention provides a photocurable composition comprising one or more of the reaction products for use in the invention together with a synergist. The composition of the invention can thus be incorporated into a curable composition comprising monomers such as (meth)acrylates.

The inventive resins are suited for use in low migration applications. The reaction product for use in the invention may comprise at least one (meth)acrylate functionality that can anchor the PI compound into the polymeric backbone of cured (meth)acrylate-containing composition. The reaction product for use in the invention is easily accessible in high yield and can be made in one step from materials with known, low toxicity, as listed on various chemical inventories. For example, avobenzone is listed on the Swiss Ink Ordinance, which sets out the provisions relating to printing inks applied on the non-food contact surface of food contact materials, and therefore does not require toxicity testing before being included in inks.

The present application relates to a PI system comprising a reaction product formed from the Michael addition of a Michael addition donor material, such as dibenzoylmethane or its derivatives, with a Michael addition acceptor material, such as a (meth)acrylate containing moity. The photoinitiator system further comprises a synergist selected from the group consisting of amines, ethers, esters, thiols, and combinations thereof.

### Reaction Product for use in the Invention

The reaction product for use in the present invention is made from:
(a) at least one aromatic Michael addition donor material comprising two or more active methylene hydrogens and at least two optionally substituted benzoyl-moieties; wherein the Michael addition donor material is dibenzoylmethane, a substituted dibenzoylmethane derivative, or a combination thereof. As used herein, an "active methylene hydrogen" means a methylene hydrogens that can in principle form a carbanion on reaction with a base (i.e. an acidic hydrogen). A non-limiting example of a suitable group having active methylene hydrogens is a dibenzoylmethane (DBM) group
(b) at least one Michael addition acceptor material, wherein the Michael addition acceptor material is selected from the group consisting of mono, di-, tri- or multi-functional (meth)acrylates, polyester (meth)acrylates, and halogenated organic acids or esters,
   to provide a reaction product capable of initiating a free radical polymerization in combination with a synergist. Each Michael addition donor material-derived moiety present in the reaction product is covalently attached to a single Michael addition acceptor-derived moiety

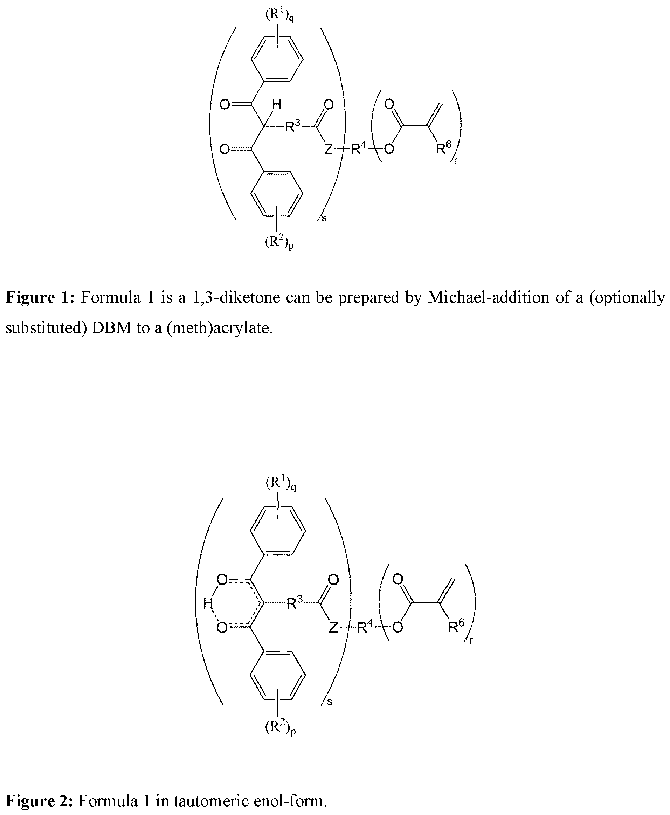

The reaction product for use in the present invention may comprise 1,3-diketones of formula 1 (see, Figure 1):
**Figure 1****:** Formula 1 is a 1,3-diketone can be prepared by Michael-addition of a (optionally substituted) DBM to a (meth)acrylate.

The compounds of Formula 1 can adopt a tautomeric enol-form (see, Figure 2).

**Figure 2****:** Formula 1 in tautomeric enol-form;
wherein R¹ and R² are each independently selected from the group consisting of halogen, dialkylamino, diarylamino, an optionally substituted straight or branched C₁-C₁₂ alkyl, C₃-C₆-cycloalkyl, C₁-C₁₂-alkoxy group, and C₅ to C₁₀ aryl;
p and q are independently an integer between 0 and 5;
R³ is selected from the group consisting of C₁-C₁₂ alkyl, C₁-C₁₂ alkoxy;
Z is either O resulting in an ester functionality or NH resulting in amide functionality; and R⁴ is selected from the group consisting of:
   a) an optionally substituted straight or branched alkyl group containing from 1 to 200 carbon atoms, wherein optionally at least one CH₂ unit is replaced by a -O- resulting in at least one ether bond;
   b) a linear or branched alkenyl group containing from 1 to 20 carbon atoms wherein optionally a CH₂ unit is replaced by a -O- resulting in at least one ether bond, such as a vinyl-ether group;
   c) a C₃-C₁₂-cycloalkyl, wherein optionally a CH₂ unit is replaced by a -O- resulting in a heterocycle;
   d) an optionally substituted aryl group containing from 1 to 12 carbon atoms, wherein optionally a CH-unit is replaced by O;
   e) a C₁-C₁₂-alkoxy group;
   f) a hydroxyl group;
   g) a primary, secondary or tertiary amino group;
   h) an amido group;
   i) a carbonyl group of formula -CO-Y where Y represents a hydroxyl group, an -OR⁵ group or an SR⁵ group, where R⁵ represents a C₁ to C₄ alkyl group;
   j) H
      wherein r relates to the number of terminal (meth)acrylate groups present and is an integer between 0 and 10;
      wherein R⁶ is either H or methyl; and
      wherein s relates to the number of dibenzoylmethane-derived moieties present on the reaction product and is an integer between 1 and 10.
R⁴ may be selected from the group consisting of: a) an optionally substituted straight or branched alkyl group containing from 1 to 200 carbon atoms, wherein optionally at least one CH₂ unit is replaced by a -O- resulting in at least one ether bond; b) a linear or branched alkenyl group containing from 1 to 20 carbon atoms wherein optionally a CH₂ unit is replaced by a -O- resulting in at least one ether bond, such as a vinyl-ether group; c) a C₃-C₁₂-cycloalkyl, wherein optionally a CH₂ unit is replaced by a -O- resulting in a heterocycle; d) an optionally substituted aryl group containing from 1 to 12 carbon atoms, wherein optionally a CH-unit is replaced by O; e) a C₁-C₁₂-alkoxy group; and f) H.
R⁴ may be an optionally substituted straight or branched alkyl group containing from 1 to 200 carbon atoms, such as 2 to 150 carbon atoms, 3 to 120 carbon atoms, 5 to 100 carbon atoms, 10 to 100 carbon atoms, 20 to 80 carbon atoms, or 20 to 50 carbon atoms. Optionally at least one CH₂ unit, such as at least two CH₂ units, at least three CH₂ units, at least five CH₂ units, at least 10 CH₂ units, or least 20 CH₂ units, in the straight or branched alkyl chain is replaced by a -O- resulting in a polyether chain. For example, R⁴ may be a straight or branched alkyl group containing 2 to 50 carbons wherein at least two CH₂ units have been replaced by a -O- resulting in a polyether chain. R⁴ may be optionally substituted straight or branched polyether chain containing from 1 to 200 carbon atoms, such as 2 to 150 carbon atoms, 3 to 120 carbon atoms, 5 to 100 carbon atoms, 10 to 100 carbon atoms, 20 to 80 carbon atoms, or 20 to 50 carbon atoms. For example, R⁴ may be a polyethylene glycol chain, or a straight or branched polypropylene glycol chain, or a straight or branched polybutylene glycol chain, such as a polytetramethylene glycol chain, having at least two repeat units, such as at least three repeat units, at least four repeat units, at least five repeat units, at least 10 repeat units, or at least 20 repeat units. R⁴ may be H (i.e. r = 0).

The optional substituents of R⁴ includes with groups independently selected from the list consisting of -C1-C10 alkyl, -C2-C10 alkenyl, halo, -C1-4alkyl, -CDs, -D, -C₁₋₄alkoxy, - CO₂H, -CH₂OH, -CF₃, -CN, -OH, -NO₂, and phenyl. The optional substituents of R⁴ may be a C1-C10 alkyl, such as a -C1-4alkyl, such as methyl or ethyl.

The reaction product for use in the present invention may comprise at least one covalently bound, polymerizable ethylenically unsaturated group selected from a (meth)acrylate or a (meth)acrylamide group. For example, the reaction product for use in the present invention may comprise at least one (meth)acrylate group. Reaction products comprising such groups are self-curable and therefore can form self-curing compositions, without the requirement for additional monomers. In other words, when r ≠ 0, the reaction product of formula 1 is self-curing and can be incorporated into self-curing compositions.

### Exemplary Reaction Products for Use in the Invention

Exemplary reaction products for use in the invention according to formula 1 are depicted below:

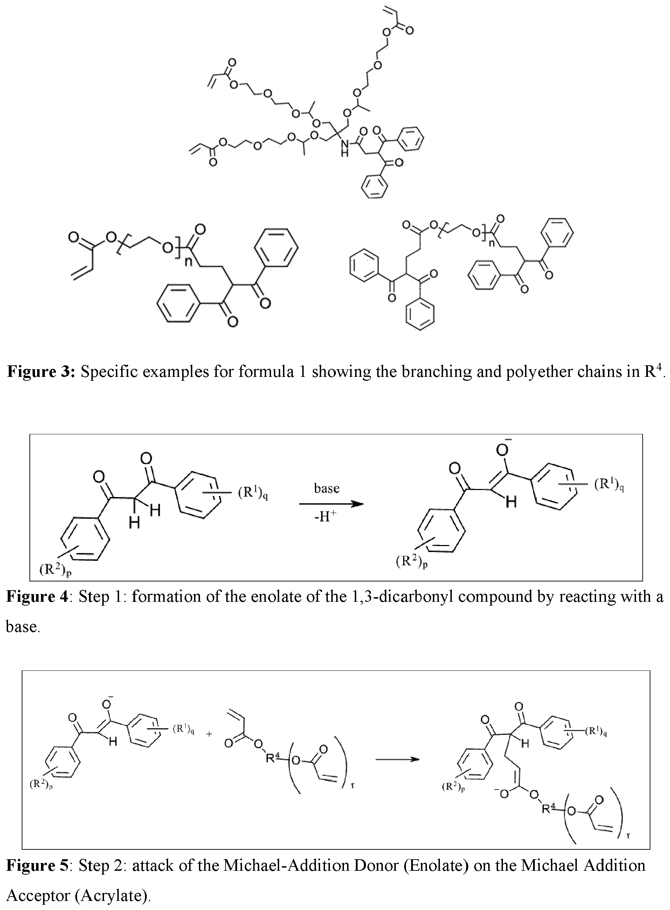

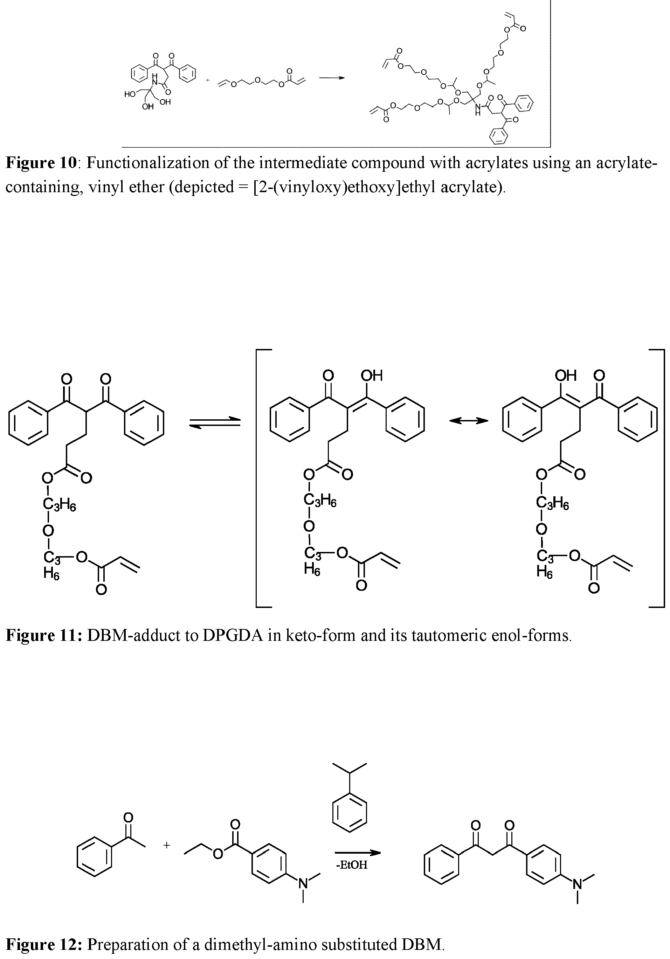

**Figure 3****:** Specific examples for formula 1 showing the branching and polyether chains in R⁴. Top: Compound as obtained from the synthesis route outlined in Figure 10. Bottom left: Mono-adduct of dibenzoylmethane on a PEG-diacrylate. Bottom right: di-adduct of dibenzoylmethane on PEG-diacrylate. The number of DBM compounds that react with the multifunctional acrylate is controllable by varying the ratio of the two compounds (see below).

### Exemplary Synthetic Procedure for the Reaction Product for use in the Invention

An exemplary reaction scheme for the synthesis of a reaction product for use in the present invention is outlined below. Though this synthesis is shown in three steps, it should be noted that the synthesis is a one-pot reaction, as isolation or purification of the intermediates formed in steps 1 or 2 is not necessary. Therefore, the synthetic process has a high industrial applicability.

**Figure 4****:** Step 1: formation of the enolate of the 1,3-dicarbonyl compound by reacting with a base.

**Figure 5****:** Step 2: attack of the Michael-Addition Donor (Enolate) on the Michael Addition Acceptor (Acrylate).

**Figure 6****:** Step 3: Re-protonation and formation of the final product (optionally this can be isolated, but in most cases, it will be used as a resin in the acrylate monomer).

### Ratio of Michael addition donor moieties to Michael addition acceptor groups

Use of Michael addition acceptor materials comprising more than one Michael addition acceptor group (for example, di, tri, and multifunctional (meth)acrylate species can result in reaction products comprising more than one dibenzoylmethane-derived moiety present on the reaction product (i.e. Formula 1: s ≥ 2). Furthermore, using di, tri, and multifunctional (meth)acrylate species as the Michael acceptor material can also result in the presence of terminal meth(acrylate) groups in the reaction product (i.e. r ≥ 1).

When the Michael addition acceptor material is a (meth)acrylate, the person skilled in the art will appreciate that the number of dibenzoylmethane-derived moieties present on a compound can be controlled as desired, by modifying the stoichiometry of the Michael addition donor material to the number of (meth)acrylate groups present on the Michael addition acceptor material. For example, the molar ratio of Michael donor material to Michael acceptor material in the reaction product may be from 1:1 to 6:1, such as from 1:1 to 4:1, from 1:1 to 3:1, from 1:1 to 2:1, from 2:1 to 6:1, from 2:1 to 4:1, or from 2:1 to 3:1. In other words, the reaction product for use in the invention may comprise a moiety derived from the Michael additional acceptor material which is at least monosubstituted with a moiety derived from the Michael addition donor material, such as at least di-substituted, at least tri- substituted, or at least tetra substituted with a moiety derived from the Michael addition donor material.

Alternatively, as discussed herein, additional (meth)acrylate groups can be added to the Michael addition reaction product in a subsequent step (See, the *Halogen-Containing Organic Compound* section). In this scenario, the number of dibenzoyl-derived groups in the reaction product is still dependent on the stoichiometry of the Michael addition donor material to the number of Michael acceptor groups (e.g. halogenated organic acid or ester groups). However, the number of (meth)acrylate groups in the final product can be increased in a post-Michael addition modification step.

While the number of Michael acceptor groups present in each Michael addition acceptor material is not limited in theory, it was found that increasing the number of residual (meth)acrylate groups in the rection product for use in the invention could adversely affect reactivity. Alkoxylation of the moiety linking the Michael donor material to the Michael acceptor material (i.e. R⁴) was found to improve the curing properties of inks or coatings comprising the reaction product for use with the invention.

For reaction products comprising multiple (meth)acrylate groups it is preferred that the linkage between the (meth)acrylate group groups comprises a polyether comprising at least two repeat units. In other words, when r ≥ 3, such as when r ≥ 4, r ≥ 5, or r ≥ 6, or when (r + s) ≥ 3, (r + s) ≥ 4, (r + s) ≥ 5, (r + s) ≥ 6, it is preferred that R⁴ is an optionally substituted straight or branched alkyl group containing from 1 to 200 carbon atoms, such as 2 to 150 carbon atoms, 3 to 120 carbon atoms, 5 to 100 carbon atoms, 10 to 100 carbon atoms, 20 to 80 carbon atoms, or 20 to 50 carbon atoms, wherein at least two CH₂ units, such as at least three units, at least five units, at least 10 units, or least 20 units, in the straight or branched alkyl chain are replaced by a -O- resulting in a polyether chain.

For example, when (r + s) ≥ 4 or when r ≥ 4, R⁴ may be an optionally substituted straight or branched polyether chain containing from 1 to 200 carbon atoms, such as 2 to 150 carbon atoms, 3 to 120 carbon atoms, 5 to 100 carbon atoms, 10 to 100 carbon atoms, 20 to 80 carbon atoms, or 20 to 50 carbon atoms.

For example, when (r + s) ≥ 4 or when r ≥ 4, R⁴ may be a straight or branched polyethylene glycol chain, a straight or branched polypropylene glycol chain, or a straight or branched polybutylene glycol chain, such as a polytetramethylene glycol chain, having at least two repeat units, such as at least three repeat units, at least four repeat units, at least five repeat units, at least 10 repeat units, or at least 20 repeat units.

The reaction product for use in the invention may be a compound of Formula 1 wherein preferably (r + s) ≤ 5, such as wherein (r + s) ≤ 4, or wherein (r + s) ≤ 3. The reaction product for use in the invention may be a compound of Formula 1 wherein preferably r ≤ 4, such as wherein r ≤ 3, or wherein r ≤ 2.

### Keto/Enol Tautomerization

While not intending to be bound by any theory, it is believed that the reaction product for use in the present invention shows beneficial UV-absorption characteristics due to its ability to be present in both keto and enol-tautomeric forms.

Taking dibenzoylmethane for example, when in its enol-form, both aromatic rings are connected by a cross conjugated double-bond, forming a π-system that includes both aromatic rings. This conjugation shifts the absorption spectrum to higher wavelengths than observed for species such as benzophenone. Moreover, this shift in the absorption spectrum is not observed for analogous reaction products formed from Michael addition donor materials that undergo di-substitution of both acidic methylene hydrogens with Michael acceptors, as di-substituted reaction products cannot form the enol tautomer. Michael addition donor materials that undergo disubstitution of both methylene hydrogens include acetylacetones (i.e. 1,3-diketones not comprising phenyl groups).

In the present invention, the Michael donor and Michael acceptor compounds are selected such that di-substitution of both acidic methylene hydrogens of the Michael addition donor material does not occur and instead only mono-substituted reaction products result (e.g. dibenzoylmethane-based reaction products; Ph-C(=O)CHRC(=O)Ph; wherein R = substituent derived from Michael acceptor). In other words, when in the keto form, the reaction product for use in the invention comprises one hydrogen substituent on the moiety derived from the methylene group of the Michael addition donor material. Thus, each Michael addition donor material-derived moiety present in the reaction product is covalently attached to a single Michael addition acceptor-derived moiety.

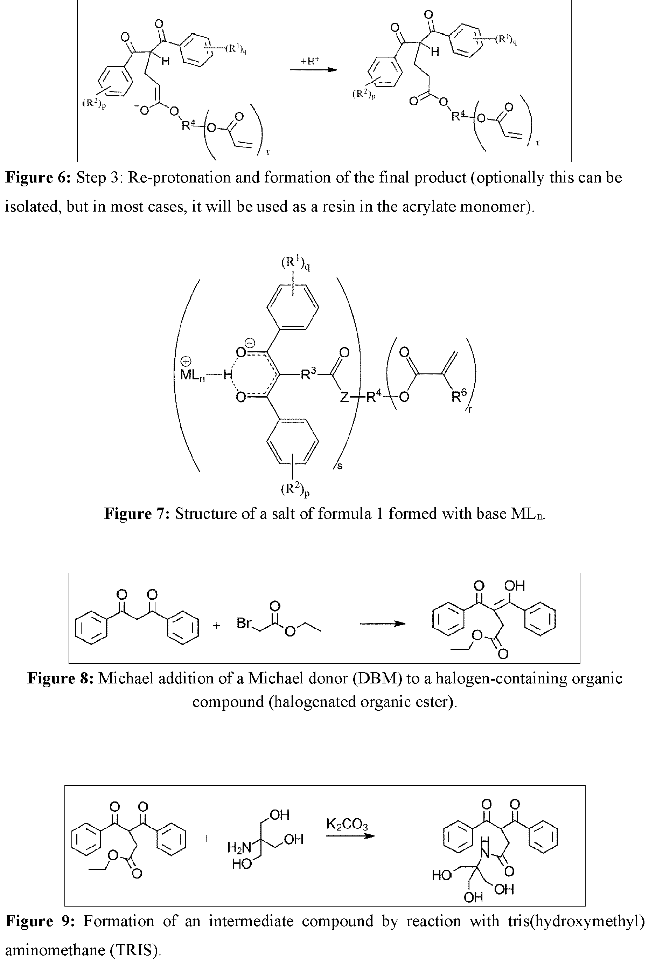

The reaction product may be a salt, which can influence the keto-enol tautomerism of the reaction product and by this effect the efficiency of the photoinitiation (see "The Composition, Structure and Hydrogen Bonding of the beta-diketones", John Emsley, Structure and Bonding, 57, 1984, especially page 156). In particular, as depicted in Figure 7, the salt of formula 1 favors the enol tautomer and thus is a better photoinitiator, for the reasons discussed.

**Figure 7****:** Structure of a salt of formula 1 formed with base MLₙ. It is preferred that M is nitrogen or phosphorus; L is an alkyl or alkoxy group (for example methyl, ethyl, methoxy, ethoxy, and the like); and n is the number of the substituents, which is usually 3 for nitrogen and 3 or 5 for phosphorus.

The compounds described in J. Photochem. Photobiol. A: Chem., 73 (1993), 197-204 (dibromo) and J. Photochem. Photobiol. A: Chem, 78 (1994), 79-84 (dihydroxy) "New cleavage photoinitiators for radical polymerization: synthesis and photochemical study of dibromo (dihydroxy) derivatives of dibenzoylmethane" are unsuitable for use with the present invention. This is because these species are disubstituted, such that no acidic methylene hydrogens remain in the rection products, which cannot therefore form the enol-tautomeric form.

### Photoinitiation Mechanism

The inventors have surprisingly found that a reaction product prepared from (a) at least one aromatic Michael addition donor material comprising two active methylene hydrogens (i.e., dibenzoylmethane or a dibenzoylmethane derivative with up to 5 similar or different substituents on either or each of the two phenyl-rings); and (b) one or more Michael addition acceptor material(s) selected from a mono-, di-, tri- or multi-functional (meth)acrylates, polyester (meth)acrylates, and halogenated organic acids or esters, which are capable of reacting with the Michael addition donor used in (a), results in a reaction product showing excellent photoactivity in combination with a synergist, such as an aliphatic amine, when exposed to actinic radiation. Especially good photoactivity is achieved when using UV radiation capable of initiating polymerization reactions. The composition of the invention, comprising the reaction product for use in the invention and a synergist, is thus well suited for use as a polymerization initiator in photopolymerization systems, for example of radical-curable, ethylenically unsaturated compounds.

The improved photoactivity of the composition of present invention results in improved curing of polymerizable compositions into which the composition is incorporated, which provides cured products with improved resistance. In particular, the photoactivity and curing results observed for compositions of the invention, comprising reaction products derived from dibenzoylmethane and its derivatives, was markedly improved relative to unfunctionalized dibenzoylmethane and its derivatives.

The improvements show how the reaction of dibenzoylmethane and its derivatives with a Michael addition acceptor material is key for the photoactivity of these species. These improvements are demonstrated *inter alia* through comparison of Example 9 (comprising dibenzoylmethane functionalized with dipropyleneglycol diacrylate) and Comparative Example 10 (comprising unfunctionalized dibenzoyl methane, which does not act as a photoinitiator).

Interestingly, the photoinitiation mechanism of the reaction product for use with the present invention is different to the splitting (Norrish type I) mechanism described for related compounds of the art. In this regard, related materials are described in EP454624B1 (Ciba-Geigy AG), which shall be used as a reference for the synthesis of such compounds, including compounds based on acetylacetones (i.e. not comprising benzoyl groups) that do not comprise a chromophore and thus initiate photoinitiations by a splitting-type (Norrish Type I) mechanism when activated by UV-C light.

In contrast, the reaction product for use in the present invention comprises a conjugated π-system, which shows strong absorption in the standard UV-wavelength region, including the wavelengths of UV-LEDs. As discussed, this is achieved by monosubstitution of one of the two acidic methylene hydrogens of the aromatic beta-dicarbonyl compounds used to make the reaction product of the invention. The resulting reaction products retain an acidic hydrogen and thus can form the enol-tautomer, providing the conjugated π-system.

The mechanism of photoinitiation for the compounds used in the present invention is a Norrish type II mechanism, wherein the compounds react with a synergist (e.g. an amine-synergist) to afford the initiating species. The compounds for use in the present invention do not result in the formation of splitting products and are therefore highly suitable for sensitive applications. Moreover, the compounds for use in the present invention may optionally retain polymerizable (e.g. (meth)acrylate) functionality, which enables these compounds to be incorporated into the polymeric matrix formed upon curing the photocurable compositions. This feature further reduces the migration of PI reaction products.

### Michael Donor Materials including Dibenzoylmethanes:

As used herein, aromatic "Michael addition donor material" means a compound having a structure with two aryl-ketone groups (Ar-C=O, i.e. at least two optionally substituted benzoyl-moieties) and two active methylene hydrogens. The easiest representative of this group of chemical substances is dibenzoyl methane. Active methylene hydrogens are very susceptible to deprotonation. The electron withdrawing groups help to stabilize the carbanion which can act as a nucleophile, being able to attack the conjugated bond of an alpha, beta-unsaturated carbonyl compound. Non-limiting examples of such suitable electron withdrawing groups include carbonyl groups, cyano groups and sulfonyl groups. The Michael addition donor material can have one or more of these electron withdrawing groups, with the most preferred being a carbonyl group.

Dibenzoylmethane is a commercially available and registered substance. Derivatives of dibenzoylmethanes such as avobenzone have found applications in sunscreen products. Dibenzoylmethane is prepared by condensation of ethylbenzoate with acetophenone.

Dibenzoylmethane or a substituted dibenzoylmethane derivative is used as the Michael addition donor in the reaction product for use in the present invention.

To shift the absorption spectrum of the reaction product, for example to better match with the emission spectrum of LED or visible light used in commercial printing processes, derivatives of dibenzoylmethane can be used. Dibenzoylmethane derivatives include dibenzoylmethane comprising 1 to 10 benzoyl ring substituents, such as 1 to 8 substituents, 2 to 8 substituents, 2 to 6 substituents, 3 to 6 substituents, or 4 substituents. Each benzoyl ring can comprise the same number of ring substituents. Alternatively, the benzoyl rings can comprise a different number of ring substituents. The substituents can be independently selected from the group consisting halogen, dialkylamino, diarylamino, optionally substituted straight or branched C₁-C₁₂ alkyl, C₃-C₆-cycloalkyl, or C₁-C₁₂-alkoxy group.

The benzoyl rings can be substituted with an alkyl group and an alkoxy group, such as a tertiary-butyl group and a methoxy group. The benzoyl rings can be substituted with at least one phenyl substituent. The benzoyl ring can be substituted with at least one amino substituent.

Derivatives of dibenzoylmethane, such as 4-phenyl-dibenzoylmethane (1-(4-biphenylyl)-3-phenyl-1,3-propanedione), 1,3-bis(4-biphenylyl)-1,3-propanedione, can be formed by the reaction of acetophenone itself or a substituted acetophenone, such as 4-dimethylamino acetophenone, 4-methylacetophenone, 4-phenyl-acetophenone (1-(4-Biphenylyl)-1-ethanone), 2',4',6'-trimethyl-acetophenone (2-acetylmesitylen), hydroxy-acetophenone, and methoxy-acetophenones, for example 4-methoxy-acetophenone, with substituted benzoates, such as ethyl 4-(dimethylamino)benzoate, and methoxybenzoic acid alkyl ester, such as 4-methoxybenzoic acid methyl ester.

The bathochromic or hypochromic effect of substituent(s) on the phenyl-ring(s) of dibenzoylmethane derivatives can be predicted using computational techniques, such as time-dependent density functional theory (TD-DFT) methods. Such methods are already known in the art. The UV-absorption wavelength of dibenzoylmethane derivatives is an important property for when these compounds are used in protective sunscreen products.

Synthetic procedures for preparing dibenzoylmethane derivatives are provided in EP0114607B1 (Haarmann & Reimer GmbH) and EP1349823B1 Chemtura Corp) and references cited therein. A procedure for the synthesis of 4,4'-dimethylamino-dibenzoylmethane is provided given in European Journal of Inorganic Chemistry, 2008, (9), 1523-1529. One commercially available derivative of dibenzoylmethane is avobenzone (3-(4-tert-Butylphenyl)-1-(4-methoxyphenyl)propane-1,3-dione), which was approved by the FDA and EU. Avobenzone is known under the trade names Parsol 1789 and Eusolex 9020. Using avobenzone as the Michael donor is preferred, especially if curing at higher wavelengths, for example, when using UV-LED emitting at 365 to 395nm. Another preferred Michael donor for use in the present invention is 4-phenyl-dibenzoylmethane (1-(4-diphenylyl)-3-phenyl-1,3-propanedione).

### Michael Acceptor Materials

In the context of this invention, a Michael acceptor material is a compound comprising a carbonyl group that is capable of reacting with a Michael donor to form a reaction product. This includes conventional Michael acceptor compounds comprising α,β-unsaturated carbonyl compounds, such as (meth)acrylates, which undergo reaction at the electrophilic β carbon. Examples of such suitable Michael acceptor materials include acrylates, methacrylates, and (meth)acrylamides. In addition, Michael acceptor materials for use in the invention also include carbonyl-containing compounds comprising an electrophilic α-carbon, as found in, for example, halogen-containing organic compounds, such as halogenated organic acids and esters, as described below.

### α,β-Unsaturated Carbonyl Compounds

Monofunctional acrylate monomers can be used as the Michael acceptor material. However, it should be noted that in the resulting reaction product (e.g. that of formula 1), no acrylate functionality is retained (i.e. r = 0), which means that such compounds cannot themselves participate in the polymerization reaction and are thus more prone to migrate after curing. For this reason, use of monofunctional (meth)acrylates as the Michael addition acceptor material is less preferred.

Examples of suitable monofunctional ethylenically unsaturated monomers that can be used as the Michael acceptor include but are not limited to the following (and combinations thereof isobutyl acrylate; cyclohexyl acrylate; iso-octyl acrylate; n-octyl acrylate; isodecyl acrylate; iso-nonyl acrylate; octyl/decyl acrylate; lauryl acrylate; 2-propyl heptyl acrylate; tridecyl acrylate; hexadecyl acrylate; stearyl acrylate; iso-stearyl acrylate; behenyl acrylate; tetrahydrofurfuryl acrylate; 4-t.butyl cyclohexyl acrylate; 3,3,5-trimethylcyclohexane acrylate; isobornyl acrylate; dicyclopentyl acrylate; dihydrodicyclopentadienyl acrylate; dicyclopentenyloxyethyl acrylate; dicyclopentanyl acrylate; benzyl acrylate; phenoxyethyl acrylate; 2-hydroxy-3-phenoxypropyl acrylate; alkoxylated nonylphenol acrylate; cumyl phenoxyethyl acrylate; cyclic trimethylolpropane formal acrylate; 2-(2-ethoxyethoxy) ethyl acrylate; polyethylene glycol monoacrylate; polypropylene glycol monoacrylate; caprolactone acrylate; ethoxylated methoxy polyethylene glycol acrylate; methoxy triethylene glycol acrylate; tripropyleneglycol monomethyl ether acrylate; diethylenglycol butyl ether acrylate; alkoxylated tetrahydrofurfuryl acrylate; ethoxylated ethyl hexyl acrylate; alkoxylated phenol acrylate; ethoxylated phenol acrylate; ethoxylated nonyl phenol acrylate; propoxylated nonyl phenol acylate; polyethylene glycol o-phenyl phenyl ether acrylate; ethoxylated p-cumyl phenol acrylate; ethoxylated nonyl phenol acrylate; alkoxylated lauryl acrylate; ethoxylated tristyrylphenol acrylate; N-(acryloyloxyethyl)hexahydrophthalimide; N-butyl 1,2 (acryloyloxy) ethyl carbamate; acryloyl oxyethyl hydrogen succinate; octoxypolyethylene glycol acrylate; octafluoropentyl acrylate; 2-isocyanato ethyl acrylate; acetoacetoxy ethyl acrylate; 2-methoxyethyl acrylate; dimethyl aminoethyl acrylate; 2-carboxyethyl acrylate; 4-hydroxy butyl acrylate.

Equivalent methacrylate compounds can also be used. Those skilled in the art will appreciate that methacrylate compounds have a lower reactivity than their equivalent acrylate counterparts.

Multifunctional Michael acceptor compounds can be used to make the reaction product for use with the present invention. An advantage of using multifunctional Michael acceptor compounds is that the reaction product may retain polymerizable ethylenically unsaturated groups covalently attached to the reaction product. Thus, the reaction product both acts as a polymerization initiator and can also participate in the polymerization reaction, thus further reducing the amount of migratable species present in the cured product. For example, using multifunctional Michael acceptor compounds as the Michael acceptor compound can be used to make self-curing resins.

Examples of suitable di- or tri- or multifunctional acrylates include but are not limited to the following (and combinations thereof), 1,3-butylene glycol diacrylate; 1,4-butanediol diacrylate; neopentyl glycol diacrylate; ethoxylated neopentyl glycol diacrylate; propoxylated neopentyl glycol diacrylate; 2-methyl-1,3-propanediyl ethoxy acrylate; 2-methyl-1,3-propanediol diacrylate; ethoxylated 2-methyl-1,3-propanediol diacrylate; 3 methyl 1,5- pentanediol diacrylate; 2-butyl-2-ethyl-1,3-propanediol diacrylate; 1,6-hexanediol diacrylate; alkoxylated hexanediol diacrylate; ethoxylated hexanediol diacrylate; propoxylated hexanediol diacrylate; 1,9-nonanediol diacrylate; 1,10 decanediol diacrylate; ethoxylated hexanediol diacrylate; alkoxylated hexanediol diacrylate; diethyleneglycol diacrylate; triethylene glycol diacrylate; tetraethylene glycol diacrylate; polyethylene glycol diacrylate; propoxylated ethylene glycol diacrylate; dipropylene glycol diacrylate; alkoxylated dipropylene glycol diacrylate; tripropyleneglycol diacrylate; alkyoxylated tripropylene glycol diacrylate; polypropylene glycol diacrylate; poly (tetramethylene glycol) diacrylate; cyclohexane dimethanol diacrylate; ethoxylated cyclohexane dimethanol diacrylate; alkoxylated cyclohexane dimethanol diacrylate; polybutadiene diacrylate; hydroxypivalyl hydroxypivalate diacrylate; tricyclodecanedimethanol diacrylate; 2-Hydroxy-3-{4-[2-hydroxy-3-(vinylcarbonyloxy)propoxy]butoxy}propyl acrylate (which is a preferred embodiment - commercial available as CN132 from Sartomer/Arkema group); ethoxylated bisphenol A diacrylate; propoxylated bisphenol A diacrylate; propoxylated ethoxylated bisphenol A diacrylate; ethoxylated bisphenol F diacrylate; 2-(2-Vinyloxyethoxy)ethyl acrylate; dioxane glycol diacrylate; ethoxylated glycerol triacrylate; glycerol propoxylate triacrylate; pentaerythritol triacrylate; alkoxylated petaerythritol triacrylate and tetraacrylate; trimethylolpropane triacrylate; alkoxylated trimethylolpropane triacrylate; caprolactone modified trimethylol propane triacrylate; ethoxylated trimethylolpropane triacrylate; propoxylated trimethylol propane triacrylate; tris (2-hydroxy ethyl) isocyanurate triacrylate; epsilon-caprolactone modified tris (2-hydroxy ethyl) isocyanurate triacrylate; melamine acrylate oligomer; pentaerythritol tetraacrylate; ethoxylated pentaerythritol tetraacrylate; di-trimethylolpropane tetra acrylate; dipentaerythritol pentaacrylate; dipentaerythritol hexaacrylate; ethoxylated dipentaerythritol hexaacrylate, any polyethylene glycol diglycidylether diacrylate with a molecular weight between 200 and 2000 Da; polypropylene glycol diglycidylether diacrylate with a molecular weight between 200 and 2000 Da as well as acrylate group-containing oligomers and polymers obtained by reacting polyepoxides with acrylic acid (epoxyacrylates) or obtained by reacting polyester polyols with acrylic acid and / or monomeric alkyl acrylates (polyester acrylates).

The Michael addition acceptor material for use in the present invention may preferably be selected from the group consisting of dipropyleneglycol diacrylate, hexanediol diacrylate, polyethyleneglycol diacrylate, alkoxylated pentaerythritol tetraacrylate, 1,4-butandiol-diglycidylether-diacrylate, or combinations thereof.

Equivalent methacrylate compounds can also be used. Those skilled in the art will appreciate that methacrylate compounds have a lower reactivity than their equivalent acrylate counterparts.

The Michael addition acceptor material in the reaction product for use in the present invention may be an amino(meth)acrylate or amino(meth)acrylamide. For example, the Michael addition acceptor material in the reaction product for use in the present invention may be an aminoacrylate. An advantage of using species such as aminoacrylates is that a complete self-curing resin with acrylate functionality, amine-synergist and benzoyl-structure in one molecule is formed upon reaction with the Michael donor according to claim 1. As a result, the synergist required by the invention is covalently attached to the reaction product, which may lead to further reduction in the amount of migratable species present, particularly if amino(meth)acrylates with multiple acrylate functionalities are used, which retain some (meth)acrylate functionality in the reaction product.

Suitable aminoacrylates, such as amine modified polyether acrylates, include EBECRYL 80, EBECRYL 81, EBECRYL 83, EBECRYL 85, EBECRYL 880, EBECRYL LEO 10551, EBECRYL LEO 10552, EBECRYL LEO 10553, EBECRYL 7100, EBECRYL P115 and EBECRYL P116 available from ALLNEX; CN501, CN550, CN UVA421, CN3705, CN3715, CN3755, CN381 and CN386, all available from Sartomer; GENOMER 5142, GENOMER 5161, GENOMER 5271 and GENOMER 5275 from RAHN; PHOTOMER 4771, PHOTOMER 4967, PHOTOMER 5006, PHOTOMER 4775, PHOTOMER 5662, PHOTOMER 5850, PHOTOMER 5930, and PHOTOMER 4250 all available from IGM, LAROMER LR8996, LAROMER LR8869, LAROMER LR8889, LAROMER LR8997, LAROMER PO 83F, LAROMER PO 84F, LAROMER PO 94F, LAROMER PO 9067, LAROMER PO 9103, LAROMER PO 9106 and LAROMER PO77F, all available from BASF; AGISYN 701, AGISYN 702, AGISYN 703, NeoRad P-81 and NeoRad P-85 ex DSM-AGI.

### Halogen-Containing Organic Compound

The Michael-addition acceptor compound may be a halogenated organic acid or ester (e.g. bromo acetic acid or its esters such as alkyl bromoacetate). The halogen-containing organic compound comprises a carbonyl group with a halogen substituent on the α-carbon atom. The halogen-containing organic compound can be optionally functionalized with an acrylate group. The halogen substituent can be chloro, bromo, or iodo.

To functionalize the reaction product with an acrylate group, the reaction product can be further reacted with tris(hydroxymethyl)aminomethane (TRIS) to afford an intermediate (see, Figure 9), which is then reacted with an acrylate-containing, vinyl ether, such as [2-(vinyloxy)ethoxy]ethyl acrylate (depicted - see Figure 10). The reaction scheme is shown below. It should be noted, that of course any other substituted dibenzoylmethane or any halogen-organic acid itself or any other ester can be used in the synthesis:

**Figure 8****:** Michael addition of a Michael donor (DBM) to a halogen-containing organic compound (halogenated organic ester). The reaction product is also an example for a compound of formula 1, but does not comprise a polymerizable ethylenically unsaturated group, such as an acrylate group, and therefore cannot participate in the polymerization and is thus less suited for low-migration applications. However, the mass ratio of the PI required to be present in a formulation can be reduced, as the PI is of lower molecular weight, as it does not comprise additional bulky, polymerizable substituents.

The reaction product shown in Figure 8 may be further reacted in a transesterification reaction with any di- or polyol to afford a diffusion-hindered photosensitizer compound.

**Figure 9****:** Formation of an intermediate compound by reaction with tris(hydroxymethyl) aminomethane (TRIS).

**Figure 10****:** Functionalization of the intermediate compound with acrylates using an acrylate-containing, vinyl ether (depicted = [2-(vinyloxy)ethoxy]ethyl acrylate). This is an example of formula 1 with an amide functionality.

Suitable reaction conditions for the reactions transforming of dibenzoylmethane-based PI-species into polymerizable species are disclosed in EP2684876A1 (Agfa Graphics N.V.) and/or where the same functionalization is described for a thioxanthone. The reaction of a bromoacetic acid ester with dibenzoylmethane is disclosed in the examples of EP2684876A1.

### Synergists (hydrogen donor material):

The reaction product for use in the invention (e.g. the compound of formula 1) is used as a photoinitiator in combination with a synergist e.g. an amine compound.

While not intending to be bound by theory, it is believed that the C(=O)-aryl bond energies of the formed compounds of formula 1 for use in the invention are too high for the UV energy used in conventional curing processes to induce homolytic bond cleavage. This is similar to benzophenones, which also do not undergo homolytic bond cleavage upon irradiation. Furthermore, the C-C-bond between the carbonyl carbon and α-carbon is also too high in energy to undergo homolytic cleavage, due to having enol-character, meaning that it is stronger than a single-bond. Therefore, upon excitation, the excited triplet state of the reaction products for use in the invention does not undergo a spitting type mechanism.

Surprisingly, the reaction product for use in the present invention was found to be a Type II photoinitiator. As discussed, Type II photoinitiators undergo hydrogen abstraction in order to initiate free radical polymerization process and are thus used in combination with a synergist. Synergists usually contain hetero-atoms with active hydrogen atoms in the α-position, such as tertiary amines, alcohols, ethers, esters and thiols.

The synergist for use with the reaction product for use in kit of the invention is selected from the group consisting of amines, ethers, esters, thiols, and combinations thereof. The synergist for use with the reaction product for use in the kit of the invention preferably may be selected from the group consisting of amines, thiols, and combinations thereof. The synergist can more preferably be an alkanolamine, such as triethanolamine.

Such hydrogen donor molecules usually contain hetero-atoms with active (i.e. acidic) hydrogen atoms in the α-position. Tertiary amines, alcohols, ethers, esters, thiols, etc. are often used as hydrogen donors. The donor transfers a hydrogen atom to the excited photoinitiator and becomes a very active donor radical, which is capable of initiating free radical polymerization of ethylenically unsaturated monomers such as acrylates. (see Industrial Photoinitiators - A Technical Guide, W. Arthur Green, CRC Press, page 24-26). Direct hydrogen abstraction takes place from donors, such as ethers or alcohols. Tertiary amines react more efficiently via an electron transfer mechanism, which initially occurs at the donor nitrogen atom.

In the inks, coating, varnish or adhesive compositions of the invention, the compound of formula 1 for use in the invention is applied together with a synergist (i.e. a hydrogen donor material). The hydrogen donor material (synergist) may be covalently bound/part of the structure of formula 1. This is achieved, for example, by the reaction of a dibenzoylmethane with an aminoacrylate.

The synergist may also be non-covalently linked to the reaction product for use in the invention, which allows for the adjustment of the ratio between the synergist and reaction product for use in the invention. The compounds are mixed by usual techniques known by those skilled in the art to form a homogenous mixture. The mixing process can be performed at any temperature or pressure that does not lead to decomposition or prepolymerization of the chemical compounds. Preferably the mixing is performed at room temperature (i.e. 20 to 25 °C) or at a slightly elevated temperature, and up to 100°C. In one example method, the compounds are stirred at room temperature for about 20 minutes using a magnetic stirrer with stirring bar until a homogeneous mixture is obtained.

Suitable synergists include, but are not limited to, the following: aromatic amines such as; 2-(dimethylamino)ethylbenzoate; N-phenyl glycine; benzoic acid, 4-(dimethylamino)-,1,1'-[(methylimino)di-2,1-ethanediyl] ester; and simple alkyl esters of 4-(N,N-dimethylamino)benzoic acid, with ethyl, amyl, 2-butoxyethyl and 2-ethylhexyl esters being particularly preferred; other positional isomers of N,N-dimethylamino)benzoic acid esters are also suitable. Aliphatic amines such as N-methyldiethanolamine, triethanolamine and tri- isopropanolamine are also suitable synergists.

Aminoacrylates and amine modified polyether acrylates are also suitable synergists and include EBECRYL 80, EBECRYL 81, EBECRYL 83, EBECRYL 85, EBECRYL 880, EBECRYL LEO 10551, EBECRYL LEO 10552, EBECRYL LEO 10553, EBECRYL 7100, EBECRYL P115 and EBECRYL P116 available from ALLNEX; CN501, CN550, CN UVA421, CN3705, CN3715, CN3755, CN381 and CN386, all available from Sartomer; GENOMER 5142, GENOMER 5161, GENOMER 5271 and GENOMER 5275 from RAHN; PHOTOMER 4771, PHOTOMER 4967, PHOTOMER 5006, PHOTOMER 4775, PHOTOMER 5662, PHOTOMER 5850, PHOTOMER 5930, and PHOTOMER 4250 all available from IGM, LAROMER LR8996, LAROMER LR8869, LAROMER LR8889, LAROMER LR8997, LAROMER PO 83F, LAROMER PO 84F, LAROMER PO 94F, LAROMER PO 9067, LAROMER PO 9103, LAROMER PO 9106 and LAROMER PO77F, all available from BASF; AGISYN 701, AGISYN 702, AGISYN 703, NeoRad P-81and NeoRad P-85 ex DSM-AGI.

The importance of the synergist is shown in Tables 4 and 5, where no curing is observed if a compound of formula 1 is applied to curable composition without the addition of the synergist and subjected to curing.

When incorporated into a radiation curable composition, the weight percent ratio of the synergist to the reaction product for use in the invention (e.g. the compound of formula 1) may be between 50:1 and 1:100, preferably between 10:1 and 1:50 and most preferably between 3:1 and 1:10. The weight percent ratio of the synergist to the reaction product for use in the invention can be between 1:15 to 5:1, such as between 1:12 to 3:1, between 1:10 to 2:1, between 1:8 to 1:1, between 1:8 to 1:1.1, between 1:5 to 1:1.1, or between 1:3 to 1:1.1, or between 1:2 to 1:1.1. As discussed, that the use of synergist that is not covalently linked to the reaction product for use with the invention can be omitted if an amino(meth)acrylate or amino(meth)acrylamide, such as an aminoacrylate, is used to form the reaction product for use with the invention, as the synergist will be present as a covalently linked component of the reaction product for use with the invention. However, an additional amine synergist may nevertheless also be added to compositions of the invention comprising this reaction product.

The synergist for use in the ink, coating, varnish, and adhesive compositions of the invention is any hydrogen donor. The synergist for use in the ink, coating, varnish, and adhesive compositions of the invention can have an active hydrogen atom in the α-position, including tertiary amines, alcohols, ethers, esters and thiols. The synergist for use in the ink, coating, varnish, and adhesive compositions of the invention preferably can be an amine, such as a tertiary amine, or a thiol.

The synergist for use in the kits, as well as the ink, coating, varnish, and adhesive compositions of the invention may have a molecular weight below 750 gmol⁻¹, such as below 650 gmol⁻¹, below 500 gmol⁻¹ , below 400 gmol⁻¹, or below 200 gmol⁻¹. The synergist may be an amine synergist having a molecular weight defined herein. Where the reaction product for use with the invention is a compound of formula 1 with (r + s) ≥ 6 or wherein r ≥ 5, the synergist (e.g. an amine) preferably has a molecular weight below 500 gmol⁻¹ , such as below 400 gmol⁻¹, such as below 200 gmol⁻¹.

### Polymerizable Mixtures Comprising the Composition of the Invention and Additional monomers

The composition of the present invention can be used as a self-curing resin (wherein the reaction product for use in the invention further comprises ethylenically unsaturated monomeric groups). Particularly preferred are compositions of the invention comprising a reaction product comprising at least one (meth)acrylate group (i.e. where r ≠ 0). Alternatively or in addition, the composition of the present invention can be used as the photoinitiator in a composition comprising ethylenically unsaturated monomers.

When used as a polymerization initiator, the reaction product for use in the invention is a diffusion-hindered photoinitiator selected from the group consisting of a polymerizable photoinitiator, a multifunctional photoinitiator, a polymeric or an oligomeric photoinitiator.

When used in combination with a synergist, the compound of formula 1 acts as a photoinitiator and may be incorporated into a photocurable composition with additional monomer species, such as (meth)acrylates, to form inks, coatings, varnishes, and adhesives that are curable using actinic radiation. Curing such a polymerizable composition comprising a compound of formula 1 in combination with a synergist and ethylenically unsaturated compounds can be achieved by subjecting the composition to curing conditions, such as for example irradiation with light of a wavelength between 200 and 450nm.

Surprisingly, a curable composition comprising a compound of formula 1 in combination with a synergist and optionally an ethylenically unsaturated compound such as a (meth)acrylate was found to be more reactive and to react by a different mechanism than previously described aromatic-free Michael-addition products used in a free-radical polymerization of acrylates. In this regard, US2003/0225180A1 discloses di-substituted aliphatic β-ketoesters and β-diketones not comprising benzoyl groups. As discussed previously, the absence of benzoyl groups and the di-substitution of the α-carbon means that the disclosed compounds cannot form the enol tautomer and thus do not comprise a conjugated π-system and cannot undergo Type II type photoinitiation. US7407707B2, US7232540 and US7291658B2 as discussed above also relate to such species.

Due to the optional presence of (meth)acrylate groups on the compound of formula 1, the compound can form a curable composition in combination with the synergist alone. However, in most cases, the curable composition will additionally comprise other ethylenically unsaturated compounds in order to adjust the properties such as viscosity, hardness and adhesion, for the intended application.

### Ethylenically unsaturated monomers

Examples of suitable monofunctional ethylenically unsaturated monomers include but are not limited to the following (and combinations thereof), where the terms ethoxylated refers to chain extended compounds through the use of ethyleneoxide, propoxylated refers to chain extended compounds through the use of propylene oxide, and alkoxylated refers to chain extended compounds using either or both ethyleneoxide and propylene oxide. Equivalent methacrylate compounds are also capable of being used, although those skilled in the art will appreciate that methacrylate compounds have lower reactivity than their equivalent acrylate counterparts: isobutyl acrylate; cyclohexyl acrylate; iso-octyl acrylate; n-octyl acrylate; isodecyl acrylate; iso-nonyl acrylate; octyl/decyl acrylate; lauryl acrylate; 2- propyl heptyl acrylate; tridecyl acrylate; hexadecyl acrylate; stearyl acrylate; iso-stearyl acrylate; behenyl acrylate; tetrahydrofurfuryl acrylate; 4-t.butyl cyclohexyl acrylate; 3,3,5-trimethylcyclohexane acrylate; isobornyl acrylate; dicyclopentyl acrylate; dihydrodicyclopentadienyl acrylate; dicyclopentenyloxyethyl acrylate; dicyclopentanyl acrylate; benzyl acrylate; phenoxyethyl acrylate; 2-hydroxy-3-phenoxypropyl acrylate; alkoxylated nonylphenol acrylate; cumyl phenoxyethyl acrylate; cyclic trimethylolpropane formal acrylate; 2(2-ethoxyethoxy) ethyl acrylate; polyethylene glycol monoacrylate; polypropylene glycol monoacrylate; caprolactone acrylate; ethoxylated methoxy polyethylene glycol acrylate; methoxy triethylene glycol acrylate; tripropyleneglycol monomethyl ether acrylate; diethylenglycol butyl ether acrylate; alkoxylated tetrahydrofurfuryl acrylate; ethoxylated ethyl hexyl acrylate; alkoxylated phenol acrylate; ethoxylated phenol acrylate; ethoxylated nonyl phenol acrylate; propoxylated nonyl phenol acylate; polyethylene glycol o-phenyl phenyl ether acrylate; ethoxylated p-cumyl phenol acrylate; ethoxylated nonyl phenol acrylate; alkoxylated lauryl acrylate; ethoxylated tristyrylphenol acrylate; N-(acryloyloxyethyl)hexahydrophthalimide; N-butyl 1,2 (acryloyloxy) ethyl carbamate; acryloyl oxyethyl hydrogen succinate; octoxypolyethylene glycol acrylate; octafluoropentyl acrylate; 2-isocyanato ethyl acrylate; acetoacetoxy ethyl acrylate; 2-methoxyethyl acrylate; dimethyl aminoethyl acrylate; 2-carboxyethyl acrylate; 4-hydroxy butyl acrylate.

The curable compositions of the invention may comprise multifunctional (meth)acrylate monomers. Examples of suitable di- or tri- or multifunctional ethylenically unsaturated monomers include but are not limited to the following (and combinations thereof), where the terms ethoxylated refers to chain extended compounds through the use of ethyleneoxide, propoxylated refers to chain extended compounds through the use of propylene oxide, and alkoxylated refers to chain extended compounds using either or both ethylene oxide and propylene oxide. Equivalent methacrylate compounds are also capable of being used, although those skilled in the art will appreciate that methacrylate compounds have lower reactivity than their equivalent acrylate counterparts: 1,3-butylene glycol diacrylate; 1,4-butanediol diacrylate; neopentyl glycol diacrylate; ethoxylated neopentyl glycol diacrylate; propoxylated neopentyl glycol diacrylate; 2-methyl-1,3-propanediyl ethoxy acrylate; 2-methyl-1,3-propanediol diacrylate; ethoxylated 2-methyl-1,3-propanediol diacrylate; 3 methyl 1,5- pentanediol diacrylate; 2-butyl-2-ethyl-1,3-propanediol diacrylate; 1,6-hexanediol diacrylate; alkoxylated hexanediol diacrylate; ethoxylated hexanediol diacrylate; propoxylated hexanediol diacrylate; 1,9-nonanediol diacrylate; 1,10 decanediol diacrylate; ethoxylated hexanediol diacrylate; alkoxylated hexanediol diacrylate; diethyleneglycol diacrylate; triethylene glycol diacrylate; tetraethylene glycol diacrylate; polyethylene glycol diacrylate; propoxylated ethylene glycol diacrylate; dipropylene glycol diacrylate; tripropyleneglycol diacrylate; polypropylene glycol diacrylate; poly (tetramethylene glycol) diacrylate; cyclohexane dimethanol diacrylate; ethoxylated cyclohexane dimethanol diacrylate; alkoxylated cyclohexane dimethanol diacrylate; polybutadiene diacrylate; hydroxypivalyl hydroxypivalate diacrylate; tricyclodecanedimethanol diacrylate; 2-Hydroxy-3-{4-[2-hydroxy-3-(vinylcarbonyloxy)propoxy]butoxy}propyl acrylate (which is a preferred embodiment - commercial available as CN132 from Sartomer); ethoxylated bisphenol A diacrylate; propoxylated bisphenol A diacrylate; propoxylated ethoxylated bisphenol A diacrylate; ethoxylated bisphenol F diacrylate; 2-(2-Vinyloxyethoxy)ethyl acrylate; dioxane glycol diacrylate; ethoxylated glycerol triacrylate; glycerol propoxylate triacrylate; pentaerythritol triacrylate; trimethylolpropane triacrylate; caprolactone modified trimethylol propane triacrylate; ethoxylated trimethylolpropane triacrylate; propoxylated trimethylol propane triacrylate; tris (2-hydroxy ethyl) isocyanurate triacrylate; epsilon-caprolactone modified tris (2-hydroxy ethyl) isocyanurate triacrylate; melamine acrylate oligomer; pentaerythritol tetraacrylate; ethoxylated pentaerythritol tetraacrylate; di-trimethylolpropane tetra acrylate; dipentaerythritol pentaaacrylate; dipentaerythritol hexaaacrylate; ethoxylated dipentaerythritol hexaacrylate, any polyethylene glycol diglycidylether diacrylate with a molecular weight between 200 and 2000; polypropylene glycol diglycidylether diacrylate with a molecular weight between 200 and 2000.

Other functional monomer classes capable of being used in part in these formulations include cyclic lactam such as N-vinyl Caprolactam; N-vinyl oxazolidinone and N-vinyl pyrrolidone, and secondary or tertiary acrylamides such as acryloyl morpholine; diacetone acrylamide; N-methyl acrylamide; N-ethyl acrylamide; N-isopropyl acrylamide; N-t.butyl acrylamide; N-hexyl acrylamide; N-cyclohexyl acrylamide; N-octyl acrylamide; N- t.octyl acrylamide; N-dodecyl acrylamide; N-benzyl acrylamide; N-(hydroxymethyl)acrylamide; N-isobutoxymethyl acrylamide; N- butoxymethyl acrylamide; N,N-dimethyl acrylamide; N,N-diethyl acrylamide; N,N-propyl acrylamide; N,N-dibutyl acrylamide; N,N-dihexyl acrylamide; N,N-dimethylamino methyl acrylamide; N,N-dimethylamino ethyl acrylamide; N,N-dimethylamino propyl acrylamide; N,N-dimethylamino hexyl acrylamide; N,N-diethylamino methyl acrylamide; N,N-diethylamino ethyl acrylamide; N,N-diethylamino propyl acrylamide; N,N-dimethylamino hexyl acrylamide; and N,N'-methylenebisacrylamide.

### Amounts

The reaction product for use in the invention may be present in polymerizable mixtures of the invention, such as inks, coatings or adhesives, in an amount of up to 30wt%. It is preferred that the reaction product for use in the invention is present in the polymerizable mixtures of the invention, such as inks, coatings or adhesives, in amounts between 0.1 and 30wt%, such as 5 and 25wt%, 10 and 20wt%, 10 and 18wt%, 12 and 18wt%, or 10 and 15wt%. The reaction product for use in the invention may be present in an amount of up to 10wt%, e.g. between 0.1 and 10wt%.

When the reaction product for use in the invention is self-curing, i.e. when the reaction product for use in the present invention comprises at least one covalently bound, polymerizable ethylenically unsaturated group selected from a (meth)acrylate or a (meth)acrylamide group, the reaction product may be present in a self-curing composition in amounts up to 90%. For example, the self-curing reaction product of the invention can be present in amounts of 10 to 90wt%, 20 to 90 wt%, 40 to 90wt%, 60 to 90wt%, 70 to 80 wt%, or 70 to 90wt%.

The synergist, such as the amine synergist, may be present in the polymerizable mixtures of the invention, such as inks, coatings or adhesives, in amounts between 1 and 30wt%, such as between 3 and 25wt%, between 5 and 20wt%, between 7 and 15wt%, or between 5 and 10wt%. It is preferred that the amine synergist is present in the polymerizable mixtures of the invention, such as inks, coatings or adhesives, in an amount between 5 to 15 wt%, such as around 10 wt%.

The additional monomers may be present in the polymerizable mixtures of the invention, such as inks, coatings or adhesives, in an amount between 30 wt% and 90wt%, such as between 40 and 80wt%, between 45 and 70wt%, between 35 and 60wt%, between 35 and 50wt%, or between 40 and 60wt%.

For example, the curable compositions of the invention may comprise between 30 wt% and 90wt%, such as between 40 and 80wt%, between 45 and 70wt%, between 35 and 60wt%, between 35 and 50wt%, or between 40 and 60wt%, or di, tri- or multifunctional (meth)acrylate monomers. The curable compositions of the invention may comprise between 30 wt% and 90wt%, such as between 40 and 80wt%, between 45 and 70wt%, between 35 and 60wt%, between 35 and 50wt%, or between 40 and 60wt%, or di and trifunctional (meth)acrylate monomers.

### Weight Ratios

The weight ratio between the mix of the components described before (synergist and compound of formula 1) and the additional (meth)acrylate monomers may be between 100:1 and 1:500, preferably between 20:1 and 1:100 and most preferably between 1:1 and 1:50 of the compounds in the formulation of the radiation curable composition. Note, that optionally the use of acrylate can be omitted wherein the compounds of formula 1 comprise remaining acrylate functionality.

### Water Content

The curable composition may optionally contain 0-40 wt% water as shown in the examples. Higher amounts of water may negatively affect the surface tension of the curable composition. It is preferred that the inks or coatings of the invention comprise less than 30wt% water, such as less than 20wt%, less than 15wt%, less than 10wt%, less than 5wt%, or less than 2wt% water.

### Surfactants

In most cases one or a combination of surfactants (such as Aerosol OT-75 of Solvay company) will be needed in order to form intact films. The surfactant will be used in amounts less than 10wt%, preferably less than 5wt%, and most preferably less than 3 wt% of the curable composition.

### Pigments and Colorants

The energy curable inks of this invention may contain one or more colorants in the form of a dye or pigment dispersed therein. Pigments suitable for use in the present invention include conventional organic or inorganic pigments. Representative pigments may, for example, be selected from the group of Pigment Yellow 1, Pigment Yellow 3, Pigment Yellow 12, Pigment Yellow 13, Pigment Yellow 14, Pigment Yellow 17, Pigment Yellow 63, Pigment Yellow 65, Pigment Yellow 73, Pigment Yellow 74, Pigment Yellow 75, Pigment Yellow 83, Pigment Yellow 97, Pigment Yellow 98, Pigment Yellow 106, Pigment Yellow 111, Pigment Yellow 114, Pigment Yellow 121, Pigment Yellow 126, Pigment Yellow 127, Pigment Yellow 136, Pigment Yellow 138, Pigment Yellow 139, Pigment Yellow 174, Pigment Yellow 176, Pigment Yellow 188, Pigment Yellow 194, Pigment Orange 5, Pigment Orange 13, Pigment Orange 16, Pigment Orange 34, Pigment Orange 36, Pigment Orange 61, Pigment Orange 62, Pigment Orange 64, Pigment Red 2, Pigment Red 9, Pigment Red 14, Pigment Red 17, Pigment Red 22, Pigment Red 23, Pigment Red 37, Pigment Red 38, Pigment Red 41, Pigment Red 42, Pigment Red 48: 2, Pigment Red 53: 1, Pigment Red 57: 1, Pigment Red 81: 1, Pigment Red 112, Pigment Red 122, Pigment Red 170, Pigment Red 184, Pigment Red 210, Pigment Red 238, Pigment Red 266, Pigment Blue 15, Pigment Blue 15: 1, Pigment Blue 15: 2, Pigment Blue 15: 3, Pigment Blue 15: 4, Pigment Blue 61, Pigment Green 7, Pigment Green 36, Pigment Violet 1, Pigment Violet 19, Pigment Violet 23, Pigment Black 7.

### Resins / Inert resins

The radiation curable composition of the present invention may contain, inert, non-curable resins having no curable acrylic groups with a weight number average of 1000-30000 Daltons, preferred 1000-4000 Daltons, such as poly(acrylates) often called acrylic resins (including styrenes), poly(ester), poly(urethanes), poly(amides) ketone resins, epoxies, aldehyde resins (including melamine-formaldehydes), urea, alkyd resins, phenolformaldehyde resins, rosin resins, hydrocarbon resins, nitrocellulose, vinyl resins, styrenes or mixtures of the aforementioned. Such resins improve adhesion, gloss, rheology and flexibility.

### Additives

The radiation curable compositions and inks of this invention may contain the usual additives to modify flow, surface tension, gloss and abrasion resistance of the cured coating or printed ink. Examples of additives that can be incorporated in the inks or coatings of the invention include a surface-active agent, a wax, or a combination thereof. Further additives include leveling agents, wetting agents, slip agents, anti-misting agents, dispersants and de-aerators. Preferred additives include fluorocarbon surfactants, silicones and organic polymer surfactants, and inorganic materials such as talc. Commercial examples of such additives include the Tegorad product lines (Tegorad are trademarks and are commercially available products of Tego Chemie, Essen, Germany) and the Solsperse product lines (Solsperse are trademarks and are commercially available products of Lubrizol company).

### Additional Photoinitiators

Further optional additives that may be incorporated into the radiation-curable composition of the present invention include additional photoinitiators. As discussed, the composition of the invention can act as either a photoinitiator for other monomers or as a self-curing resin, such that additional photoinitiators are not required in curable compositions of the invention. However, should additional photoinitiators be present, it is preferred that they are incorporated in amounts of less than 5wt%, such as less than 2wt%, less than 1.5 weight%, more preferably 1wt% or less, such as less than 1 weight%, particularly for photoinitiators with a molecular weight of less than about 500 Daltons.

Examples of low molecular weight additional photoinitiators include α-hydroxyketones such as; 1-hydroxy-cyclohexyl-phenyl-ketone; 2-hydroxy-2-methyl-1-phenyl-1-propanone; 2-hydroxy-2-methyl-4'-tert-butyl-propiophenone; 2-hydroxy-4'-(2-hydroxyethoxy)-2-methyl-propiophenone; 2-hydroxy-4'-(2-hydroxypropoxy)-2-methyl-propiophenone; oligo 2-hydroxy-2-methyl-1-[4-(1-methyl-vinyl)phenyl]propanone; bis[4-(2-hydroxy-2-methylpropionyl)phenyl]methane; 2-Hydroxy-1-[1-[4-(2-hydroxy-2-methylpropanoyl)phenyl]-1,3,3-trimethylindan-5-yl]-2-methylpropan-1-one and 2-Hydroxy-1-[4-[4-(2-hydroxy-2-methylpropanoyl)phenoxy]phenyl]-2-methylpropan-1-one.

Further examples include acylphosphine oxides such as; 2,4,6-trimethylbenzoyldiphenylphosphine oxide; ethyl (2,4,6-trimethylbenzoyl)phenyl phosphinate; and bis-(2,4,6-trimethylbenzoyl)-phenylphosphine oxide. Further examples include α-aminoketones such as; 2-methyl-1-[4-methylthio)phenyl]-2-morpholinopropan-1-one; 2-benzyl-2-dimethylamino-1-(4-morpholinophenyl)-butan -1-one; and 2-dimethylamino-2-(4-methyl-benzyl)-1-(4-morpholin-4-yl-phenyl)-butan-1-on. Further examples include thioxanthones such as; 2-4-diethylthioxanthone, isopropylthioxanthone, 2-chlorothioxanthone, and 1-chloro-4-propoxythioxanthone;

Further examples include benzophenones such as; such as benzophenone, 4-phenylbenzophenone, and 4-methylbenzophenone; methyl-2-benzoylbenzoate; 4-benzoyl-4-methyldiphenyl sulphide; 4-hydroxybenzophenone; 2,4,6-trimethyl benzophenone, 4,4-bis(diethylamino)benzophenone; benzophenone-2-carboxy(tetraethoxy)acrylate; 4-hydroxybenzophenone laurate and 1-[-4-[benzoylphenylsulpho]phenyl]-2-methyl-2-(4-methylphenylsulphonyl)propan-1-one.

Further examples include phenylglyoxylates such as; phenyl glyoxylic acid methyl ester; oxy-phenyl-acetic acid 2-[hydroxyl-ethoxy]-ethyl ester, or oxy-phenyl-acetic acid 2-[2-oxo-2-phenyl-acetoxy-ethoxy]-ethyl ester. Further examples include oxime esters such as; 1-phenyl-1,2-propanedione-2- (O-ethoxycarbonyl)oxime; [1-(4-phenylsulfanylbenzoyl) heptylideneamino] benzoate, or [1-[9-ethyl-6-(2-methylbenzoyl) carbazol-3-yl] -ethylideneamino]acetate.

Examples of other suitable photoinitiators include diethoxy acetophenone; benzil; benzil dimethyl ketal; titanocen radical initiators such as titanium-bis(η 5-2,4-cyclopentadien-1-yl)-bis-[2,6-difluoro-3-(1H-pyrrol-1-yl)phenyl]; 9-fluorenone; camphorquinone; 2-ethyl anthraquinone; and the like.

Polymeric photoinitiators and sensitizers are also suitable, including, for example, polymeric or oligomeric amine synergists e.g. Omnipol 894 from IGM, aminobenzoates (GENOPOL AB-1 or AB-2 from RAHN, Omnipol ASA from IGM or Speedcure 7040 from Lambson), polymeric benzophenone derivatives (GENOPOL BP-1 or BP-2 from RAHN, Omnipol BP, Omnipol BP2702 or Omnipol 682 from IGM or Speedcure 7005 from Lambson), polymeric thioxanthone derivatives (GENOPOL TX-1 or TX-2 from RAHN, Omnipol TX from IGM or Speedcure 7010 from Lambson), polymeric aminoalkylphenones such as Omnipol 910 from IGM; polymeric benzoyl formate esters such as Omnipol 2712 from IGM; and the polymeric sensitizer Omnipol SZ from IGM.

Preferably, the radiation curable compositions of the present invention provide sufficient curability, so that in highly pigmented UV-inks, monomeric photoinitiators, which are in general mandatory to boost the cure, can be avoided.

The radiation curable compositions of this invention may contain the usual additives to modify flow, surface tension, gloss and abrasion resistance of the cured coating or printed ink. These additives may function as leveling agents, in-can stabilizers, wetting agents, slip agents, flow agents, dispersants and de-aerators. Preferred additives include fluorocarbon surfactants, silicones and organic polymer surfactants and inorganic materials such as talc. As examples, the Tegorad product lines (Tegorad are trademarks and are commercially available products of Tego Chemie, Essen, Germany) and the Solsperse product lines (Solsperse are trademarks and are commercially available products of Lubrizol company).

The radiation curable compositions and inks of this invention may contain the usual extenders such as clay, talc, calcium carbonate, magnesium carbonate or silica to adjust water uptake, misting and color strength.

Oligomers are substances that provide the vehicle for the UV ink. They are similar to monomers, except that they have already been partially polymerized, which makes them more viscous. During curing, the monomers react with the oligomers to create chains in three dimensions. In the printing industry, mainly resins/oligomers with acrylate functionality are used to provide the necessary reactivity to enable adequate cure for modern, high speed presses.

The main classes of acrylated oligomers includes epoxy acrylates; urethanes acrylates; polyester acrylates; acrylic acrylates; hyperbranched polyester acrylates; waterborne UV polyurethane dispersions and, organic-inorganic hybrid materials.

### Reaction conditions for the Michael Addition of the dibenzoyl compound with the Michael acceptor.

### Stoichiometry

As discussed, the reaction product for use in the invention can be used as photoinitiator in an ink, coating or varnish that comprises an ethylenically unsaturated compound, such as an acrylate. Therefore, adding a stoichiometric excess of the Michael acceptor, when the Michael acceptor compound is in the form of an ethylenically unsaturated polymerizable monomer, is not of importance, as any residual Michael acceptor can be used as a monomer component of the ink, coating, or varnish. In contrast, it is undesirable to have residual (i.e. non-reacted) dibenzoylmethane or its derivatives in the final reaction product for use in the invention, because such species do not act as photoinitiators but will be present in the cured product as potentially migratable components (see, e.g., Tables 4 and 5). Furthermore, species such as avobenzone may even reduce the available light for the PI species, because they have a broad absorption spectrum and high extinction coefficients; the reason for their use in many sun protection lotions.

The steps in the synthetic procedure are defined below. For completeness, each step can be performed in a single reaction vessel. The below synthetic procedure does not require purification, isolation. or further processing steps in-between any of the steps described. However, such additional steps are not excluded from the method.

### Step 1- Deprotonation of the Michael donor (see, Figure 4, above)

The reaction of Michael-Donor materials dibenzoylmethane or its derivatives, with a Michael acceptor compound, for example a (meth)acrylate, is preferably initiated by the reaction of dibenzoylmethane or its derivatives with a basic catalyst to form a stabilized donor anion of dibenzoyl methane or its derivatives. The basic catalyst can be used in stoichiometric or sub-stoichiometric amounts. Preferred basic catalysts include amines or amides. Also preferred are secondary or tertiary amines, non-nucleophilic bases such as amides including DBU (1,8-diazabicyclo[5.4.0]undec-7-ene), alcoholates such as potassium or sodium tert-butoxide, isopropoxides, methanolates or ethanolates, and sodium hydride. It is preferred to use the basic catalyst in catalytic amounts of about 0.5 to 25wt% relative to the mass of the dibenzoyl-species.

The temperature for the synthesis of the reaction product for use in the invention is not critical. Usually, the synthesis is performed at a temperature between 0°C-160°C, preferably between 60°C-145°C. The synthesis may be performed in a ratio of Michael acceptor groups, for example acrylic acid-derived groups such as (meth)acrylate groups, or (meth)acrylamide groups, to Michael donor species, for example, the dibenzoylmethane species, of 1: 1 to 100: 1 more preferably in a ratio of 1:1 to 50: 1.

A solvent can optionally be used in the formation of the reaction product for use in the invention. If a solvent is used, the solvent is preferably an organic solvent, such as toluene, heptane, cyclohexane, acetone, cyclohexanone, an alcohol such as methanol. ethanol, isopropanol, butanol, and/or a polar solvent such as dimethylsulfoxide (DMSO), methylene chloride, N,N-dimethylformamide (DMF), or combinations therefore. It is preferred that the formation of the product for use in the invention takes place in the absence of solvent, so that removal of the solvent is unnecessary.

Optionally, an inhibitor/stabilizer such as HQME (4-methoxyphenol) is added to the mixture of components used to make the reaction product for use in the invention in order to avoid any prepolymerization of the mixture upon formation of the reaction product.

The use of a base is one possible synthetic procedure for performing the Michael addition reaction. In addition, acid catalysts including Lewis acids such as FeCl₃ or ZnCl₂, can also be used for the addition reaction. For example, CN103806120 describes the addition of HDDA to dibenzoylmethane using FeCl₃. However, the use of Lewis acids generally affords lower yield of the desired reaction product, as well much more colored products, indicating the presence of impurities. Therefore, the use of bases, especially non-nucleophilic bases such as DBU and DBN (1,5-diazabicyclo[4.3.0]non-5-en) are preferred.

### Step 2: Reaction with Michael acceptor (see, Figure 5, above)

Subsequent addition of the Michael-acceptor material, such as an acrylate group-containing material, to the anion formed in step 1 occurs readily and results in the formation of a compound of formula 1.

A solvent, preferably an organic solvent such as toluene, heptane, cyclohexane, acetone, cyclohexanone, any alcohol such as methanol. ethanol, isopropanol, butanol, or polar solvent such as dimethylsulfoxide (DMSO), methylene chloride, N,N-dimethylformamide (DMF) can optionally be used. However, it is preferred that this step is performed in the absence of a solvent, so that removal of the solvent is unnecessary.

The reaction can be performed at a preferred temperature of between 0°C-180°C and at a pressure of below, equal or higher than atmospheric pressure. Preferably, the reaction is performed at atmospheric pressure and at a temperature between 60 to 140°C. The progress of the reaction can be followed by common analytical equipment, such as GPC, which will show the formation of the addition product as a new peak of higher molecular weight than the respective starting materials. Depending on the starting materials and the reaction conditions, this step of the process can take from less than one hour before the Michael donor material is completely consumed, to up to 20 hours. Preferably the reaction mixture is allowed to react for 1 to 10 hours, more preferably 1 to 5 hours.

Interestingly, it was found that dibenzoylmethane and its derivatives only undergo a single substitution at the α-carbon with Michael acceptors such as mono, di-, tri- or multi-functional (meth)acrylates, polyester (meth)acrylates, and/or halogenated organic acids or esters. The formation of an undesired disubstituted analog, wherein both acidic methylene hydrogens of dibenzoylmethane or its derivatives are substituted to afford a product for which no enol-formation is possible, was not observed.

The singly substituted reaction product for use in the invention is in marked contrast to the reaction products obtained when performing an analogous reaction with an aliphatic β-dicarbonyl compounds, wherein di-substitution at the α-carbon results. In none of the experiments conducted was a di-substituted dibenzoylmethane product detected, even when using very sophisticated analytical methods, such as time-of-flight (TOF) mass-spectrometry (MS) using electron spray ionization (ESI).

### Step 3 (optional): Reprotonation :(see, Figure 6, above)

This step demonstrates why only catalytic amounts of base (or acids) are necessary for this process. In this step, the reaction product for use in the invention is protonated and, instead of the salt, the neutral product is afforded as the final product of the process. In most cases this step does not need any special conditions or reactants. However, depending on the amount and type of base used in Step 1, it can be advantageous to neutralize the base by the addition of an inorganic or organic acid, such as acetic acid, acrylic acid, or phosphoric acid. The adjustment of the pH-value of the curable composition may be advantageous, as it may prevent a retro-Michael addition reaction.

The final product of formula 1 can be used as obtained without any further treatment or purification. However, if desired, the compound can be purified by typical purification procedures known in the art, such as recrystallization, distillation, washing steps, and/or by chromatographic separation or other purification methods of the art. If a solvent is used, the compound can be separated from the solvent by conventional drying methods of the art, such as evaporation e.g. on a rotary evaporator or thin film evaporator. The obtained compounds of formula 1 are typically colorless to yellow or brown liquids and preferably have a weight average molecular weight (Mw) within the range of about 500-5,000 Da (more preferably about 800-2,500 Da), and are preferably soluble or compatible (which means they form a homogenous solution) with most common (meth)acrylates. In order to adjust the viscosity, the compound may be mixed with any ethylenically unsaturated compound to afford a polymerizable composition.

### Cure Mechanism

The radiation curable compositions of the present invention can be UV-cured by an actinic light source, such as for example UV-light, provided by a high-voltage mercury bulb, a medium-voltage mercury bulb, a xenon bulb, a carbon arc lamp, a metal halide bulb, a UV-LED lamp or sunlight. The wavelength of the applied irradiation is preferably within a range of about 200 to 500 nm, more preferably about 250 to 400 nm. The UV dose is preferably within a range of about 30 to 3000 mJ/cm², and more preferably within a range of about 50 to 500 mJ/cm². The radiation curable compositions of the present invention can be cured with a UV dose of less than 500 mJ/cm², such as less than 400 mJ/cm², less than 300 mJ/cm², less than 250 mJ/cm², less than 200 mJ/cm², less than 150 mJ/cm² or less than 100 mJ/cm². In addition, the bulb can be appropriately selected according to the absorption spectrum of the radiation curable composition. Moreover, the curable composition of this invention can be cured under inert conditions.

Alternatively, the radiation curable compositions of this invention can be cured by electron beam (EB). Commercially EB-dryers are available, for example from Energy Science, Inc. of Wilmington, or from Advanced Electron Beams Inc. (AEB) of Wilmington. The energy absorbed, also known as the dose, is measured in units of kiloGrays (kGy), one kGy being equal to 1,000 Joules per kilogram. Usually, the electron beam dose should be within the range of 10 kGy to about 40 kGy for complete curing. With the radiation curable composition of this invention a radiation dose of 20-30 kGy at an oxygen level of < 200 ppm is usually sufficient to get a dry, solvent resistant coating or ink.

Background documents do not disclose the present inventive radiation curable compositions, nor are such compositions obvious to one skilled in the art, as most types of commercially available dibenzoylmethanes are used due to their high photostability and UV-absorbing properties in sunscreen or as plasticizer products. It was therefore highly unexpected that such compounds turn into photoinitiators after the monosubstitution at the methylene-group adjacent to both carbonyl-functions in the dibenzoyl-moiety and after they were mixed with H-donors (synergists).

### Curing properties of the curable composition:

For the experiments in Table 9, an adduct of dibenzoylmethane itself with alkoxylated pentaerythritol tetraacrylate (Photomer 4172F) representing the compound of general formula 1 was dissolved in a trifunctional acrylate (GPTA, commercially available e.g. as OTA480 of Allnex company Belgium) and mixed with the synergist given in the Table (reactive amine additive Ebecryl P116 of Allnex or triethanol amine was used as amine component). The mixtures became homogenous after short stirring at 60 °C.

Table 9 clearly shows that the radiation curable compositions of the present invention containing the compound of general formula 1 exhibit very good curing properties, similar to benzophenones.

Moreover, Tables 5 and 6 show that the radiation curable composition is ineffective if no synergist in present.

### Use of the curable composition in Coatings and Inks:

Due to the high reactivity of the radiation curable compositions of the present invention, they are especially suitable for radiation curable printing inks and coatings, such as for example a UV-flexo ink, a UV-inkjet ink, a UV-gravure ink or a UV-offset ink. Pigments and dyes usually absorb light, which is required to form radicals for the polymerization, so that highly reactive radiation curable compositions are preferred especially for inks. The inks are usually made by grinding a dry pigment into it or by flushing the pigment press-cake into it. For low migration inks, dry grind is preferred as abrasion material from the mill beads may contaminate the ink. In a typical manufacturing procedure for inks, the required amount of dry pigment is mixed with a solution of a compound of general formula 1 in an acrylate together with the synergist on a mixer for 15 to 30 minutes to wet out all pigment. The dispersed pigment is then ground on a 3-roll mill until the desired grind specifications are met. The letdown vehicle containing monomer, oligomer, and additives(s), e.g. wax, talc etc., is then added to this mill base and passed over the 3-roll mill once or twice, until the desired particle size and color strength is achieved.

Tack and viscosity of the ink are adjusted by measuring these values on a rheometer and a tack-o-scope and adding the appropriate amounts of monomer(s) to arrive at a finished ink.

An offset ink formulation prepared by the dry grind method, having a viscosity of 20-50Pas@25°C (D = 50 1/s), contains the following ingredients of Table 1.

**Table 1: Example of an Offset Ink Formulation.**

| Material | Weight% |
|---|---|
| Radiation curable composition of the present invention* | 5-60 |
| Tri- and tetra-functional acrylated monomers | 5-70 |
| Acrylated polyester oligomer | 0-20 |
| Additives (misting reducing agent, wax, extenders, polymerization inhibitors) | 2-15 |
| Pigments | 10-25 |

| | |
|---|---|
| *A mixture of component of formula 1, synergist (e.g. triethanol amine), and optionally acrylate monomer or oligomer within the preferred ratio before mentioned and having a viscosity range of 10-40 Pas. | |

A UV-flexo ink formulation, prepared from a mill base, having a viscosity of 0.5-2 Pas@25°C (D = 50 1/s), contains the ingredients of Table 2.

**Table 2: Example of a Flexographic Ink (optionally applied in UV-inert with nitrogen atmosphere to prevent oxygen inhibition of the surface of the ink).**

| Material | Weight% |
|---|---|
| Radiation curable composition of the present invention* | 0.5-30 |
| Di-, tri and tetra-functional acrylated monomers | 15-60 |
| Acrylated polyester oligomers | 2-10 |
| Additives (wetting agents, slip agents, antifoam agents) | 2-10 |
| Pigments | 12-20 |

| | |
|---|---|
| *Mixture of component of formula 1, synergist (e.g. triethanol amine), and optionally acrylate monomer or oligomer within the preferred ratio before mentioned and having a viscosity range of 0.5-40 Pas. | |

A UV-Digital Ink formulation which can be applied by Ink-Jet printers, having a viscosity of 1 to 800 mPa·s @25°C (D = 50 1/s), comprising ingredients of Table 3.

**Table 3: Example of a Digital Ink applied by InkJet printing (optionally under inert atmosphere).**

| Material | Weight% |
|---|---|
| Radiation curable composition of the present invention* | 1-30 |
| Mono-, di-,tri and tetra-functional acrylated monomers | 1-80 |
| Vinyl ether and/or vinyl ether acrylates | 1-80 |
| Dyes or pigment preparations | 3-20 |
| Acrylated epoxy oligomers | 0-40 |
| Additives | 1-15 |

| | |
|---|---|
| *A mixture of component of formula 1, synergist (e.g. triethanol amine), and optionally acrylate monomer or oligomer within the preferred ratio before mentioned and having a viscosity range of 0.5-40 Pas. | |

A UV-screen ink formulation, prepared on a 3-three roll mill, having a viscosity of 15-30 Pas@25°C (D = 50 1/s), contains the ingredients of Table 4.

**Table 4: Example of a UV screen ink.**

| Material | Weight% |
|---|---|
| Radiation curable composition of the present invention* | 5-70 |
| Acrylated di- and tri-functional monomers | 5-30 |
| Acrylated epoxy oligomers | 0-20 |
| N-vinylcaprolactam | 5-20 |
| Additives (silicones antifoam agent, wax) | 2-7 |
| Pigments | 5-10 |

The radiation curable compositions of the present invention provide high curability in varnishes as well as in pigmented inks. By using the highly reactive radiation curable compositions of the present invention in a pigmented lab ink as described in Table 1, it was observed that it is possible to avoid low molecular weight type-I photoinitiator molecules (see Example 43 and Example 44, where two UV-Offset Inks are cured in formulation just using the curable composition of the present invention as photoinitiator). This is especially valuable for low migration inks as the total amount of low-molecular weight photoinitiators can be considerably reduced or even completely omitted.

This clearly exhibits one value of the present invention vs. what is known in the art. Though there are existing technologies to make diffusion hindered photoinitiators (either by high molecular weight or remaining acrylate functionality), the process to form these photoinitiators for LM-applications are much more complex (more than one synthesis step; often complex purification steps are needed) which is limiting the application of such compounds.

### Substrates

The substrate to be printed on may be composed of any typical substrate material such as paper, plastics, metals, and composites. The substrate may be print stock typically used for publications or may be a packaging material in the form of a sheet, a container such as a bottle or can, or the like. In most instances, the packaging material is a polyolefin such as a polyethylene or a polypropylene, a polyester such as polyethylene terephthalate, or a metal such as an aluminum foil, a metalized polyester, or a metal container.

The radiation curable compositions of the present invention are especially suitable for such applications in which low molecular weight molecules e.g. < 500 Daltons, which have a tendency to migrate or are under suspicion of causing health risks, are preferably not present. Such applications are for example the coating of (food) packaging articles where especially small photoinitiator molecules are undesirable. Once the energy curable composition is applied to the packaging material and completely cured, it may be used to contain any kind of liquid or solid material such as foods, drinks, cosmetics, biological materials or specimens, pharmaceuticals, etc.

The present invention has been described in detail, including the preferred embodiments thereof. However, it will be apparent to those of skill in the art, upon consideration of the present disclosure, that the invention is capable of numerous modifications, substitutions, rearrangements of parts and/or improvements without departing from the spirit and scope of the invention.

**The invention is further described by the following numbered paragraphs:**
1. A composition comprising:
   a) one or more aromatic Michael addition donor materials comprising two or more active methylene hydrogens and at least two optionally substituted benzoyl-moieties;
   b) one or more Michael addition acceptor materials;
      wherein the composition is a reaction product which is capable of initiating a free radical polymerization reaction when used in combination with a synergist.
2. The composition of paragraph 1, wherein the synergist is an amine synergist.
3. The composition of paragraph 1, wherein the Michael addition donor material is a dibenzoylmethane or a substituted dibenzoylmethane.
4. The composition of paragraph 2, wherein the dibenzoylmethane or a substituted dibenzoylmethane is 4-Phenyl-dibenzoylmethane (IUPAC name is: 1-(4-Biphenylyl)-3-phenyl-1,3-propanedione).
5. The composition of paragraph 1 which is curable by a UV-dose (sum of UV-A, UV-B and UV-C irradiation) lower than 500mJ/cm² as measured by a Power Puck II from EIT.
6. The composition of paragraph 1, wherein the Michael addition acceptor material is selected either from the group consisting of mono, di-, tri- or multi-functional acrylates or polyester acrylates, or halogen-organic compounds capable of reacting react with the Michael addition donor.
7. The composition of any preceding paragraph wherein the reaction product is a 1,3-diketone of formula 2 (in either or both its keto and/or enol tautomer) 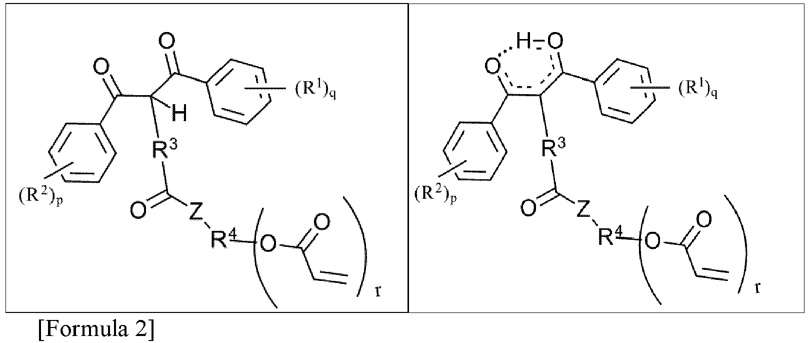
   wherein R¹ and R² are each independently selected from the group consisting of H, halogen, dialkylamino, diarylamino, an optionally substituted straight or branched C1-C12 alkyl, C3-C6-cycloalkyl, C1-C12-alkoxy group;
   p and q are an integer between 0 and 5;
   R³ is selected from the group consisting of C1-C12 alkyl, C1-C12 alkoxy;
   Z is either O resulting in an ester functionality or a NH resulting in amide functionality; and
   R⁴ represents one or more of a member selected from the groups consisting of:
      a) an optionally substituted straight or branched alkyl group containing from 1 to 200 carbon atoms, wherein optionally a CH₂ unit is replaced by a -O- resulting in polyether chain;
      b) a linear or branched alkenyl group containing from 1 to 20 carbon atoms wherein optionally a CH₂ unit is replaced by a -O- resulting in a polyether chain with e.g. vinyl-ether functionality;
      c) a C3-C12-cycloalkyl, wherein optionally a CH₂ unit is replaced by a -O- resulting in a heterocycle;
      d) an optionally substituted aryl group containing from 1 to 12 carbon atoms, wherein optionally a CH-unit is replaced by O;
      e) a C1-C12-alkoxy group;
      f) a hydroxyl group;
      g) a primary, secondary or tertiary amino group;
      h) an amido group;
      i) a carbonyl group of formula -CO-Y where Y represents a hydroxyl group, an -OR⁵ group or an SR⁵ group, where R⁵ represents a C1 to C4 alkyl group;
   having optionally r terminal meth(acrylate)-functionality, which means r is an integer between 0 and 10.
8. The composition of paragraph 5, wherein R³ denotes is a methyl (-CH2-) or ethyl CH₂-CH₂ group.
9. The composition of paragraph 5, wherein R⁴ includes substitution with hydroxyls, and amines.
10. A radiation curable ink or coating composition comprising the composition of any preceding paragraph in combination with a synergist.
11. The ink or coating composition of paragraph 8, wherein the synergist is any hydrogen donor.
12. The ink or coating composition of paragraph 8, further comprising one or more mono-, di- or multifunctional acrylates.
13. The ink or coating composition of paragraph 10, wherein the acrylates are polyester acrylates and methacrylates.
14. The ink or coating composition of any one or more of paragraphs 8-11, comprising ≤ 7wt%, preferably ≤ 5wt% most preferably ≤ than 2wt% of one or more additional photo initiators.
15. The ink or coating composition of paragraph 12, wherein the one or more additional photoinitiators comprise splitting type photoinitiators or sensitizers.
16. A process for providing a printed and cured ink film, comprising applying the ink or coating composition of any one or more of paragraphs 8-11 onto a substrate and curing the ink or coating.
17. The process of paragraph 14, wherein curing is carried out upon exposure to radiation in the region of 200nm - 450nm.
18. The process of paragraph 14, wherein curing is carried out upon exposure to UV-light as emitted by lasers, Light Emitting Diodes (UV-LED), mercury bulbs or doped mercury bulbs.
19. The process of paragraph 14, wherein the resultant cured ink or coating film comprises extractables is below 10 ppm.

The present invention has been described in detail, including the preferred embodiments thereof. However, it will be appreciated that those skilled in the art, upon consideration of the present disclosure, may make modifications and/or improvements on this invention that fall within the scope and spirit of the invention.

### EXAMPLES

The invention is further described by the following non-limiting examples, which further illustrate the invention, and are not intended, nor should they be interpreted to, limit the scope of the invention.

Unless otherwise stated, a reference to "molecular weight" or "average molecular weight" is the number average molecular weight (Mₙ). The molecular weight can be measured by those techniques known in the art such as gel permeation chromatography (GPC - see, below).

### Definitions

- AVO: Avobenzone (1-[*p*-(*tert*-Butyl)phenyl]-3-(*p*-methoxyphenyl)-1,3-propanedione
- CN-132: Aliphatic diacrylate oligomer: A commercial product containing 1,4-butandiol-di-glycidylether-diacrylate (2-Hydroxy-3-{4-[2-hydroxy-3-(vinylcarbonyloxy)propoxy]butoxylpropyl acrylate)
- CN-386: Monofunctional acrylated amine synergist. A commercial product containing: 2-Propenoic acid, (1-methyl-1,2-ethanediyl) bis[oxy(methyl-2,1-ethandiyl)]ester reaction products with diethylamine
- DPGDA: Dipropyleneglycol diacrylate
- DPHA: Dipentaerythritol Hexaacrylate
- DBM: Dibenzoylmethane
- 4-Ph-DBM: 1-(4-Biphenylyl)-3-phenyl-1,3-propanedione
- DBU: 1,8-Diazabicyclo[5.4.0]undec-7-ene
- Genopol AB2: multifunctional aminobenzoate derivative
- GPTA: Glycerol propoxy triacrylate
- HDDA: Hexanediol-diacrylate
- PPTTA: Also known as Laromer PPTTA = alkoxylated pentaerythritol tetraacrylate (Mn = 860 g/mol)
- SR259: Polyethyleneglycol diacrylate

### Test Methods

### Viscosity

Viscosity is measured using a cone and plate type rheometer MCR series (Anton Paar-Physika) following ISO 3219. The measurement geometry for measuring the curable compositions, coatings and inks was of a diameter of 25mm (CP-25) and an angle of 1° for the cone. The measurement was a flow curve in controlled shear rate ranging from D =0 s⁻¹ (zero viscosity), D = 50 s⁻¹ which is given in the table to D = 100 s⁻¹ at 23 °C.

### Solvent resistance rub test following ASTM D4752

This test method is used to determine the film resistance of a cured film to a specified solvent as a measure for the degree of cure. The Solvent Rub Test is performed using 2-butanone (MEK) or isopropyl alcohol (IPA) as the solvent. The MEK resistance or degree of cure applies to the coatings (or inks). The surface of a film is rubbed with cheesecloth or a cotton cloth soaked with the solvent until failure or breakthrough of the film occurs. The type of cheesecloth, the stroke distance, the stroke rate, and approximate applied pressure of the rub have an influence on the test. Even if they are standardized, there is still a slight difference from one operator to the next in this test. In the examples, the test was always done by the same operator with one BYK chart where both the standard and the experimental coating or curable composition were next to each other. By this, a good comparison of the experimental coating to the reference coating is achieved. The rubs are counted as a double rub (one rub forward and one rub backward constitutes a double rub). If no failure or breakthrough occurs after 80 double-rubs, the resistance test was stopped and a >80 is given in the table. The test is done 24 hr. after curing. The curable compositions of the invention may withstand ≥20 double rubs; more preferably ≥30 double rubs, more preferably ≥40 double rubs, more preferably ≥50 double rubs; more preferably ≥60 double rubs, more preferably ≥70 double rubs and most preferably more preferably ≥80 double rubs.

### GPC

This was determined by size exclusion chromatography, specifically gel permeation chromatography (GPC), with a monodisperse polystyrene equivalent molecular weight calibration standard and GPC columns (manufactured by PSS (Polymer Standards Service-USA, Inc), applied column combination: SDV 5µm 1000Å, SDV 5µm 500Å, SDV 5µm 100Å). The flow rate in the columns is 1.0 ml/min, eluent: tetrahydrofuran, column temperature: 40°C, a differential refractive index detector (RI) and a UV-detector (254nm) were used. The dispersibility DISP = (Mw/Mn) is the quotient of molecular weight average and number average and was calculated from the measurement results. The amounts of unreacted material recited in the Examples are determined based on GPC peak area.

### UV-dose measurement by Power Puck II from EIT:

In all curing experiments, the UVA-, UVB-, UVC- and UVV-doses (mJ/cm²) were measured using a UV Power Puck II from EIT Inc., Sterling, VA 20164, USA. Experiments were conducted as follows: The UV-lamp intensity and the belt speed of the curing unit were adjusted before the UV-dose measurement. Then, the UV-dose was measured by putting the power puck on the belt of the curing unit. The measured UVA-, UVB-, UVC-, and UVV- doses are summed up to give the final UV-dose. If not otherwise stated, the following values were obtained:
For conventional UV-light (H-bulb, 35% lamp intensity, 60 m/min belt speed). UV-dose per pass as given by the Power Puck: UVA: 9.8 mJ/cm², UVB: 7.5 mJ/cm², UVC: 3.2 mJ/cm², UVV: 9.0 mJ/cm².

### UV-absorption

Spectra were acquired using a Unicam UV2 UV/VIS spectrophotometer. All absorption spectra were obtained using 1 cm cuvettes, scanning within the 200 - 800 nm range. Solutions of 10-4 mol dm-3 in THF were prepared in a 100 cm³ volumetric flask, and, if required, subsequently diluted by a factor of ten so as to obtain a maximum absorbance of about 1.

### Acetone Double Rubs

The acetone double rub test follows the procedure outlined in ASTM D4752 with the exception that acetone is used instead of methyl-ethyl ketone (MEK).

### Surface Cure

If not stated otherwise, the radiation curable compositions were coated onto cardboard with a 6µm wire applicator (K-bar #2) and UV-cured with a UV-dose of 100-150 mJ/cm² at m/min.

UV-Cure was rated on the condition of the surface as follows:
1 = uncured (wet);
2 = slightly cured (greasy);
3 = curing near-complete (slt. tacky);
4 = cured (tack-free), surface-curing incomplete (smeary surface layer);
5 = cured (tack-free), surface-curing complete (no smear on surface layer)

### Surface Cure by Talc Test and Golden Powder Test

Surface cure of coatings was tested and compared by the talc test before the migration test was done. Talc is placed on the surface after curing at different UV-doses (33/66/99/132 mJ/cm²). The talc that doesn't adhere to the surface is removed and measured for the ΔE of talc discoloration, wherein ΔE is the difference between the optical densities of the reference and the sample. Less discoloration means better surface cure. The analysis is performed only over the black part of a BYK chart.

In order to evaluate curing over white part of a BYK chart and in order to evaluate surface cure of inks, the "Golden Powder" test is used. The test is similar to the surface cure test by talc, but uses a brass powder (Cu,Zn alloy) having average particle size of 35µm. We used a pigment of Eckart: STANDART^{®} Goldbronzepulver L900 Beichgold. The color is E5. The powder is applied on the coating/ink and adheres on the surface. As with the talc, less material adhering on the surface of the ink/coating means better surface cure. The optical density reported are the values obtained for yellow as measured with a Spectroeye spectral photometer from Gretag company.

### Set-Off Test

UV-curing performance of all inks is measured by a so called "set-off' test: Colored prints of UV-cured samples, which were printed with a comparable density, were covered directly after UV-cure with a white counter paper (Incada Exel or silk; 3 x 3 cm²). Then, with a pressure of 10 tons (Specac pellet-press as used in IR-spectroscopy), the printed substrate and the counter paper were pressed together. Directly after the pressure is reached, the print is released and counter paper was removed from the print. The amount of transferred ink on the counter paper was measured by a densitometer. As a rule, the lower the amount of transferred ink, the lower the readings on the densitometer, the better the cure.

Color measurements were done with a Spectoeye spectral photometer from Gretag company.

### Migration analysis:

To determine the extent of migration from packaging materials into food, food simulants are used, not actual foodstuffs. Food simulants are better, due to the simplification of chemical analysis of the migrants. Food simulants vary in terms of their chemical properties, thus representing several different food types: hydrophilic (water-based); lipophilic (fatty foods); and foods with both hydrophilic and hydrophobic properties. For example, migration into an oily food is measured with the food simulant vegetable oil. For example, food simulants such as aqueous ethanol or diluted acetic acid are used for water-based foods and drinks. Dry foods are simulated by a synthetic polymer with defined pore size, Tenax ^{®} (poly (2,6-diphenyl-p-phenylene oxide).

For the migration test, the food contact side of a print (100 cm²) is brought into contact with a food simulant sealed and stored for 10 days at 40 or 60°C with Tenax or 95% ethanol. After 10 days the ethanol was removed from the cells, concentrated to 1ml using an automatic evaporator and the resulting concentrate analysed by GC-MS (method IM304).

The migrants (acrylates) are then determined quantitatively with help of a calibration curve of the pure acrylate monomers. Usually, a migration test in ethanol is regarded as the more severe test and more difficult to pass. The values given in Table 13A are from a migration test in ethanol.

In the present application migration was performed according to EN 1186 Materials and articles in contact with foodstuffs - Plastics, May 2002.

As described in Table 14, the UV-coatings of this invention performed quite well and very low amounts of residual acrylate migrants were detected, i.e. below the specific migration limits.

### Preparation of the reaction products for use in the present invention

In Examples 1-8 different Michael addition reactions between the aromatic Michael addition donor (dibenzoylmethane species) and the Michael addition acceptor (mostly acrylates) are shown. The resulting products are examples for the structure of formula 1.

### Example 1: Synthesis of the addition product of dibenzoylmethane to DPGDA

**Figure 11****:** DBM-adduct to DPGDA in keto-form and its tautomeric enol-forms.

The left structure above represents the keto form, which is in an equilibrium with the enol-form wherein the position of the equilibrium depends on factors including the identity of the solvent. The enol is symmetric with a delocalized double bond, therefore the two mesomeric structures are shown.

Dibenzoylmethane (20.0 g, 89.2 mmol, 1.0 equiv.), DPGDA (54.0 g, 223 mmol, 2.5 equiv.) and DBU (0.400 g, 2.63 mmol, 3 mol%) were added to a round bottom flask and the mixture was stirred at 120 °C for 12 h. Additional DBU (0.400 g, 2.63 mmol, 3 mol%) was added and the reaction mixture was stirred at 120 °C for additional 10 h. The product was obtained as pale-yellow oil (73.0 g, 99%).

Analytical characterization: GPC: Mₙ 500 g/mol, M_{w} 700 g/mol, PDI 1.4. High resolution electrospray ionization mass spectra HRMS (ESI): m/z calculated for [C₂₇H₃₀O₇Na]⁺ 489.1883; found 489.1885. The DBM-adduct is obtained in a mixture with unconsumed acrylate and dibenzoylmethane (<9%). ¹H-NMR (300 MHz, CDCl₃): d (ppm) = 8.01-7.99 (m), 7.58-7.41 (m), 6.43-6.31 (m), 6.17-6.04 (m), 5.50 (m), 5.11 (m), 4.09 (m), 3.54 (m), 2.50 (m), 2.34 (m), 1.24-1.10 (m). ¹³C-NMR (75 MHz, CDCl₃): d (ppm) = 195.9, 185.7, 173.1, 172.7, 165.9, 165.6, 135.8, 133.6, 130.6, 128.9, 128.6, 128.2, 127.1, 74.0, 73.5, 69.4, 67.3, 54.8, 31.7, 31.4, 24.2, 16.5.

### Example 2A: Synthesis of the addition product of dibenzoylmethane to CN-132

CN-132 (50.0 g), dibenzoylmethane (45.4 g, 0.203 mol, 1.0 equiv.) and DBU (1.00 g, 6.57 mmol, 3.2 mol%) were added to a roundbottom flask and the mixture was heated to 120 °C for 3 h. Then, additional CN-132 (14.0 g) and DBU (1.00 g, 6.57 mmol, 3.2 mol%) were added and the mixture stirred for additional 3 h at 120 °C. The Michael addition product was obtained as orange oil (105 g, 95%).

GPC of the product: Mₙ 970 g/mol, M_{w} 1120 g/mol, PDI 1.16; conversion of dibenzoylmethane according to GPC was >99%. UV/Vis in Acetonitril at 20 ppm: lₘₐₓ = 241 nm. HRMS (ESI): m/z calculated for: [C₄₆H₅₀O₁₂Na]⁺ = 817.3192, found: 817.3178. (Diadduct); m/z calculated for: [C₃₁H₃₈O₁₀Na]+ = 593.2355, found: 593.2344 (Monoadduct). ¹H-NMR (300 MHz, CDCl₃): d (ppm) = 8.04-7.90 (m), 7.57-7.40 (m), 6.38 (m), 6.14 (m), 5.84 (m), 5.52 (m), 4.50-3.40 (m), 3.03 (m), 2.55-2.38 (m), 2.05 (m), 1.60 (m). ¹³C-NMR (75 MHz, CDCl₃): d (ppm) = 195.9, 173.2, 135.6, 133.6, 133.0, 128.8, 128.5, 127.9, 71.2, 68.6, 54.7, 37.3, 33.1, 31.4, 26.1, 24.1, 19.2.

### Example 2B: Synthesis of the addition product of avobenzone to CN-132

CN-132 (64.0 g), avobenzone (63.0 g, 0.203 mol, 1.0 equiv.) and DBU (1.00 g, 6.57 mmol, 3.2 mol%) were added to a roundbottom flask and the mixture was heated to 120 °C for 6 h. Then, additional DBU (1.00 g, 6.57 mmol, 3.2 mol%) was added and the mixture stirred for additional 4 h at 120 °C. The Michael addition product was obtained as orange oil (108 g, 84%).

GPC of the product: Mₙ 1250 g/mol, M_{w} 1420 g/mol, PDI 1.14; conversion of avobenzone according to GPC was >99%. UV/Vis in Acetonitril at 20 ppm: lₘₐₓ = 261 nm. HRMS (ESI): m/z calculated for: [C₅₆H₇₀O₁₄Na]⁺ = 989.4656, found: 989.4617. (Diadduct); m/z calculated for: [C₃₆H₄₈O₁₁Na]+ = 679.3087, found: 679.3088 (Monoadduct).¹H-NMR (300 MHz, CDCl₃): d (ppm) = 8.01-7.91 (m), 7.44-7.41 (m), 6.92-6.89 (m), 5.41 (m), 4.25-3.40 (m), 2.60-2.25 (m), 1.60 (m), 1.28 (m). ¹³C-NMR (75 MHz, CDCl₃): d (ppm) = 195.5, 194.6, 173.3, 163.8, 157.3, 133.1, 131.0, 128.5, 125.8, 125.4, 114.0, 113.6, 113.5, 71.2, 68.5, 65.6, 64.1, 55.4, 54.7, 35.0, 31.5, 30.9, 26.1, 24.2.

Test-Coatings (6µm) prepared from Example 2A and Example 2B cured with a standard mercury bulb (133mJ/cm²).

| **Material:** | **Test-Coating CN132-DBM** | **Test-Coating CN132-AVO** |
|---|---|---|
| Sartomer CN104D66: | 25% | 25% |
| GPTA: | 50% | 50% |
| Triethanolamine (85%) CN-132-DBM | 10% | 10% |
| CN-132-AVO: | 15% | 15% |
| **Total:** | 100% | 100% |
| **Appearance of the coating:** | solution | solution |
| **Curing Performance:** | 4-5 | 5 |
| **Surface Cure:** | good | good |
| **MEK double rubs:** | 40 | 15 |

### Example 3: Synthesis of the addition product of dibenzoylmethane to HDDA

Dibenzoylmethane (20.0 g, 89.2 mmol, 1.0 equiv.), HDDA (50.5 g, 223 mmol, 2.5 equiv.) and DBU (0.400 g, 2.63 mmol, 3 mol%) were added to a round bottom flask and the mixture was stirred at 120 °C for 8 h. The product was obtained as pale-yellow oil (69.1 g, 97%).

Analytical characterization: GPC: Mₙ 470 g/mol, M_{w} 660 g/mol, PDI 1.4. The DBM-adduct is obtained in a mixture with unconsumed acrylate. The amount of unconsumed dibenzoylmethane is <7% according to GPC. UV/Vis in Acetonitril at 20 ppm: lₘₐₓ = 246 nm. HRMS (ESI): m/z calculated for: [C₄₂H₄₂O₈Na]⁺ = 697.2770, found: 697.2824 (Di-adduct); m/z calculated for: [C₂₇H₃₀O₆Na]+ = 473.1935, found: 473.1973 (Mono-adduct). ¹H-NMR (300 MHz, CDCl₃): d (ppm) = 8.01-7.98 (m), 7.55-7.40 (m), 6.39-6.34 (m), 6.14-6.03 (m), 5.80-5.76 (m), 5.52 (m), 4.14-4.05 (m), 2.50-2.34 (m), 1.65-1.35 (m). ¹³C-NMR (75 MHz, CDCl₃): d (ppm) = 195.8, 185.6, 173.3, 166.1, 135.7, 133.5, 132.3, 130.4, 128.8, 128.4, 127.1, 93.0, 64.3, 54.8, 31.4, 28.4, 25.5, 24.2.

### Example 4: Synthesis of the addition product of dibenzoylmethane to PPTTA (DBM-PPTTA), (~1.2 DBM units per PPTTA)

Dibenzoylmethane (20.0 g, 89.2 mmol, 1.0 equiv.), alkoxylated pentaerythritol tetraacrylate PPTTA (51.1 g, 92.9 mmol; 1.04 equiv.) and DBU (0.6 g, 3.9 mmol, 4.4 mol%) were added to a round bottom flask and the mixture was stirred at 120 °C for 7 h. The product was obtained as yellow oil (57.3 g, 80%).

Analytical characterization: GPC: Mₙ 960 g/mol, M_{w} 1350 g/mol, PDI 1.4. The DBM-adduct is obtained in a mixture with unconsumed acrylate. The amount of unconsumed dibenzoylmethane is <2% according to GPC. UV/Vis in Acetonitril at 20 ppm: lₘₐₓ = 246 nm. ¹H-NMR (300 MHz, CDCl₃): d (ppm) = 8.01-7.99 (m), 7.55-7.44 (m), 6.38 (m), 6.25 (m), 5.84-5.80 (m), 5.50 (m), 4.22 (m), 3.62 (m), 2.66 (m), 2.53 (m), 2.35 (m). ¹³C-NMR (75 MHz, CDCl₃): d (ppm) = 195.9, 173.2, 166.1, 135.7, 133.6, 128.9, 128.6, 128.2, 71.0, 70.5, 69.0, 63.6, 54.8, 31.4, 24.1.

### Example 4B) Addition of DBM to PPTTA (~2.4 DBM units per PPTTA)

Dibenzoylmethane (40.0 g, 178 mmol, 1.0 equiv.), PPTTA (51.1 g) and DBU (1.0 g, 6.60 mmol, 3.7 mol%) were added to a round bottom flask and the mixture was stirred at 120 °C for 5 h. Then, additional DBU (0.5 g, 3.30 mmol, 1.8 mol%) was added and the mixture was heated to 120°C for 1 h. The product was obtained as yellow oil (78 g, 85%). Analytical characterization: GPC: Mₙ 1650 g/mol, M_{w} 2170 g/mol, PDI 1.3 The amount of unconsumed dibenzoylmethane is <1% according to GPC.

### Example 4C) Addition of DBM to PPTTA (~3.1 DBM units per PPTTA)

Dibenzoylmethane (50.0 g, 223 mmol, 1.0 equiv.), PPTTA (50.0 g) and DBU (1.5 g, 9.85 mmol, 4.4 mol%) were added to a round bottom flask and the mixture was stirred at 120 °C for 5 h. The product was obtained as yellow oil (86.0 g, 85%).

### Analytical characterization: GPC: Mₙ 1750 g/mol, M_{w} 2270 g/mol, PDI 1.3

The amount of unconsumed dibenzoylmethane is <1% according to GPC.

### Example 5: Synthesis of the addition product of avobenzone (4-tert.-butyl-4'-methoxydibenzoylmethane) to PPTTA

Avobenzone (20.0 g, 89.2 mmol, 1.0 equiv.), PPTTA (51.1 g) and DBU (0.6 g, 3.9 mmol, 4.4 mol%) were added to a round bottom flask and the mixture was stirred at 120 °C for 7 h. The product was obtained as yellow oil (57.3 g, 80%).

Analytical characterization: GPC: Mₙ 1375 g/mol, M_{w} 1655 g/mol, PDI 1.2. The adduct is obtained in a mixture with unconsumed acrylate. The amount of unconsumed avobenzone is about 12%.

### Example 6: Synthesis of the addition product of dibenzoylmethane to GPTA (DBM-GPTA)

Dibenzoylmethane (20.0 g, 89.2 mmol, 1.0 equiv.), GPTA (38.2 g) and DBU (0.600 g, 3.9 mmol, 4.4 mol%) were added to a round bottom flask and the mixture was stirred at 120 °C for 19 h. The product was obtained as brown oil (56.0 g, 80%).

Analytical characterization: GPC: Mn 760 g/mol, M_{w} 1050 g/mol, PDI 1.38. The DBM-adduct is obtained in a mixture with unconsumed acrylate. The amount of unconsumed dibenzoylmethane is <3% according to GPC. UV/Vis in Acetonitril at 20 ppm: lₘₐₓ = 246 nm. HRMS (ESI): m/z calculated for: [C₃₆H₄₄O₁₁Na]+ = 675.2775, found: 675.2763 (Monoadduct). ¹H-NMR (300 MHz, CDCl₃): d (ppm) = 8.01-7.98 (m), 7.58-7.40 (m), 6.41-6.36 (m), 6.14-6.05 (m), 5.81-5.77 (m), 5.53 (m), 5.09 (m), 3.50-3.46 (m), 2.51-2.35 (m), 1.25-1.10 (m). ¹³C-NMR (75 MHz, CDCl₃): d (ppm) = 195.9, 172.7, 165.6, 135.7, 133.6, 130.6, 128.9, 128.6, 73.7, 72.7, 71.3, 69.9, 54.8, 31.7, 24.2, 16.7.

### Example 7: Synthesis of the addition product of dibenzoylmethane to ethyl bromoacetate (Ethyl 3-benzoyl-4-oxo-4-phenylbutyrate)

Dibenzoylmethane (20.0 g, 89.2 mmol, 1.0 equiv.), K₂CO₃ (0.600 g, 3.9 mmol, 4.4 mol%) and tetrahydrofuran (100 mL) were added to a round bottom flask. The mixture was stirred at room temperature and ethyl bromoacetate (14.9 g, 89.2 mmol, 1.0 equiv.) was added. The mixture was stirred under reflux for 9 h. After cooling down to room temperature, water (50 mL) was added and the organic compounds were extracted with EtOAc. The organic phase was washed with water and dried over MgSO₄. The solvents were removed under reduced pressure and the product was obtained as brown solid (21.2 g, 77%).

Analytical characterization: melting point: 77°C (lit.: 82-83°C; Journal of the Chemical Society, Transactions (1912), 101, 989-98). HRMS (ESI): m/z calculated for: m/z calculated for: [C₁₉H₁₈O₄Na]+ = 333.1097, found: 333.1083. ¹H-NMR (300 MHz, CDCl₃): d (ppm) = 7.98 (d, 4H), 7.57 (t, 2H), 7.45 (t, 4H), 5.80 (t, 1H), 4.15 (q, 2H), 3.09 (d, 2H), 1.23 (t, 3H). ¹³C-NMR (75 MHz, CDCl₃): d (ppm) = 195.2, 171.3, 135.4, 133.7, 128.9, 128.6, 61.2, 52.3, 33.5, 14.0.

### Example 8: Synthesis of the addition product of dibenzoylmethane to CN-386

Dibenzoylmethane (20.0 g, 89.2 mmol, 1.0 equiv.), CN-386 (93.4 g, 223 mmol, 2.5 equiv.) and DBU (0.400 g, 2.6 mmol, 3 mol%) were added to a round bottom flask and the mixture was stirred at 120 °C for 7 h. Additional DBU (0.400 g, 2.6 mmol, 3 mol%) was added and the mixture further stirred at 120 °C for 13 h. The product was obtained as yellow oil (111 g, 97%).

Analytical characterization: GPC: Mₙ 300 g/mol, M_{w} 500 g/mol, PDI 1.67. The DBM-adduct is obtained in a mixture with unconsumed acrylate (-50%). The conversion of dibenzoylmethane is about 50% according to GPC.

**Preparation of curable compositions / test-coatings using DBM-adducts as PIs for**

### radical curing and optionally water.

Preparation and evaluation of test-coatings using the DBM-adduct of Example 1 in comparison to DBM itself:
Different test coatings were prepared by stirring and mixing the components at room temperature. The amounts of each components used for the compositions are shown in the table below. The coatings were applied on Byk-charts with a wet-film thickness of about 6 µm and cured under conventional UV-light (H-bulb, 35% lamp intensity, 60 m/min belt speed, 3 passes). UV-dose per pass: UVA: 11.1 mJ/cm², UVB: 8.3 mJ/cm², UVC: 3.4 mJ/cm², UVV: 10.6 mJ/cm².

UV-Cure was rated on the condition of the surface as follows:
1 = uncured (wet)
2 = slightly cured (greasy)
3 = curing near-complete (slt. tacky)
4 = cured (tack-free), surface-curing incomplete (slt. smeary surface layer)
5 = cured (tack-free), surface-curing complete (no smear on surface layer)

**Table 5: Composition and curing performance of different coatings with DBM itself (Comparative Ex. 10) and product of Example 1 and the need for a synergist (no synergist in Ex. 11; with synergist in Ex. 12).**

| Material | Ex. 9 (Inv.) | Ex. 10 (Comp.) | Ex. 11 (Comp.) | Ex. 12 (Inv.) |
|---|---|---|---|---|
| Example 1 | 10.0 | | 5.0 | 5.0 |
| Dibenzoylmethane (DBM) | | 10.0 | | |
| PPTTA | 67.4 | 67.4 | 82.4 | 77.4 |
| Triethanolamine (85%) in water | 10.0 | 10.0 | 0.0 | 5.0 |
| Water | 10.0 | 10.0 | 10.0 | 10.0 |
| Aerosol OT 75 | 2.6 | 2.6 | 2.6 | 2.6 |
| Total | 100 | 100 | 100 | 100 |
| Appearance of the coating | Dispersion | Dispersion | Dispersion | dispersion |
| Curing performance | 4 | 1 | 1 | 4 |
| Film quality after curing | Transparent | Transparent | Transparent | transparent |
| Acetone double rubs (immediately after curing) | >100 | <1 | <1 | ~25 |

Table 5 shows how, first, aqueous dispersions were prepared as test coatings. The addition of water was thought to help to decrease the oxygen inhibition and to improve the curing of the coating under actinic light irradiation (H-bulb). The product obtained from Example 1 does not work as PI without an amine synergist (Example 11). In combination with the amine synergist triethanolamine (Examples 9 & 12), the product of Example 1 has PI-functionality. DBM itself and triethanolamine (Example 10) do not work as PIs.

The aqueous dispersion Examples 9-12 were not very stable and showed separation of the aqueous and organic phase.

Therefore no additional water was added (some water is always present in triethanolamine) to Examples 13-16. Examples 13-16 were stable and cured well after treatment with UV-light. In both Examples 13 and 16, a combination of Example 1 and the amine synergist triethanolamine were used. The combination of DBM itself and triethanolamine (Example 14) or of the product obtained as described in Example 1 alone (Example 15, no amine) did not act as PIs and the coatings were not cured. All experiments clearly show that the DBM-adduct as obtained in Example 1 works as a Norrish Type II photoinitiator. Furthermore, a Norrish type II reactivity of DBM can be excluded and also a Norrish Type I reactivity of the product obtained in Example 1 can be excluded.

**Table 6: Composition and curing performance of different coatings with DBM or DBM-DPGDA.**

| Material | Ex. 13 (Inv.) | Ex. 14 (Comp.) | Ex. 15 (Comp.) | Ex. 16 (Inv.) |
|---|---|---|---|---|
| Example 1 | 10.0 | | 5.0 | 5.0 |
| Dibenzoylmethane (DBM) | | 10.0 | | |
| PPTTA | 80.0 | 80.0 | 95.0 | 90.0 |
| Triethanolamine (85%) in water | 10.0 | 10.0 | 0.0 | 5.0 |
| Total | 100 | 100 | 100 | 100 |
| Appearance of the coating | solution | dispersion | Solution | solution |
| Curing performance | 4 | 1 | 1 | 4 |
| Film quality after curing | transparent | transparent | Transparent | transparent |
| Acetone double rubs (immediately after curing) | >100 | <1 | <1 | >100 |

Preparation and evaluation of test-coatings with different DBM-adducts and comparison to a commercial coating.

Different test coatings with DBM-adducts as PIs were prepared and the compositions are shown in Table 7. The coatings were applied on Byk-charts with a wet-film thickness of 6 µm and cured under conventional UV-light (H-bulb, 35% lamp intensity, 60 m/min belt speed, 4 passes). UV-dose per pass: UVA: 9.8 mJ/cm², UVB: 7.5 mJ/cm², UVC: 3.2 mJ/cm², UVV: 9.0 mJ/cm².

The curing performance of the coatings was evaluated according to the aforementiond 1-5 rating system.

**Table 7: DBM-adducts as PI for radical curing of curable compositions/coatings and comparison with a reference coating where benzophenone is used.**

| Material | Control | Ex. 17 (Inv.) | Ex. 18 (Inv.) | Ex. 19 (Inv.) |
|---|---|---|---|---|
| Polyesteracrylate in acrylate monomer* | 25.0 | 25.0 | 25.0 | 25.0 |
| Trifunctional Acrylate Monomer** | 56.0 | 49.0 | 49.0 | 49.0 |
| Ebecryl P116 (Amino-acrylate Synergist) | 10.0 | 10.0 | 10.0 | 10.0 |
| Benzophenone (Omnirad BP) | 8.0 | | | |
| Darocur 1173 (Splitting (Norrish type 1) PI) | 1.0 | 1.0 | 1.0 | 1.0 |
| Example 2 | | 15.0 | | |
| Example 1 | | | 15.0 | |
| Example 3 | | | | 15.0 |
| Total | 100 | 100 | 100 | 100 |
| Appearance of the coating | solution | solution | Solution | solution |
| Viscosity (50/s) | 273 mPas | 540 mPas | 340 mPas | 280 mPas |
| Curing performance | 5 | 4 | 4 | 4 |
| Film quality after curing | transparent | transparent | transparent | transparent |
| IPA double rubs (after 1 day) | >80 | >80 | >80 | >80 |
| MEK double rubs (after 1 day) | >80 | 62 | >80 | 56 |

| | | | | |
|---|---|---|---|---|
| *For example, CN104D66 of Sartomer, France. Alternatively an inert polyester (e.g. based on recycled PET, see in an acrylate monomer (e.g. DPGDA, GPTA or PPTTA) may be used. An example for polyesteracrylate. ** For example, GPTA available from Allnex company, Belgium as tradename OTA480 | | | | |

Different DBM-adducts were investigated to replace Omnirad BP, which is used as a PI in the Control Example. In contrast to benzophenone (Omnirad BP), the products of Examples 17-19 in Table 7 all have at least one remaining acrylate functionality and are therefore postulated to result in lower observed levels of migration than the benzophenone, due to the higher molecular weight. In particular, the molecular weights of the DBM-adducts are about twice as high as the molecular weight of Omnirad BP.

Therefore, 15% of the PI was used instead of 8% Omnirad BP. The Control Example where benzophenone is used cured slightly better than Examples 17-19. Example 18 with the product obtained of Example 1 had the best performance of the new developed PIs and further experiments were conducted with product of Example 1 shown in Table 8.

In order to investigate the influence of the PI-concentration on the curing performance, the concentration of the product of example 1 (DBM-DPGDA) was increased. However, an increase of the PI-concentration was detrimental to the curing performance. Especially the MEK (Methyl ethyl ketone) resistance was reduced. It seems, that a higher PI concentration can lead to shorter polymer chains, which are easily rubbed away. Surface cure was not essentially improved by increasing the PI concentration.

**Table 8: Increasing the concentration of the product obtained in Example 1 as PI and comparison with a commercial reference coating.**

| Material | Control | Ex. 20 (Inv.) | Ex. 21 (Inv.) | Ex. 22 (Inv.) | Ex. 23 (Inv.) |
|---|---|---|---|---|---|
| Polyesteracrylate in acrylate monomer* | 25.0 | 25.0 | 25.0 | 25.0 | 25.0 |
| Trifunctional Acrylate Monomer** | 56.0 | 49.0 | 44.0 | 39.0 | 34.0 |
| Ebecryl P116 | 10.0 | 10.0 | 10.0 | 10.0 | 10.0 |
| Omnirad BP | 8.0 | | | | |
| Darocur 1173 | 1.0 | 1.0 | 1.0 | 1.0 | 1.0 |
| Example 1 | | 15.0 | 20.0 | 25.0 | 30.0 |
| Appearance of the coating | solution | solution | solution | solution | solution |
| Total | 100 | 100 | 100 | 100 | 100 |
| Viscosity (50/s) | 273 mPas | 340 mPas | 355 mPas | 364 mPas | 376 mPas |
| Curing performance | 5 | 4 | 4 | 4 | 4 |
| Film quality after curing | transparent | transparent | transparent | transparent | transparent |
| IPA double rubs: (after 1 day) | >80 | >80 | >80 | >80 | >80 |
| MEK double rubs: (after 1 day) | >80 | >80 | 48 | 78 | 52 |

| | | | | | |
|---|---|---|---|---|---|
| * For example, CN104D66 (Sartomer). Alternatively an inert polyester (e.g. based on recycled PET, see in an acrylate monomer (e.g. DPGDA, GPTA or PPTTA) may be used. An example for polyesteracrylate ** For example, GPTA available from Allnex as tradename OTA480 | | | | | |

Preparation and evaluation of test-coatings with DBM-adduct of Example 4 and comparison to a reference coating where Benzophenone is used as PI.

Different curable compositions were tested using the product obtained of Example 4 as PI. The weight-% used to make the compositions are shown in Table 9. The coatings were applied on Byk-charts with a wet-film thickness of 6 µm and cured under conventional UV-light (H-bulb, 35% lamp intensity, 60 m/min belt speed, 4 passes). UV-dose per pass: UVA: 10.5 mJ/cm², UVB: 8.3 mJ/cm², UVC: 3.6 mJ/cm², UW: 10.0 mJ/cm².

The curing performance of the coatings was evaluated according to the aforementiond 1-5 rating system.

The DBM-PPTTA adduct (of Example 4) improves the curing properties of the coating in comparison to DBM-DPGDA (see, Curing Performance row). An explanation may be the higher number of remaining polymerizable acrylate groups in its molecular structure. After curing, almost no smear was observed at the coatings' surface (Examples 24-27, Table 9). Again, increasing the PI concentration in the coating does not improve the curing performance. Also the solvent resistance was not acceptable. By changing the amine synergist from Ebecryl P116 to triethanolamine, the performance of the coating was massively improved (Example 28). The surface cure was perfect after actinic light irradiation. Furthermore, the solvent resistance is now comparable to the reference coating.

**Table 9: Increasing the concentration of DBM-PPTTA (Example 4) and investigation of different amine synergists.**

| Material | STD | Ex. 24 (Inv.) | Ex. 25 (Inv.) | Ex. 26 (Inv.) | Ex. 27 (Inv.) | Ex. 28 (Inv.) |
|---|---|---|---|---|---|---|
| Polyesteracrylate in acrylate monomer* | 25.0 | 25.0 | 25.0 | 25.0 | 25.0 | 25.0 |
| Trifunctional Acrylate Monomer** | 56.0 | 49.0 | 44.0 | 39.0 | 34.0 | 49.0 |
| Ebecryl P116 | 10.0 | 10.0 | 10.0 | 10.0 | 10.0 | |
| Triethanolamine (85%) in water | | | | | | 10.0 |
| Omnirad BP | 8.0 | | | | | |
| Darocur 1173 | 1.0 | 1.0 | 1.0 | 1.0 | 1.0 | 1.0 |
| DBM-PPTTA (Example 4) | | 15.0 | 20.0 | 25.0 | 30.0 | 15.0 |
| Total | 100 | 100 | 100 | 100 | 100 | 100 |
| Appearance of the coating | solution | solution | solution | solution | solution | solution |
| Viscosity (50/s) | 273 mPas | 628 mPas | 870 mPas | 1040 mPas | 1330 mPas | 750 mPas |
| Curing performance | 5 | 4-5 | 4-5 | 4-5 | 4-5 | 5 |
| Film quality after curing | transparent | transparent | transparent | transparent | transparent | transparent |
| IPA double rubs (immediately after curing) | >80 | 50 | >80 | >80 | >80 | >80 |
| MEK double rubs (immediately after curing) | >80 | 7 | 13 | 15 | 11 | >80 |

| | | | | | | |
|---|---|---|---|---|---|---|
| * For example, CN104D66 (Sartomer). Alternatively an inert polyester (e.g. based on recycled PET, see in an acrylate monomer (e.g. DPGDA, GPTA or PPTTA) may be used. An example for polyesteracrylate ** For example, GPTA available from Allnex, as tradename OTA480 | | | | | | |

Preparation and evaluation of test-coatings with DBM-adduct DBM-GPTA and comparison to a commercial coating.

Different test coatings with DBM-GPTA as PI were prepared and compositions are shown in the table below. The coatings were applied on Byk-charts with a wet-film thickness of about 6 µm and cured under conventional UV-light (H-bulb, 35% lamp intensity, 60 m/min belt speed, 4 passes). UV-dose per pass: UVA: 11.8 mJ/cm², UVB: 9.4 mJ/cm², UVC: 4.0 mJ/cm², UVV: 11.4 mJ/cm².

The curing performance of the coatings was evaluated according to the aforementiond 1-5 rating system.

Also, the DBM-GPTA (DBM-GPTA - Example 6) adduct was investigated (Examples 29-33) as PI. The curing performance was comparable to the DBM-PPTTA adduct and no improvement was observable. Some yellowing is observed because DBM-GPTA is a dark brown oil. DBM-GPTA was not considered for further investigations since the performance is not better than the performance of DBM-PPTTA (Example 4).

**Table 10: Increasing the concentration of DBM-GPTA (Example 6) and investigation as PI.**

| Material | Ref. Ex. | Ex. 29 (Inv.) | Ex. 30 (Inv.) | Ex. 31 (Inv.) | Ex. 32 (Inv.) | Ex 33 (Inv.) |
|---|---|---|---|---|---|---|
| Polyesteracrylate in acrylate monomer* | 25.0 | 25.0 | 25.0 | 25.0 | 25.0 | 25.0 |
| Trifunctional Acrylate Monomer** | 56.0 | 49.0 | 44.0 | 39.0 | 34.0 | 49.0 |
| Ebecryl P116 | 10.0 | 10.0 | 10.0 | 10.0 | 10.0 | |
| Triethanolamine (85%) in water | | | | | | 10 |
| Omnirad BP | 8.0 | | | | | |
| Darocur 1173 | 1.0 | 1.0 | 1.0 | 1.0 | 1.0 | 1.0 |
| DBM-GPTA | | 15.0 | 20.0 | 25.0 | 30.0 | 15 |
| Total | 100 | 100 | 100 | 100 | 100 | 100 |
| Appearance of the coating | solution | solution | solution | solution | solution | Solution |
| Viscosity (50/s) | 273 mPas | 683 mPas | 850 mPas | 1140 mPas | 1470 mPas | 720mPas |
| Curing performance | 5 | 4-5 | 4-5 | 4-5 | 4-5 | 5 |
| Film quality after curing | transparent | transparent | yellowing | yellowing | yellowing | Transparent |
| IPA double rubs (immediately after curing) | >80 | 70 | >80 | >80 | 50 | >80 |
| MEK double rubs (immediately after curing) | >80 | 16 | 9 | 4 | 6 | >80 |

| | | | | | | |
|---|---|---|---|---|---|---|
| * For example, CN104D66 (Sartomer). Alternatively an inert polyester (e.g. based on recycled PET, see in an acrylate monomer (e.g. DPGDA, GPTA or PPTTA) may be used. An example for polyesteracrylate ** For example, GPTA available from Allnex as tradename OTA480 | | | | | | |

Table 11 shows the benefit to surface-cure by the presence of small amounts (just 1 wt%) of a splitting type photoinitiator, such as for example Darocure 1173 (2-Hyroxy-2-methylpropiophenone) slightly improves MEK-resistance. This example demonstrates that the combination of the inventive composition of the invention with low amounts of known photoinitiators can further improve the properties of the cured films/products obtained.

**Table 11: Improvement/Worsening of Surface Cure of the Inventive Coatings in the presence/absence of e.g. Darocur 1173**

| Material | Ex. 34 (w/1173) | Ex. 35 (w/o 1173 |
|---|---|---|
| Polyesteracrylate in acrylate monomer* | 25.0 | 25.0 |
| Trifunctional Acrylate Monomer** | 49.0 | 50.0 |
| Triethanolamine (85%) in water | 10 | 10 |
| Darocur 1173 | 1.0 | |
| DBM-PPTTA (Example 4) | 15 | 15 |
| Total | 100 | 100 |
| Appearance of the coating | solution | solution |
| Viscosity (50/s) | 750 mPas | 720mPa·s |
| Curing performance | 5 | 4 |
| Film quality after curing | transparent | Transparent |
| IPA double rubs (directly after curing) | >80 | >80 |
| MEK double rubs (directly after curing) | >80 | 70 |

| | | |
|---|---|---|
| * For example, CN104D66 (Sartomer). Alternatively an inert polyester (e.g. based on recycled PET, see in an acrylate monomer (e.g. DPGDA, GPTA or PPTTA) may be used. An example for polyesteracrylate ** For example, GPTA Allnex company, as tradename OTA480 | | |

### Curing Performance of Ethyl 3-benzoyl-4-oxo-4-phenylbutyrate (Example 7)

Table 12 shows the formulation of an electron curable (EC) coating employing a candidate of formula 1 with r=0, which means there are no remaining (meth)acrylate groups. The curing of the coating is complete, the surface is not smeary. However, the MEK resistance is limited. Concentrations of more than 10wt% of the Ethyl 3-benzoyl-4-oxo-4-phenylbutyrate in the formulation are not possible due to solubility issues. Therefore, acrylation (also for lower migration) is desired, but as shown in this example not necessarily needed.

**Table 12: Demonstrating Example 7 as a PI**

| Material | Ex. 36 (Inv.) |
|---|---|
| Polyesteracrylate in acrylate monomer* | 25.0% |
| Trifunctional Acrylate Monomer** | 54.0% |
| Triethanolamine (85%) in water | 10% |
| Darocur 1173 | 1.0% |
| Ethyl 3 -benzoyl-4-oxo-4-phenylbutyrate (Ex. 7) | 10% |
| Appearance of the coating | solution |
| Viscosity (50/s) | 460 mPas |
| Curing performance | 5 |
| Film quality after curing | transparent |
| IPA double rubs (immediately after curing) | >80 |
| MEK double rubs (immediately after curing) | 20 |

| | |
|---|---|
| * For example, CN104D66 (Sartomer). Alternatively an inert polyester (e.g. based on recycled PET) in an acrylate monomer (e.g. DPGDA, GPTA or PPTTA) may be used. Examples include polyesteracrylate. ** For example, GPTA available from Allnex as tradename OTA480 | |

Examples of an inks prepared as a UV-Offset inks with just the inventive curable composition as PI-species.

### Testing the curability of two UV-Offset Inks (magenta and black) containing the inventive composition.

An electron curable (EB) Offset Basis Magenta and Black Ink (commerically available Sun Beam Advanced inks) were used as the starting points for Examples 37 (magenta) and Example 38 (black). Since EB inks are free of conventional PI, tests cold be performed just using the inventive compositions of the present invention. Virtually any EB offset ink could be used for this experiment, so long as it does not contain a photinitiator (PI).

The PI-free Offset Basis Inks were rigorously mixed with 10wt% triethanolamine (containing 15% water) and 10wt-% DBM-PPTTA (Example 4) in order to produce Examples 37 and 38 homogenous paste inks. The inks were allowed to settle over night.

The Example 37 and 38 inks were printed on paper with typcial optical densities using a Prüfbau printability testing system, which is an offset powerful laboratory-scale measurement and analysis tools that emulate the full-scale chemical-physical printing process.

The paper-stripe was cured using a ladder experiment, wherein each pass provided a UV-dose of 33mJ/cm² to the prints. The prints were almost dry after 4 passes, demonstrating that the inventive compositions (here DBM-PPTTA of Example 4) can cure not only EC coatings but also pigmented or dyed inks. The prints were analyzed to assess the suitability of the inventive curable compositions for use in low-migration applications.

### Preparation of DBM-derivates suitable for LED-curing

Derivatives based on the structure of Example 1 may work for UV-LED. The reaction scheme below shows the synthesis of a dimethyl-amino substituted DBM.

**Figure 12****:** Preparation of a dimethyl-amino substituted DBM.

An advantage of this synthesis strategy is the use of two registered compounds: acetophenone and EDB. EP0114607B1 and EP1349823B1 are two patents describing the synthesis of such substituted dibenzoylmethanes.

### Example 39: Michael addition of DBM to PEG200DA (e.g. SR259 commercially available of Sartomer (Arkema group)).

Dibenzoylmethane (289 g, 1.29 mol, 1.0 equiv.), polyethyleneglycol diacrylate (SR259, 300 g) and diazabicycloundecene (5.0 g, 32.8 mmol, 2.5 mol%) were added to a 4 necked round bottom flask, equipped with a stirrer, a condenser and a thermometer. The equivalents of DBM to PEGDA are such that a di-adduct of DBM is formed (see, scheme below). An oil bath was used for heating the reaction mixture. The mixture was heated to 100°C for 5 hr. and then additional diazabicycloundecene (1.0 g, 6.57 mmol, 0.5 mol%) was added. The mixture was heated at 100°C for 1 hr. and cooled down to room temperature. The product was obtained as orange/brown oil (584 g, 98%).

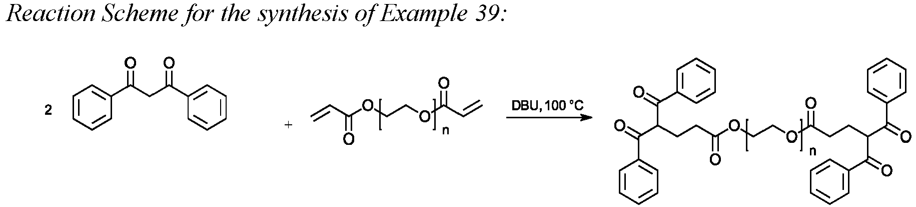

For illustration purposes: SR259 is in fact only about 1.5-functional with some remaining OH-functionality which wasn't acrylated.

GPC: Mₙ 850 g/mol, M_{w} 970 g/mol, PDI 1.14, The amount of impurities or unreacted dibenzoylmethane is <1% according to GPC analysis.

UV Nis in Acetonitrile at 20 ppm: lₘₐₓ = 246 nm, small shoulder at 281 nm.

HRMS (ESI): m/z calculated for: [C₄₆H₅₀O₁₂Na]⁺ = 817.3192, found: 817.3165 (Di-adduct); m/z calculated for: [C₃₁H₃₈O₁₀Na]+ = 593.2356, found: 593.2340 (Monoadduct). ¹H-NMR (300 MHz, CDCl₃): d (ppm) = 8.01-7.99 (m), 7.56-7.54 (m), 7.45-7.40 (m), 6.43-6.38 (m), 6.15-6.08 (m), 5.81-5.71 (m), 5.56-5.51 (m), 4.30-4.21 (m), 3.65-3.55 (m), 2.55-2.54 (m), 2.36-2.34 (m). ¹³C-NMR (75 MHz, CDCl₃): d (ppm) = 195.8, 173.1, 135.6, 133.5, 130.9, 128.8, 128.5, 70.4, 68.9, 63.6, 54.7, 31.4, 24.1.

### Example 39A

Michael addition of -one equivalent DBM to PEG200DA (e.g. SR259 commercially available of Sartomer (Arkema group)). The relative ratio of DBM to acrylate is different in this example relative to the ratio of Example 39, resulting in remaining acrylate groups. Dibenzoylmethane (43.44 g, 0.19 mol, 1.0 equiv.), polyethyleneglycol diacrylate (SR259, 86.88 g) and diazabicycloundecene (1.5 g) were added to a 4 necked round bottom flask, equipped with a stirrer, a condenser and a thermometer. An oil bath was used for heating the reaction mixture. The mixture was heated to 100°C for 5 hr. and then additional diazabicycloundecene (1.0 g) was added. The mixture was heated at 100 °C for 1 hr. and cooled down to room temperature. The product was obtained as an amber colored oil (128 g).
GPC: Mn = 799 g/mol
Viscosity: 2.74 Pa s @25°C, shear rate 50/s.

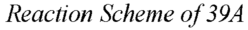

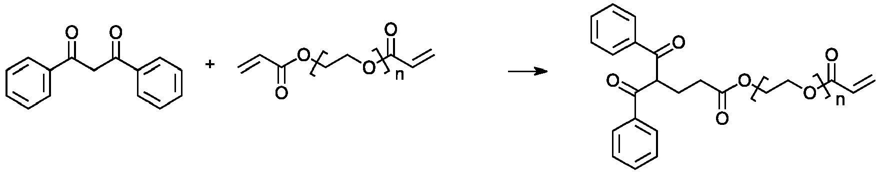

For illustration purposes: SR259 is in fact only about 1.5-functional with some remaining OH-functionality which wasn't acrylated.

The different molar ratios of DBM to PEGDA in Examples 39 and 39A demonstrate how the number of residual acryalte groups present in the reaction product can be modified. Thus,. In Example 39 all acrylate functionality reacts with the DBM. However, it is important to accurately match the ratios to ensure that no dibenzoylmethane starting material remains. In Example 39A, a reduced ratio of DBM:PEDGA is used, which results in acrylate functionality being retained in the reaction product (representative of formula 1) for use in this invention.

### Example 39B: Preparation of DPHA-DBM (see also: US9340644B2)

Dibenzoylmethane (37.5 g, 0.167 mol, 1.0 equiv.), DPHA (112.5 g) and 4-Methoxyphenol (0.15 g, 1.21 mmol, 0.7 mol%) were added to a roundbottom flask and heated to 120 °C. When dibenzoylmethane was diluted in DPHA, DBU (1,8-diaza-bicyclo[5.4.0]undec-7-en; 1.50 g, 9.85 mmol, 6 mol%) was added and the mixture was heated at 120 °C for 5 h. Additional DBU (1.00 g, 6.57 mmol, 4 mol%) was added and the mixture was heated to 120 °C for 7.5 h. The DPHA-DBM addition product was obtained as orange oil (137 g, 90%). Analytical characterization: GPC: Mn 1330 g/mol, Mw 1730 g/mol, PDI 1.3.

### Example 39C: Preparation of EO24-DPHA-DBM

Dibenzoylmethane (48 g, 0.214 mol), ethoxylated DPHA (EO24-DPHA) (Miramer 6240, 62.0 g) and 4-Methoxyphenol (0.15 g, 1.21 mmol, 0.7 mol%) were added to a roundbottom flask and heated to 100 °C. When dibenzoylmethane was dissolved in DPHA, 1,8-Diazabicyclo[5.4.0]undec-7-en (0.60 g) were added and the mixture was heated at 100 °C for 5 h. Additional DBU (0.6 g) was added and the mixture was heated to 100 °C for 2 h. The EO24DPHA-DBM addition product was obtained as a liquid and was poured into the final container at elevated temperature (108 g). Analytical characterization: GPC: Mn 3538 g/mol, Mw 5522 g/mol.

### Example 39D and E: Compositions comprising DPHA and EO24-DPHA

DPHA and EO24-DPHA were synthesised using the procedures described in Examples 39B and 39C above and were incorporated into the below compositions.

**Table 13: Coating Formulations 39D and 39E**

| Material: | 39D | 39E |
|---|---|---|
| Sartomer CN104D66: | 25% | 25% |
| GPTA: | 60% | 55% |
| Triethanolamine (85%): | 5% | 5 % |
| EODPHA-DBM | 10% | |
| DPHA-DBM | | 15% |
| Total: | 100% | 100% |

| Appearance of the coating: | solution | Solution |
|---|---|---|
| Curing Performance: | 4 | 4 |
| MEK double rubs: | 10 | 4 |

### Preparation and Curing Test of a UV-Coating with PEG200DA-2DBM (Ex 39) which was submitted for migration analysis

**Table 13A: Coating Formulations Examples 40 and 41 were submitted for Migration Testing**

| | Ex. 40 (Comparative) | Ex. 41 (Inventive) | Ex.41A (Inventive) |
|---|---|---|---|
| Ex. 39 PEG200DA-2DBM | | 20 | |
| Ex. 39A PEG200DA-1DBM | | | 12 |
| Oligomeric Benzophenone based PI* | 8 | | |
| Splitting type PI** | 1 | 1 | 1 |
| Tetrafunctional Acrylate (PPTTA) | 49.5 | 37 | 45.5 |
| Aliphatic Aminoacrylate*** | 10 | 10 | 10 |
| Additives (Toner, Wetting Aid, Stabilizer, Defoamer) | 0.5 | 0.5 | 0.5 |
| Epoxyacrylate | 10 | 7.5 | 10 |
| GPTA | 21 | 24 | 21 |
| Total | 100 | 100 | 100 |
| | | | |

| Surface Curing Evaluation by Talc Discoloration ΔE (4µm wet film thickness) | | | |
|---|---|---|---|
| UV-dose: | | | |
| 33mJ/cm² | 36 | 35 | |
| 66mJ/cm² | 28.7 | 29.7 | |
| 99mJ/cm² | 28.2 | 28.9 | |
| 133mJ/cm² | 27.6 | 27.7 | |
| | | | |
| MEK Double Rub Resistance | >40 | >40 | >40 |

| | | | |
|---|---|---|---|
| * For example, Ommpol BP of IGM Resins ** Omnirad 127 *** LM7401 of Sartomer - containing an adduct of diethylamine on EO-TMPTA. | | | |

Surface cure of coatings was tested and compared by the talc test before the migration test was done. Talc is placed on the surface after cure at different UV-doses (33/66/99/132 mJ/cm²). The talc that doesn't adhere to the surface is removed and measured for the DE of talc discoloration. Less discoloration means better surface cure. This is only done over the black part of a BYK chart.

As shown in the table above, the combination of the aliphatic amine synergist and 20wt% of the reaction product for use in the invention was found to be equally effective compared to commercial oligomeric benzophenone-based PI.

**Table 14: Migration/Extraction Data - Results for targeted analysis of print samples and unprinted substrate with ethanol used as the simulant at 40 and 60°C. Results are given as parts per billion (ppb) µg/kg EU-model.**

| Sample Name | Butylated Hydroxytoluene | | PPTTA | | GPTA | |
|---|---|---|---|---|---|---|
| | 40°C | 60°C | 40°C | 60°C | 40°C | 60°C |
| Unprinted Substrate | <10 | <10 | ND | ND | ND | ND |
| Ex. 40 (Comp.) | 29 | 44 | 45 | 54 | 32 | 39 |
| Ex. 41 (Inv.) | 28 | 29 | <10 | <10 | <10 | 16 |

Table 14 shows that despite the higher amount of the PI and the higher percentage of GPTA used in Inventive Example 41, a reduced amount of acrylate was found to have migrated relative to Comparative Example 8 comprising an oligomeric benzophenone-based PI. The results indicate that the composition of the invention has improved migration (i.e. a reduced amount of migratable species results). Preferred migration limits are ≤ 10 ppb for acrylates at 40°C; and ≤ 50 ppb for butylated hydroxytoluene at 40°C.

### Example 42: Addition of 4Ph-DBM to PPTTA

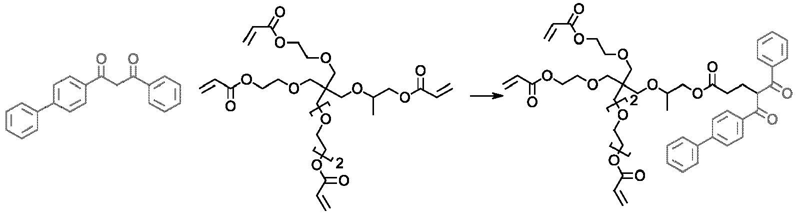

PPTTA (45.0 g) and 4Ph-DBM (15.0 g, 0.05 mol, 1.0 equiv.) were added to a round bottom flask and the mixture was heated to 110°C. When 4Ph-DBM was dissolved in PPTTA, DBU (0.600 g, 3.94 mmol, 7.9 mol%) was added and the mixture was heated at 110 °C for 6 h. Then, DBU (0.250 g, 1.64 mmol, 3.3 mol%) was added and the mixture was stirred at 110 °C for further 3.5 h. The Michael addition product was obtained as orange oil (58.2 g, 96%) of 4Ph-DBM-PPTTA.

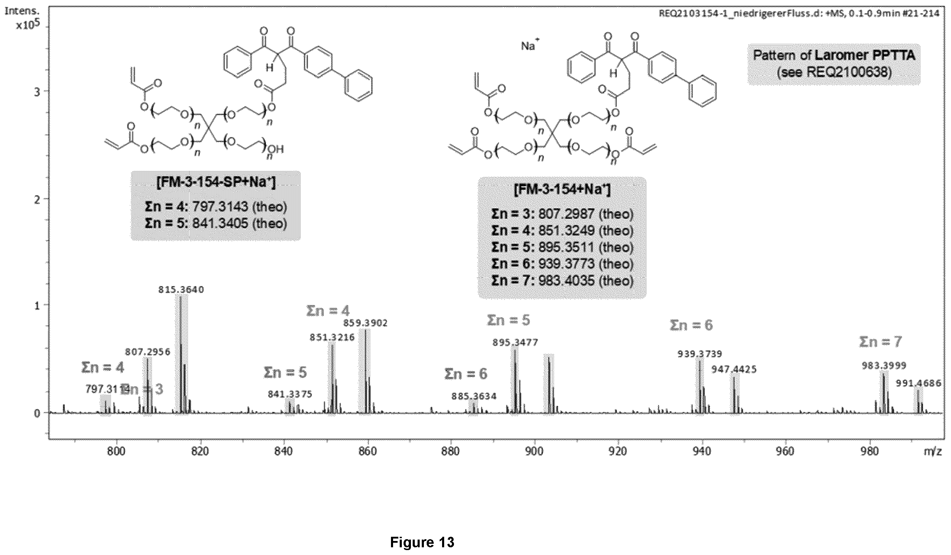

GPC: Mₙ 980 g/mol, M_{w} 1220 g/mol, PDI 1.24; The amount of unreacted 4Ph-DBM was <3% (*amount of unreacted material determined based on GPC peak area). UV/Vis in acetonitril at 20 ppm: lₘₐₓ = 288 nm, 249 nm. HRMS (ESI): The exact masses of the sodium-adducts of the onefold addition of 4Ph-DBM to Laromer PPTTA are detected:
See Figure 13

¹H-NMR (300 MHz, CDCl₃): d (ppm) = 8.15-8.00 (m), 7.70-6.60 (m), 6.40-6.30 (m), 6.20-6.00 (m), 5.83-5.79 (m), 5.50 (m), 4.30-4.05 (m), 3.70-3.4 (m), 2.55 (m), 2.55 (m).

¹³C-NMR (75 MHz, CDCl₃): d (ppm) = 195.9, 195.4, 173.2, 166.0, 165.9, 165.7, 146.2, 139.5, 135.7, 133.6, 130.9, 128.9, 128.2, 127.1, 71.0, 70.3, 63.6, 54.8, 44.6, 43.7, 31.4, 31.3, 24.1.

### Preparation of Off-set inks comprising the composition of the invention

**Table 15: Cure test of 4Ph-DBM-PPTTA as PI in a cyan UV-ink irradiated with a standard mercury UV-bulb.**

| | Example 43 4Ph-DBM-PPTTA (20%) | Example 44 4Ph-DBM-PPTTA (30%) |
|---|---|---|
| Fatty acid modified polyester acrylate (multi-functional) ** | 23.8 | 18.8 |
| Multi-functional acrylate Monomer (DPHA)* | 17.4 | 12.4 |
| 4Ph-DBM-PPTTA | 20.0 | 30.0 |
| Oligomeric Amine Synergist: Dimethylaminobenzoate ester based | 8.0 | 8.0 |
| Acrylate Monomers, e.g. EO-TMPTA or/and | 8.0 | 8.0 |
| ESBOA | | |
| Pigment: e.g. FASTOGEN^{®} BLUE | 15.0 | 15.0 |
| Additives: Micronized PE Wax (up to 6%), In-can stabilizer, Aluminum Silicate | 7.8 | 7.8 |
| Total: | 100 | 100 |
| Viscosity 2 1/s (Pa.s) | 77.2 | 93.0 |
| Viscosity 50 1/s (Pa.s) | 25.9 | 25.4 |

| Set-Off-Test | | |
|---|---|---|
| 33mJ/cm² | 0.60 | 0.71 |
| 66mJ/cm² | 0.31 | 0.21 |
| 100mJ/cm² | 0.09 | 0.08 |
| 133mJ/cm² | 0.05 | 0.07 |

| | | |
|---|---|---|
| * For example, Ebecryl 1895 ** For example, Ebecryl 1870 = hexaacrylate | | |

The set-off test clearly demonstrates that the ink can be dried (set-off of ≤ 0.35; more preferably ≤ 0.25; most preferably ≤ 0.1) with UV-doses between 66 and 150mJ/cm² which is a dose available on press without the need for any additional photoinitiators besides the inventive 4Ph-DBM-PPTTA in combination with the amine synergist.

### Example 45: Preparation of PEG2000DA-AVO

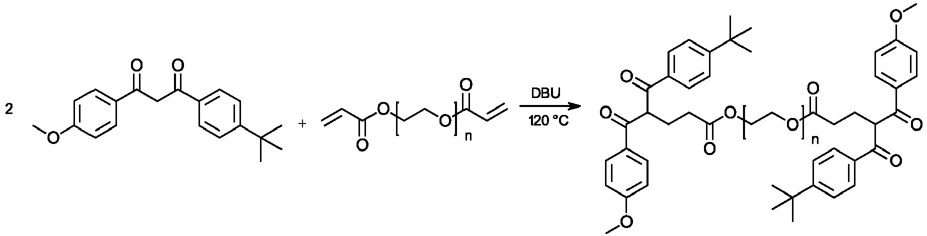

Avobenzone (300 g, 0.97 mol, 1.0 equiv.) is added to a roundbottom flask, equipped with a stirrer and a condenser. PEG200DA (Sartomer SR259, 225g) and 4-methoxyphenol (0.300 g, 2.41 mmol, 0.25 mol%) is added. The reaction mixture is heated to 120 °C and stirred until the Avobenzone is completely dissolved in PEG200DA. Then, 1,8-Diazabicyclo[5.4.0]undec-7-en (4.50 g, 0.03 mol, 3 mol%) is added and the reaction mixture is stirred at 120 °C for 4 h. A second portion of DBU (1.00 g, 6.57 mmol, 0.7 mol%) is added and the mixture is stirred for 4 h at 120 °C. A third portion of DBU (1.00 g, 6.57 mmol, 0.7 mol%) is added and the mixture is stirred for 4 h at 120 °C, again. When the amount of free avobenzone is below 1% (area-% as determined by GPC), the mixture is cooled down to room temperature and the product is obtained as a brown oil (512 g, 96%). GPC: Mₙ 1180 g/mol, M_{w} 1280 g/mol, PDI 1.08 The amount of non-reacted dibenzoylmethane is below 1% (area-%) according to GPC analysis.

UV/Vis in Acetonitril at 20 ppm: λₘₐₓ = 262 nm. HRMS (ESI): m/z calculated for: [C₅₆H₇₀O₁₄Na]⁺ = 989.4656, found: 989.4627 (Diadduct); m/z calculated for: [C₃₆H₄₈O₁₁Na]+ = 679.3087, found: 679.3062 (Monoadduct).

¹H-NMR (300 MHz, CDCl₃): δ (ppm) = 8.03-8.00 (m), 7.94-7.92 (m), 7.44-7.41 (m), 6.92-6.89 (m), 6.42-6.37 (m), 6.18-6.08 (m), 5.82-5.79 (m), 5.45-5.41 (m), 4.29-4.21 (m), 3.82 (m), 3.61-3.57 (m), 2.55-2.30 (m), 1.29 (s). ¹³C-NMR (75 MHz, CDCl₃): δ (ppm) = 195.5, 194.5, 173.3, 163.8, 157.2, 133.2, 131.0, 128.5, 125.8, 114.0, 70.4, 68.9, 63.6, 55.4, 54.6, 35.0, 30.9, 24.2.

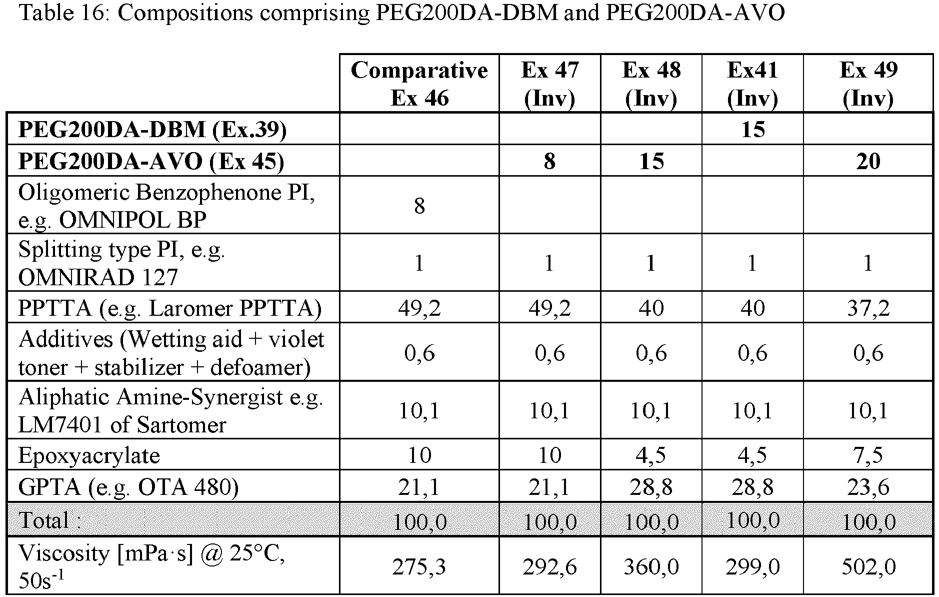

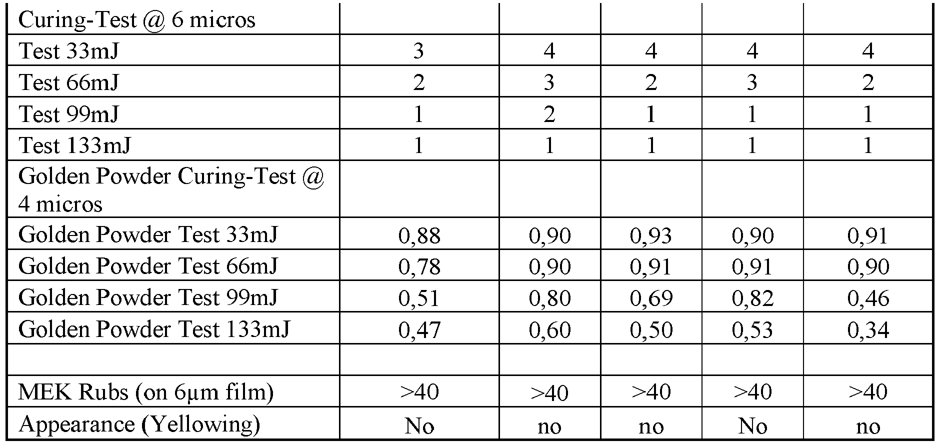

The above data demonstrates how the compositions of the invention, comprising a reaction product for use in the invention in combination with an amine synergist, can give comparable results in terms of final cure and the amount of migratable speceis, as a comparative composition comprising an oligomeric photointiator.

## Claims

1. A kit comprising
a) a reaction product of:
i) one or more aromatic Michael addition donor materials comprising two or more active methylene hydrogens and at least two optionally substituted benzoyl-moieties; wherein the Michael addition donor material is dibenzoylmethane, a substituted dibenzoylmethane derivative, or a combination thereof; with
ii) one or more Michael addition acceptor materials, wherein the Michael addition acceptor material is selected from the group consisting of mono, di-, tri- or multi-functional (meth)acrylates, polyester (meth)acrylates, and halogenated organic acids or esters; wherein the reaction product is capable of initiating a free radical polymerization reaction when used in combination with a synergist; and
b) a synergist selected from the group consisting of amines, thiols, and combinations thereof;
wherein the reaction product a) and the synergist b) are incorporated into a single composition; or wherein the reaction product a) and the synergist b) are in separate compositions; wherein each Michael addition donor material-derived moiety present in the reaction product is covalently attached to a single Michael addition acceptor-derived moiety.

2. The kit of claim 1, wherein
i) the reaction product a) and the synergist b) are incorporated into a single composition; and/or
ii) the halogen organic acid or ester comprises a carbonyl group with a halogen substituent on the α-carbon atom; and/or
iii) the benzoyl-moieties are substituted with at least one amino substituent; and/or
iv) the benzoyl-moieties are substituted with at least one phenyl substituent; and/or
v) when in the keto form, the reaction product comprises one hydrogen substituent on the moiety derived from the methylene group of the Michael addition donor material.

3. The kit of any preceding claim, wherein
i) the Michael addition donor material is 1-(4-biphenylyl)-3-phenyl-1,3-propanedione; and/or
ii) the Michael acceptor material comprises more than one functional group capable of reacting with the Michael addition donor material; and/or
iii) the Michael addition acceptor material is a mono, di-, tri-, multi-functional (meth)acrylate, or combinations thereof; and/or
iv) wherein the reaction product comprises at least one covalently bound, polymerizable ethylenically unsaturated group selected from a (meth)acrylate or a (meth)acrylamide group; and/or wherein the synergist is an amine synergist selected from the group consisting of a tertiary amine, an aminoacrylate such as an aliphatic aminoacrylate, an amine-modified polyether acrylate, an aminobenzoate, an alkanolamine, or combinations thereof.

4. The kit of any preceding claim, wherein
i) the synergist is not 1,8-diazabicyclo[5.4.0]undec-7-ene (DBU); and/or
ii) the synergist is selected from the group consisting of an alkanolamine, an aminoacrylate, or a combination thereof; and/or
iii) the Michael addition acceptor material is an amino(meth)acrylate or an amino(meth)acrylamide; and/or
iv) when the Michael addition acceptor material is dipentaerythritol hexaacrylate (DPHA), it is alkoxylated dipentaerythritol hexaacrylate (DPHA), such as ethoxylated DPHA or propylated DPHA.

5. The kit of any preceding claim, wherein the reaction product a) is a compound of Formula 1; wherein the compound of Formula 1 comprises keto and enol tautomeric forms of; 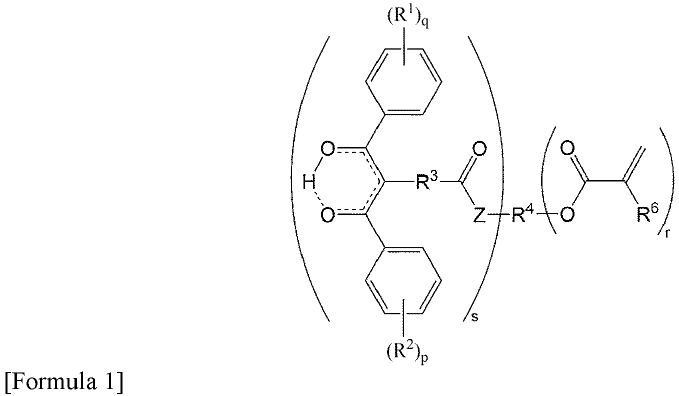
wherein R¹ and R² are each independently selected from the group consisting of halogen, dialkylamino, diarylamino, an optionally substituted straight or branched C₁-C₁₂ alkyl, C₃-C₆-cycloalkyl, C₁-C₁₂-alkoxy group, and C₅ to C₁₀ aryl;
p and q are independently an integer between 0 and 5;
R³ is selected from the group consisting of straight or branched C₁-C₁₂ alkyl, C₁-C₁₂ alkoxy;
Z is either O resulting in an ester functionality or NH resulting in amide functionality; and
R⁴ is selected from the group consisting of:
a) an optionally substituted straight or branched alkyl group containing from 1 to 200 carbon atoms, wherein optionally at least one CH₂ unit is replaced by a -O- resulting in at least one ether bond;
b) a linear or branched alkenyl group containing from 1 to 20 carbon atoms wherein optionally a CH₂ unit is replaced by a -O- resulting in at least one ether bond, such as a vinyl-ether group;
c) a C₃-C₁₂-cycloalkyl, wherein optionally a CH₂ unit is replaced by a -O- resulting in a heterocycle;
d) an optionally substituted aryl group containing from 1 to 12 carbon atoms, wherein optionally a CH-unit is replaced by O;
e) a C₁-C₁₂-alkoxy group;
f) a hydroxyl group;
g) a primary, secondary or tertiary amino group;
h) an amido group;
i) a carbonyl group of formula -CO-Y where Y represents a hydroxyl group, an -OR⁵ group or an SR⁵ group, where R⁵ represents a C₁ to C₄ alkyl group;
j) H
wherein r relates to the number of terminal (meth)acrylate groups present and is an integer between 0 and 10;
wherein R⁶ is either H or methyl; and
wherein s relates to the number of dibenzoylmethane-derived moieties present and is an integer between 1 and 10.

6. The kit of claim 5, wherein
i) R¹ and R² are each independently selected from the group consisting of dialkylamino and C₅ to C₁₀ aryl; and/or
ii) s is an integer between 1 and 5, such as between 1 and 4, between 2 and 4, between 1 and 3, or is 1 or 2; and/or
iii) R⁶ is H; and/or
iv) R⁴ is an optionally substituted straight or branched alkyl group containing from 1 to 200 carbon atoms, wherein optionally at least one CH₂ unit is replaced by a -O- resulting in at least one ether bond in the chain; and/or
v) R⁴ is a straight or branched alkyl group comprising 1 to 200 carbon atoms, wherein at least two CH₂ units are replaced by a -O- resulting in a polyether chain, such as wherein at least 3 CH₂ units, at least 4 CH₂ units, at least 5 CH₂ units, at least 10 CH₂ units, or at least 20 CH₂ units are replaced by a -O-; and/or
vi) r ≥ 1, such as wherein r ≥ 2, or wherein r ≥ 3; and/or
vii) R³ denotes a methyl (-CH₂-), an ethyl (-CH₂-CH₂-) group, or an isopropyl group; and/or
viii) the R⁴ group includes substitution with hydroxyls, and amines; and/or
ix) R⁴ is an optionally substituted straight or branched alkyl group containing from 1 to 200 carbon atoms; and/or
x) when r ≥ 3 , R⁴ is an optionally substituted straight or branched polyether chain containing at least 2 repeat units.

7. The kit of any preceding claim, wherein
i) the molar ratio of Michael donor material to Michael acceptor material in the reaction product is from 1: 1 to 6:1; and/or
ii) the synergist has a molecular weight below 650 gmol⁻¹, such as below 500 gmol⁻¹, below 400 gmol⁻¹, or below 200 gmol⁻¹.

8. A radiation-curable ink, coating, varnish, or adhesive composition comprising the reaction product a) according to any preceding claim and a synergist.

9. The ink, coating, varnish, or adhesive composition of claim 8,
i) wherein the synergist is any hydrogen donor, optionally wherein the synergist is selected from the group consisting of amines, ethers, esters, thiols, alcohols, and combinations thereof; and/or
ii) further comprising one or more mono-, di- or multi-functional (meth)acrylates, or a combination thereof; optionally wherein the (meth)acrylates are:
a) monomers and/or oligomers; and/or
b) polyester acrylates and/or methacrylates; and/or
iii) comprising ≤ 7wt%, more preferably ≤ 5wt% most preferably ≤ than 2wt% of one or more additional photoinitiators; optionally wherein the one or more additional photoinitiators comprise splitting (Norrish type I) photoinitiators or sensitizers; and/or
iv) comprising up to 15wt% water, such as up to 10 wt% water, up to 8 wt% water, up to 6 wt% water, up to 5 wt% water, up to 3 wt% water, or up to 2 wt% water; and/or
v) further comprising a pigment, a colorant, or a combination thereof; and/or
vi) wherein the synergist is the synergist according to any of claims 1 to 7; optionally wherein the synergist is present in the composition in an amount between 5 and 15 wt%; and/or
vii) wherein the reaction product for use in the invention is present in the ink, coating, varnish, or adhesive composition in an amount between 0.1 and 30wt%, such as between 0.1 and 10wt%, between 5 and 25wt%, between 10 and 20wt%, between 10 and 18wt%, between 12 and 18 wt%, between 5wt and 15wt%, or between 10 and 15wt%.

10. The ink, coating, varnish, or adhesive composition of claim 9, wherein the one or more mono-, di- or multi-functional (meth)acrylates, such as the one or more mono-, di- or multi-functional (meth)acrylate monomers, are present in the ink, coating, varnish, or adhesive composition in an amount between 30 wt% and 90 wt%, such as between 40 and 80 wt%, between 45 and 70 wt%, between 35 and 60 wt%, between 35 and 50 wt%, or between 40 and 60 wt%.

11. The ink, coating, varnish, or adhesive composition of claims 9 or 10,
i) which is self-curing, such as wherein the reaction product for use in the invention further comprises at least one covalently bonded, polymerizable (meth)acrylate group; optionally wherein the reaction product for use in the invention is incorporated into the composition in an amount of between 30wt% and 90 wt%, such as between 50 wt% and 90 wt%, or 60 wt% and 90 wt%; and/or
ii) which is curable by a UV-dose (sum of UV-A, UV-B and UV-C irradiation) of lower than 500mJ/cm² as measured by a Power Puck II from EIT; and/or
iii) which is an ink or coating composition; and/or
iv) which is a UV-flexo ink, a UV-inkjet ink, a UV-gravure ink or a UV-offset ink.

12. A printed substrate comprising the cured ink, coating, varnish, or adhesive composition of any preceding claim; optionally which is a packaging article for foodstuffs.

13. A process for providing a printed and cured ink film, comprising applying the ink or coating composition of any one of claims 9 to 11 onto a substrate and curing the ink or coating; optionally wherein
i) curing is carried out upon exposure to radiation in the region of 200nm - 450nm; and/or
ii) curing is carried out upon exposure to UV-light as emitted by lasers, UV Light Emitting Diodes (UV-LED), mercury bulbs or doped mercury bulbs; and/or
iii) the resultant cured ink or coating film comprises extractables below 10 ppm; and/or
iv) the ink or coating is cured with a UV-dose of 500 mJ/cm² or less.

14. A method of making the ink, coating, varnish or adhesive composition of any of claims 9 to 11, comprising the steps of
a) reacting the Michael addition donor material according to any of the preceding claims with the Michael addition acceptor material according to any of the preceding claims to afford the reaction product according to any of the preceding claims;
b) adding additional components; and then
c) mixing the components together to make the ink, coating, varnish or adhesive composition.

15. The method of claim 14, wherein the additional components include polymerisable monomers and/or oligomers; and/or
i) wherein step a) is conducted before step b); or
ii) wherein step b) is conducted before step a) or at the same time as step a).

16. Use of the composition according to any preceding claim, in a method of printing or coating a substrate.

## Patentansprüche

1. Kit, umfassend:
a) ein Reaktionsprodukt von:
i) einem oder mehreren aromatischen Michael-Additions-Donatormaterialien, die zwei oder mehr aktive Methylen-Wasserstoffatome und mindestens zwei gegebenenfalls substituierte Benzoyl-Gruppierungen umfassen; wobei es sich bei dem Michael-Additions-Donatormaterial um Dibenzoylmethan, ein substituiertes Dibenzoylmethan-Derivat oder eine Kombination davon handelt; mit
ii) einem oder mehreren Michael-Additions-Akzeptormaterialien, wobei das Michael-Additions-Akzeptormaterial ausgewählt ist aus der Gruppe bestehend aus mono, di-, tri- oder multifunktionellen (Meth)acrylaten, Polyester(meth)acrylaten und halogenierten organischen Säuren oder Estern; wobei das Reaktionsprodukt in der Lage ist, eine Radikalpolymerisationsreaktion zu initiieren, wenn es in Kombination mit einem Synergisten verwendet wird; und
b) einen Synergisten, der ausgewählt ist aus der Gruppe bestehend aus Aminen, Thiolen und Kombinationen davon; wobei das Reaktionsprodukt a) und der Synergist b) in eine einzige Zusammensetzung aufgenommen sind; oder wobei das Reaktionsprodukt a) und der Synergist b) in verschiedenen Zusammensetzungen vorliegen; wobei jede von Michael-Additions-Donatormaterial abgeleitete Gruppierung, die in dem Reaktionsprodukt vorhanden ist, kovalent an eine einzige von Michael-Additions-Akzeptor abgeleitete Gruppierung gebunden ist.

2. Kit nach Anspruch 1, wobei
i) das Reaktionsprodukt a) und der Synergist b) in eine einzige Zusammensetzung aufgenommen sind; und/oder
ii) die organische Halogensäure oder der -ester eine Carbonylgruppe mit einem Halogensubstituenten an dem α-Kohlenstoffatom umfasst; und/oder
iii) die Benzoyl-Gruppierungen mit mindestens einem Aminosubstituenten substituiert sind; und/oder
iv) die Benzoyl-Gruppierungen mit mindestens einem Phenylsubstituenten substituiert sind; und/oder
v) das Reaktionsprodukt, wenn es in der Ketoform vorliegt, einen Wasserstoffsubstituenten an der Gruppierung umfasst, die von der Methylengruppe des Michael-Additions-Donatormaterials abgeleitet ist.

3. Kit nach einem der vorstehenden Ansprüche, wobei
i) es sich bei dem Michael-Additions-Donatormaterial um 1-(4-Biphenylyl)-3-phenyl-1,3-propandion handelt; und/oder
ii) das Michael-Akzeptormaterial mehr als eine funktionelle Gruppe umfasst, die in der Lage ist, mit dem Michael-Additions-Donatormaterial zu reagieren; und/oder
iii) es sich bei dem Michael-Additions-Akzeptormaterial um ein mono-, di-, tri-, multifunktionelles (Meth)acrylat oder Kombinationen davon handelt; und/oder
iv) wobei das Reaktionsprodukt mindestens eine kovalent gebundene, polymerisierbare ethylenisch ungesättigte Gruppe umfasst, die ausgewählt ist aus der Gruppe bestehend aus einer (Meth)acrylat- oder einer (Meth)acrylamid-Gruppe; und/oder wobei es sich bei dem Synergisten um einen Aminsynergisten handelt, der ausgewählt ist aus der Gruppe bestehend aus einem tertiären Amin, einem Aminoacrylat wie einem aliphatischen Aminoacrylat, einem aminmodifizierten Polyetheracrylat, einem Aminobenzoat, einem Alkanolamin oder Kombinationen davon.

4. Kit nach einem der vorstehenden Ansprüche, wobei
i) es sich bei dem Synergisten nicht um 1,8-Diazabicyclo[5.4.0]undec-7-en (DBU) handelt; und/oder
ii) der Synergist ausgewählt ist aus der Gruppe bestehend aus einem Alkanolamin, einem Aminoacrylat oder einer Kombination davon; und/oder
iii) es sich bei dem Michael-Additions-Akzeptormaterial um ein Amino(meth)acrylat oder ein Amino(meth)acrylamid handelt; und/oder
iv) es sich, wenn es sich bei dem Michael-Additions-Akzeptormaterial um Dipentaerythrithexaacrylat (DPHA) handelt, um alkoxyliertes Dipentaerythrithexaacrylat (DPHA) handelt, wie ethoxyliertes DPHA oder propyliertes DPHA.

5. Kit nach einem der vorstehenden Ansprüche, wobei das Reaktionsprodukt a) eine Verbindung der Formel 1 ist; wobei die Verbindung der Formel 1 tautomere Keto- und Enolformen der folgenden Formel umfasst: 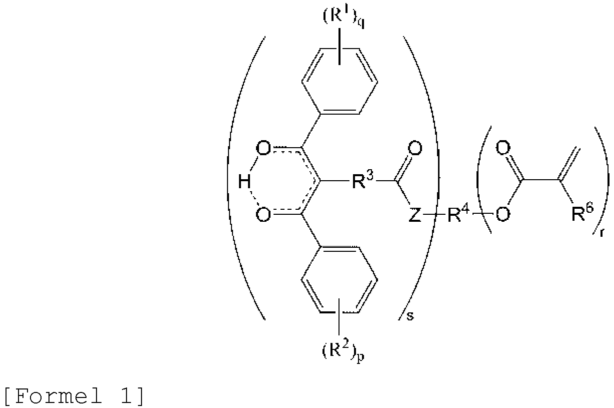
wobei R¹ und R² jeweils unabhängig ausgewählt sind aus der Gruppe bestehend aus Halogen, Dialkylamino, Diarylamino, einem/einer gegebenenfalls substituierten geradkettigen oder verzweigten C₁-C₁₂-Alkyl, C₃-C₆-Cycloalkyl, C₁-C₁₂-Alkoxygruppe und C₅- bis C₁₀-Aryl;
p und q unabhängig eine ganze Zahl zwischen 0 und 5 sind; R³ ausgewählt ist aus der Gruppe bestehend aus geradkettigem oder verzweigtem C₁-C₁₂-Alkyl, C₁-C₁₂-Alkoxy;
Z entweder O ist, was eine Esterfunktionalität zur Folge hat, oder NH ist, was eine Amidfunktionalität zur Folge hat; und
R⁴ ausgewählt ist aus der Gruppe bestehend aus:
a) einer gegebenenfalls substituierten geradkettigen oder verzweigten Alkylgruppe, die 1 bis 200 Kohlenstoffatome enthält, wobei gegebenenfalls mindestens eine CH₂-Einheit durch ein -O- ersetzt ist, was mindestens eine Etherbindung zur Folge hat;
b) einer linearen oder verzweigten Alkenylgruppe, die 1 bis 20 Kohlenstoffatome enthält, wobei gegebenenfalls eine CH₂-Einheit durch ein -O- ersetzt ist, was mindestens eine Etherbindung zur Folge hat, wie eine Vinyl-EtherGruppe;
c) einem C₃-C₁₂-Cycloalkyl, wobei gegebenenfalls eine CH₂-Einheit durch ein -O- ersetzt ist, was einen Heterocyclus zur Folge hat;
d) einer gegebenenfalls substituierten Arylgruppe, die 1 bis 12 Kohlenstoffatome enthält, wobei gegebenenfalls eine CH-Einheit durch O ersetzt ist;
e) eine C₁-C₁₂-Alkoxygruppe;
f) eine Hydroxylgruppe;
g) eine primäre, sekundäre oder tertiäre Aminogruppe;
h) eine Amidogruppe;
i) eine Carbonylgruppe der Formel -CO-Y, wobei Y für eine Hydroxylgruppe, eine -OR⁵-Gruppe oder eine SR⁵-Gruppe steht, wobei R⁵ für eine C₁- bis C₄-Alkylgruppe steht;
j) H
wobei r sich auf die Anzahl der vorhandenen terminalen (Meth)acrylat-Gruppen bezieht und eine ganze Zahl zwischen 0 und 10 ist;
wobei es sich bei R⁶ entweder um H oder um Methyl handelt; und
wobei s sich auf die Anzahl der vorhandenen, von Dibenzoylmethan abgeleiteten Gruppierungen bezieht und eine ganze Zahl zwischen 1 und 10 ist.

6. Kit nach Anspruch 5, wobei
i) R¹ und R² jeweils unabhängig ausgewählt sind aus der Gruppe bestehend aus Dialkylamino und C₅- bis C₁₀-Aryl; und/oder
ii) s eine ganze Zahl zwischen 1 und 5 ist, wie zwischen 1 und 4, zwischen 2 und 4, zwischen 1 und 3, oder 1 oder 2 ist; und/oder
iii) es sich bei R⁶ um H handelt; und/oder
iv) es sich bei R⁴ um eine gegebenenfalls substituierte geradkettige oder verzweigte Alkylgruppe handelt, die 1 bis 200 Kohlenstoffatome enthält, wobei gegebenenfalls mindestens eine CH₂-Einheit durch ein -O- ersetzt ist, was mindestens eine Etherbindung in der Kette zur Folge hat; und/oder
v) es sich bei R⁴ um eine geradkettige oder verzweigte Alkylgruppe handelt, die 1 bis 200 Kohlenstoffatome umfasst, wobei mindestens zwei CH₂-Einheiten durch ein - O- ersetzt sind, was eine Polyetherkette zur Folge hat, wie wobei mindestens 3 CH₂-Einheiten, mindestens 4 CH₂-Einheiten, mindestens 5 CH₂-Einheiten, mindestens 10 CH₂-Einheiten oder mindestens 20 CH₂-Einheiten durch ein -O-ersetzt sind; und/oder
vi) r ≥ 1, wie wobei r ≥ 2, oder wobei r ≥ 3; und/oder
vii) R³ eine Methyl (-CH₂-)-, eine Ethyl (-CH₂-CH₂-) -Gruppe oder eine Isopropylgruppe bezeichnet; und/oder
viii) die R⁴-Gruppe eine Substitution mit Hydroxylen und Aminen umfasst; und/oder
ix) es sich bei R⁴ um eine gegebenenfalls substituierte geradkettige oder verzweigte Alkylgruppe handelt, die 1 bis 200 Kohlenstoffatome enthält; und/oder
x) es sich, wenn r ≥ 3, bei R⁴ um eine gegebenenfalls substituierte geradkettige oder verzweigte Polyetherkette handelt, die mindestens 2 Wiederholeinheiten enthält.

7. Kit nach einem der vorstehenden Ansprüche, wobei
i) das Molverhältnis von dem Michael-Donatormaterial zu dem Michael-Akzeptormaterial in dem Reaktionsprodukt 1 : 1 bis 6 : 1 beträgt; und/oder
ii) der Synergist ein Molekulargewicht unter 650 gmol⁻¹ aufweist, wie unter 500 gmol⁻¹, unter 400 gmol⁻¹ oder unter 200 gmol⁻¹.

8. Durch Bestrahlung härtbare Tinten-, Beschichtungs-, Lack- oder Klebezusammensetzung, umfassend das Reaktionsprodukt a) nach einem der vorstehenden Ansprüche und einen Synergisten.

9. Tinten-, Beschichtungs-, Lack- oder Klebezusammensetzung nach Anspruch 8,
i) wobei der Synergist ein Wasserstoffdonator ist, wobei gegebenenfalls der Synergist ausgewählt ist aus der Gruppe bestehend aus Aminen, Ethern, Thiolen, Alkoholen und Kombinationen davon; und/oder
ii) ferner umfassend ein oder mehrere mono-, di- oder multifunktionelle (Meth)acrylate oder eine Kombination davon; wobei gegebenenfalls die (Meth)acrylate Folgendes sind:
a) Monomere und/oder Oligomere; und/oder
b) Polyesteracrylate und/oder -methacrylate; und/oder
iii) umfassend zu ≤ 7 Gew.-%, besonders bevorzugt ≤ 5 Gew.-%, ganz besonders bevorzugt ≤ weniger als 2 Gew.-% einen oder mehrere zusätzliche Photoinitiatoren; wobei gegebenenfalls der eine oder die mehreren zusätzlichen Photoinitiatoren das Spalten (Norrish-Typ-I) von Photoinitiatoren oder Sensibilisatoren umfasst; und/oder
iv) umfassend zu bis zu 15 Gew.-% Wasser, wie bis zu 10 Gew.-% Wasser, bis zu 8 Gew.-% Wasser, bis zu 6 Gew.-ö Wasser, bis zu 5 Gew.-% Wasser, bis zu 3 Gew.-% Wasser, oder bis zu 2 Gew.-% Wasser; und/oder
v) ferner umfassend ein Pigment, ein Färbemittel oder eine Kombination davon; und/oder
vi) wobei es sich bei dem Synergisten um den Synergisten nach einem der Ansprüche 1 bis 7 handelt; wobei der Synergist in der Zusammensetzung gegebenenfalls in einer Menge zwischen 5 und 15 Gew.-% vorhanden ist; und/oder
vii) wobei das Reaktionsprodukt zur Verwendung in der Erfindung in der Tinten-, Beschichtungs-, Lack- oder Klebezusammensetzung in einer Menge zwischen 0,1 und 30 Gew.-%, wie zwischen 0,1 und 10 Gew.-%, zwischen 5 und 25 Gew.-%, zwischen 10 und 20 Gew.-%, zwischen 10 und 18 Gew.-%, zwischen 12 und 18 Gew.-%, zwischen 5 Gew.-% und 15 Gew.-%, oder zwischen 10 und 15 Gew.-%, vorhanden ist.

10. Tinten-, Beschichtungs-, Lack- oder Klebezusammensetzung nach Anspruch 9, wobei das eine oder die mehreren mono-, di- oder multifunktionellen (Meth)acrylate, wie das eine oder die mehreren mono-, di- oder multifunktionellen (Meth)acrylat-Monomere in der Tinten-, Beschichtungs-, Lack- oder Klebezusammensetzung, in einer Menge zwischen 30 Gew.-% und 90 Gew.-%, wie zwischen 40 und 80 Gew.-%, zwischen 45 und 70 Gew.-%, zwischen 35 und 60 Gew.-%, zwischen 35 und 50 Gew.-% oder zwischen 40 und 60 Gew.-%, vorhanden sind.

11. Tinten-, Beschichtungs-, Lack- oder Klebezusammensetzung nach Anspruch 9 oder 10,
i) die selbsthärtend ist, wie wobei das Reaktionsprodukt zur Verwendung in der Erfindung ferner mindestens eine kovalent gebundene, polymerisierbare (Meth)acrylat-Gruppe umfasst; wobei das Reaktionsprodukt zur Verwendung in der Erfindung gegebenenfalls in einer Menge zwischen 30 Gew.-% und 90 Gew.-%, wie zwischen 50 Gew.-% und 90 Gew.-% oder 60 Gew.-% und 90 Gew.-%, in die Zusammensetzung aufgenommen ist; und/oder
ii) die durch eine UV-Dosis (Summe von UV-A-, UV-B- und UV-C-Bestrahlung) von weniger als 500 mJ/cm², gemessen mittels Power Puck II von EIT, härtbar ist; und/oder
iii) bei der es sich um eine Tinten- oder Beschichtungszusammensetzung handelt; und/oder
iv) bei der es sich um eine UV-Flexotinte, eine UV-Tintenstrahltinte, eine UV-Tiefdrucktinte oder eine UV-Offset-Tinte handelt.

12. Gedrucktes Substrat, umfassend die gehärtete Tinten-, Beschichtungs-, Lack- oder Klebezusammensetzung nach einem der vorstehenden Ansprüche; bei dem es sich gegebenenfalls um einen Verpackungsartikel für Lebensmittel handelt.

13. Verfahren zum Bereitstellen eines gedruckten und gehärteten Tintenfilms handelt, umfassend das Aufbringen der Tinten- oder Beschichtungszusammensetzung nach einem der Ansprüche 9 bis 11 auf ein Substrat und das Härten der Tinte oder Beschichtung; wobei gegebenenfalls
i) das Härten nach Exposition gegenüber Bestrahlung im Bereich von 200 nm - 450 nm ausgeführt wird; und/oder
ii) das Härten nach Exposition gegenüber UV-Licht ausgeführt wird, das durch Laser, UV-Leuchtdioden (UV-LED), Quecksilberkolben oder dotierte Quecksilberkolben emittiert wird; und/oder
iii) der resultierende gehärtete Tinten- oder Beschichtungsfilm zu unter 10 ppm extrahierbare Stoffe umfasst; und/oder
iv) die Tinte oder Beschichtung mit einer UV-Dosis von 500 mJ/cm² oder weniger gehärtet wird.

14. Verfahren zum Herstellen der Tinten-, Beschichtungs-, Lack- oder Klebezusammensetzung nach einem der Ansprüche 9 bis 11, umfassend die Schritte:
a) Umsetzen des Michael-Additions-Donatormaterials nach einem der vorstehenden Ansprüche mit dem Michael-Additions-Akzeptormaterial nach einem der vorstehenden Ansprüche, um das Reaktionsprodukt nach einem der vorstehenden Ansprüche zu erhalten;
b) Zugeben zusätzlicher Komponenten; und dann
c) Vermischen der Komponenten miteinander, um die Tinten-, Beschichtungs-, Lack- oder Klebezusammensetzung herzustellen.

15. Verfahren nach Anspruch 14, wobei die zusätzlichen Komponenten polymerisierbare Monomere und/oder Oligomere umfassen; und/oder
i) wobei Schritt a) vor Schritt b) durchgeführt wird; oder
ii) wobei Schritt b) vor Schritt a) oder zur gleichen Zeit wie Schritt a) durchgeführt wird.

16. Verwendung der Zusammensetzung nach einem der vorstehenden Ansprüche in einem Verfahren zum Bedrucken oder Beschichten eines Substrats.

## Revendications

1. Kit comprenant
a) un produit de réaction de :
i) une ou plusieurs matières donneuses d'addition de Michael aromatiques comprenant au moins deux hydrogènes de méthylène actifs et au moins deux groupements benzoyle éventuellement substitués ; dans lequel la matière donneuse d'addition de Michael est le dibenzoylméthane, un dérivé de dibenzoylméthane substitué ou une combinaison correspondante ; avec
ii) une ou plusieurs matières accepteuses d'addition de Michael, dans lequel la matière accepteuse d'addition de Michael est choisie dans le groupe constitué par des (méth)acrylates monofonctionnels, difonctionnels, trifonctionnels ou multifonctionnels, et des acides ou esters organiques halogénés ; le produit de réaction étant capable d'initier une réaction de polymérisation par voie radicalaire libre lorsqu'il est utilisé en combinaison avec un synergiste ; et
b) un synergiste choisi dans le groupe constitué par des amines, des thiols et des combinaisons correspondantes ; dans lequel le produit de réaction a) et le synergiste b) sont incorporés dans une composition unique ; ou dans lequel le produit de réaction a) et le synergiste b) sont dans des compositions distinctes ; dans lequel chaque groupement issu de la matière donneuse d'addition de Michael présent dans le produit de réaction est fixé de manière covalente à un seul groupement issu d'un accepteur d'addition de Michael.

2. Kit selon la revendication 1, dans lequel
i) le produit de réaction a) et le synergiste b) sont incorporés dans une composition unique ; et/ou
ii) l'acide ou l'ester organique halogéné comprend un groupe carbonyle comportant un substituant halogène sur l'atome de carbone en α ; et/ou
iii) les groupements benzoyle sont substitués par au moins un substituant amino ; et/ou
iv) les groupements benzoyle sont substitués par au moins un substituant phényle ; et/ou
v) lorsqu'il est sous forme céto, le produit de réaction comprend un substituant d'hydrogène sur le groupement issu du groupe méthylène de la matière donneuse d'addition de Michael.

3. Kit selon une quelconque revendication précédente, dans lequel
i) la matière donneuse d'addition de Michael est la 1-(4-biphénylyl)-3-phényl-1,3-propanedione ; et/ou
ii) la matière accepteuse de Michael comprend plus d'un groupe fonctionnel capable de réagir avec la matière donneuse d'addition de Michael ; et/ou
iii) la matière accepteuse d'addition de Michael est un (méth)acrylate monofonctionnel, difonctionnel, trifonctionnel, multifonctionnel, ou des combinaisons correspondantes ; et/ou
iv) dans lequel le produit de réaction comprend au moins un groupe éthyléniquement insaturé polymérisable, lié de manière covalente choisi parmi un groupe (méth)acrylate ou un groupe (méth)acrylamide ; et/ou dans lequel le synergiste est un synergiste de type amine choisi dans le groupe constitué par une amine tertiaire, un aminoacrylate tel qu'un aminoacrylate aliphatique, un acrylate de polyéther modifié par une amine, un aminobenzoate, une alcanolamine ou des combinaisons correspondantes.

4. Kit selon une quelconque revendication précédente, dans lequel
i) le synergiste n'est pas le 1,8-diazabicyclo[5.4.0]undéc-7-ène (DBU) ; et/ou
ii) le synergiste est choisi dans le groupe constitué par une alcanolamine, un aminoacrylate ou une combinaison correspondante ; et/ou
iii) la matière accepteuse d'addition de Michael est un amino(méth)acrylate ou un amino(méth)acrylamide ; et/ou
iv) lorsque la matière accepteuse d'addition de Michael est l'hexaacrylate de dipentaérythritol (DPHA), c'est un hexaacrylate de dipentaérythritol (DPHA) alcoxylé, tel que le DPHA éthoxylé ou le DPHA propylé.

5. Kit selon une quelconque revendication précédente, dans lequel le produit de réaction a) est un composé de Formule 1 ; dans lequel le composé de Formule 1 comprend des formes tautomériques céto et énol de ; 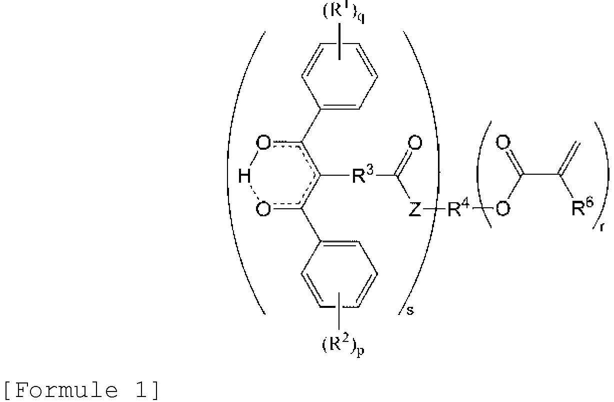
dans laquelle R¹ et R² sont chacun choisis indépendamment dans le groupe constitué par halogène, dialkylamino, diarylamino, un groupe C₁-C₁₂ alkyle linéaire ou ramifié, C₃-C₆-cycloalkyle, C₁-C₁₂-alcoxy éventuellement substitué et C₅ to C₁₀ aryle ;
p et q sont indépendamment un entier entre 0 et 5 ;
R³ est choisi dans le groupe constitué par C₁-C₁₂ alkyle, C₁-C₁₂ alcoxy linéaire ou ramifié ;
Z est soit O, ce qui entraîne une fonctionnalité ester, soit NH, ce qui entraîne une fonctionnalité amide ; et
R⁴ est choisi dans le groupe constitué par :
a) un groupe alkyle linéaire ou ramifié éventuellement substitué contenant de 1 à 200 atomes de carbone, dans lequel éventuellement au moins une unité CH₂ est remplacée par un -O-, résultant en au moins une liaison éther ;
b) un groupe alcényle linéaire ou ramifié contenant de 1 à 20 atomes de carbone, éventuellement dans lequel une unité CH₂ est remplacée par un -O-, résultant en au moins une liaison éther, comme un groupe d'éther de vinyle ;
c) un C₃-C₁₂-cycloalkyle, éventuellement dans lequel une unité CH₂ est remplacée par un -O- résultant en un cycle hétérocyclique ;
d) un groupe aryle éventuellement substitué contenant de 1 à 12 atomes de carbone, dans lequel éventuellement une unité CH est remplacée par O ;
e) un groupe C₁-C₁₂-alcoxy ;
f) un groupe hydroxyle ;
g) un groupe amino primaire, secondaire ou tertiaire ;
h) un groupe amido ;
i) un groupe carbonyle de formule -CO-Y où y représente un groupe hydroxyle, un groupe -OR⁵ ou un groupe SR⁵, où R⁵ représente un groupe C₁ à C₄ alkyle ;
j) H
dans lequel r se rapporte au nombre de groupes (méth)acrylate terminaux présents et est un entier compris entre 0 et 10 ;
dans lequel R⁶ est soit H, soit méthyle ; et
dans lequel s se rapporte au nombre de groupements issus du dibenzoylméthane présents et est un nombre entier compris entre 1 et 10.

6. Kit selon la revendication 5, dans lequel
i) R¹ et R² sont chacun choisis indépendamment dans le groupe constitué par dialkylamino et C₅ à C₁₀ aryle ; et/ou
ii) s est un entier compris entre 1 et 5, tel qu'entre 1 et 4, entre 2 et 4, entre 1 et 3, ou est 1 ou 2 ; et/ou
iii) R⁶ est H ; et/ou
iv) R⁴ est un groupe alkyle linéaire ou ramifié éventuellement substitué contenant de 1 à 200 atomes de carbone, éventuellement dans lequel au moins une unité CH₂ est remplacée par un -O-, résultant en au moins une liaison éther dans la chaîne ; et/ou
v) R⁴ est un groupe alkyle linéaire ou ramifié comprenant 1 à 200 atomes de carbone, dans lequel au moins deux unités CH₂ sont remplacées par un -O-, résultant en une chaîne polyéther, tel que dans lequel au moins 3 unités CH₂, au moins 4 unités CH₂, au moins 5 unités CH₂, au moins 10 unités CH₂, ou au moins 20 unités CH₂ sont remplacées par un -O- ; et/ou
vi) r ≥ 1, tel que dans lequel r ≥ 2, ou dans lequel r ≥ 3 ; et/ou
vii) R³ désigne un groupe méthyle (-CH₂-), un groupe éthyle (-CH₂-CH₂-) ou un groupe isopropyle ; et/ou
viii) le groupe R⁴ comprend une substitution par des hydroxyles et des amines ; et/ou
ix) R⁴ est un groupe alkyle linéaire ou ramifié éventuellement substitué contenant de 1 à 200 atomes de carbone ; et/ou
x) lorsque r ≥ 3 , R⁴ est une chaîne polyéther linéaire ou ramifiée éventuellement substituée contenant au moins 2 motifs répétitifs.

7. Kit selon une quelconque revendication précédente, dans lequel
i) le rapport molaire de la matière donneuse de Michael sur la matière accepteuse de Michael dans le produit de réaction est de 1:1 à 6:1 ; et/ou
ii) le synergiste a un poids moléculaire inférieur à 650 gmole⁻¹, tel qu'inférieur à 500 gmole⁻¹, inférieur à 400 gmole⁻¹ ou inférieur à 200 gmole⁻¹.

8. Composition d'encre, de revêtement, de vernis ou d'adhésif durcissable par rayonnement comprenant le produit de réaction a) selon une quelconque revendication précédente et un synergiste.

9. Composition d'encre, de revêtement, de vernis ou d'adhésif selon la revendication 8,
i) dans laquelle le synergiste est un quelconque donneur d'hydrogène, éventuellement dans laquelle le synergiste est choisi dans le groupe constitué par des amines, des éthers, des esters, des thiols, des alcools et des combinaisons correspondantes ; et/ou
ii) comprenant en outre un ou plusieurs (méth)acrylates monofonctionnels, difonctionnels ou multifonctionnels, ou une combinaison correspondante ; éventuellement les (méth)acrylates étant :
a) des monomères et/ou des oligomères ; et/ou
b) des acrylates et/ou méthacrylates de polyester ; et/ou
iii) comprenant ≤ 7 % en poids, plus préférablement ≤ 5 % en poids, le plus préférablement ≤ 2 % en poids d'un ou plusieurs photoinitiateurs supplémentaires ; éventuellement dans laquelle le ou les photoinitiateurs supplémentaires comprennent des photoinitiateurs (Norrish type I) ou sensibilisateurs de division ; et/ou
iv) comprenant jusqu'à 15 % en poids d'eau, comme jusqu'à 10 % en poids d'eau, jusqu'à 8 % en poids d'eau, jusqu'à 6 % en poids d'eau, jusqu'à 5 % en poids d'eau, jusqu'à 3 % en poids d'eau ou jusqu'à 2 % en poids d'eau ; et/ou
v) comprenant en outre un pigment, une matière colorante ou une combinaison correspondante ; et/ou
vi) dans laquelle le synergiste est le synergiste selon l'une quelconque des revendications 1 à 7 ; éventuellement dans laquelle le synergiste est présent dans la composition en quantité comprise entre 5 et 15 % en poids ; et/ou
vii) dans laquelle le produit de réaction pour une utilisation dans l'invention est présent dans la composition d'encre, de revêtement, de vernis ou d'adhésif en une quantité comprise entre 0,1 et 30 % en poids, telle qu'entre 0,1 et 10 % en poids, entre 5 et 25 % en poids, entre 10 et 20 % en poids, entre 10 et 18 % en poids, entre 12 et 18 % en poids, entre 5 et 15 % en poids ou entre 10 et 15 % en poids.

10. Composition d'encre, de revêtement, de vernis ou d'adhésif selon la revendication 9, dans laquelle le ou les (méth)acrylates monofonctionnels, difonctionnels ou multifonctionnels, tels que le ou les monomères de (méth)acrylate monofonctionnel, difonctionnel ou multifonctionnel, sont présents dans la composition d'encre, de revêtement, de vernis ou d'adhésif en une quantité comprise entre 30 % en poids et 90 % en poids, telle qu'entre 40 et 80 % en poids, entre 45 et 70 % en poids, entre 35 et 60 % en poids, entre 35 et 50 % en poids ou entre 40 et 60 % en poids.

11. Composition d'encre, de revêtement, de vernis ou d'adhésif selon la revendication 9 ou 10,
i) qui est auto-durcissante, telle que dans laquelle le produit de réaction pour une utilisation dans l'invention comprend en outre au moins un groupe (méth)acrylate polymérisable, lié de manière covalente ; éventuellement dans laquelle le produit de réaction pour une utilisation dans l'invention est incorporé dans la composition en une quantité comprise entre 30 % en poids et 90 % en poids, par exemple entre 50 % en poids et 90 % en poids, ou entre 60 % en poids et 90 % en poids ; et/ou
ii) qui est durcissable par une dose d'UV (somme des rayonnements UV-A, UV-B et UV-C) inférieure à 500mJ/cm² telle que mesurée par un Power Puck II d'EIT ; et/ou
iii) qui est une composition d'encre ou de revêtement ; et/ou
iv) qui est une encre flexographique UV, une encre pour jet d'encre UV, une encre pour gravure UV ou une encre offset UV.

12. Substrat imprimé comprenant la composition d'encre, de revêtement, de vernis ou d'adhésif durcie selon une quelconque revendication précédente ; éventuellement qui est un article d'emballage pour produits alimentaires.

13. Procédé pour la fourniture d'un film d'encre imprimé et durci, comprenant une application de la composition d'encre ou de revêtement selon l'une des revendications 9 à 11 sur un substrat et le durcissement de l'encre ou du revêtement ; éventuellement, dans lequel
i) le durcissement est effectué lors d'une exposition à un rayonnement dans la région de 200nm - 450nm ; et/ou
ii) le durcissement est effectué lors d'une exposition à de la lumière UV émise par des lasers, des diodes électroluminescentes UV (LED UV), des ampoules au mercure ou des ampoules au mercure dopé ; et/ou
iii) le film d'encre ou de revêtement durci résultant comprend des matières extractibles en une quantité inférieure à 10 ppm ; et/ou
iv) l'encre ou le revêtement est durci (e) par une dose d'UV de 500 mJ/cm² ou moins.

14. Procédé de préparation de la composition d'encre, de revêtement, de vernis ou d'adhésif selon l'une quelconque des revendications 9 à 11, comprenant les étapes de
a) mise en réaction de la matière donneuse d'addition de Michael selon l'une quelconque des revendications précédentes avec la matière accepteuse d'addition de Michael selon l'une quelconque des revendications précédentes pour donner le produit de réaction selon l'une quelconque des revendications précédentes ;
b) ajout de composants supplémentaires ; et ensuite
c) mélange des composants ensemble pour préparer la composition d'encre, de revêtement, de vernis ou d'adhésif.

15. Procédé selon la revendication 14, dans lequel les composants supplémentaires comprennent des monomères et/ou oligomères polymérisables ; et/ou
i) dans lequel l'étape a) est conduite avant l'étape b) ; ou
ii) dans lequel l'étape b) est conduite avant l'étape a) ou en même temps que l'étape a).

16. Utilisation de la composition selon une quelconque revendication précédente, dans un procédé d'impression ou de revêtement d'un substrat.
